(19) Europäisches Patentamt / European Patent Office / Office européen des brevets

(11) **EP 4 045 280 B1**

(12) **EUROPÄISCHE PATENTSCHRIFT**

(45) Veröffentlichungstag und Bekanntmachung des Hinweises auf die Patenterteilung:
**10.04.2024   Patentblatt 2024/15**

(21) Anmeldenummer: **20800001.8**

(22) Anmeldetag: **14.10.2020**

(51) Internationale Patentklassifikation (IPC):
**B29C 48/695** (2019.01)   **B29C 48/36** (2019.01)
**B29C 48/25** (2019.01)   **B29C 48/255** (2019.01)
**B29B 7/32** (2006.01)   B29C 48/92 (2019.01)
D01D 4/06 (2006.01)

(52) Gemeinsame Patentklassifikation (CPC):
**B29B 7/325; B29C 48/254; B29C 48/2556; B29C 48/256; B29C 48/362; B29C 48/695; B29C 48/92; D01D 4/06;** B29C 2948/92104; B29C 2948/92209; B29C 2948/926; B29C 2948/92704; B29C 2948/92971

(86) Internationale Anmeldenummer:
**PCT/DE2020/200085**

(87) Internationale Veröffentlichungsnummer:
**WO 2021/073695 (22.04.2021 Gazette 2021/16)**

(54) **SCHMELZELEITER FÜR EIN EXTRUSIONSWERKZEUG EINER EXTRUSIONSANLAGE, EXTRUSIONSWERKZEUG, EXTRUSIONSANLAGE UND VERFAHREN ZUM BETREIBEN EINER SOLCHEN EXTRUSIONSANLAGE**

MELT CONVEYOR FOR AN EXTRUSION TOOL OF AN EXTRUSION SYSTEM, EXTRUSION TOOL, EXTRUSION SYSTEM AND METHOD FOR OPERATING AN EXTRUSION SYSTEM OF THIS TYPE

CONVOYEUR DE MATIÈRE FONDUE POUR UN OUTIL D'EXTRUSION D'UN SYSTÈME D'EXTRUSION, OUTIL D'EXTRUSION, SYSTÈME D'EXTRUSION ET MÉTHODE DE FONCTIONNEMENT D'UN TEL SYSTÈME D'EXTRUSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.10.2019   DE 102019007153**
**10.07.2020   DE 102020118214**

(43) Veröffentlichungstag der Anmeldung:
**24.08.2022   Patentblatt 2022/34**

(73) Patentinhaber: **Reifenhäuser GmbH & Co. KG Maschinenfabrik**
**53844 Troisdorf (DE)**

(72) Erfinder:
• **MEYER, Helmut**
  **53842 Troisdorf (DE)**

• **KRUK, Volkmar**
  **40670 Meerbusch (DE)**
• **GEUS, Hans-Georg**
  **53859 Niederkassel (DE)**
• **ROTTSTEGGE, Anna Klara**
  **51063 Köln (DE)**
• **POHL, Tim**
  **50935 Köln (DE)**

(74) Vertreter: **Meissner Bolte Partnerschaft mbB**
**Widenmayerstraße 47**
**80538 München (DE)**

(56) Entgegenhaltungen:
DE-A1-102005 053 248   US-A- 4 017 240
US-A- 4 990 293   US-A- 5 783 129
US-A1- 2004 126 454   US-A1- 2005 191 378
US-B1- 6 579 555

**Beschreibung**

Die Erfindung betrifft einen Schmelzeleiter für ein Extrusionswerkzeug einer Extrusionsanlage, aufweisend einen Schmelzeleiterblock mit einem Multikanalsystem.

Die Erfindung betrifft ferner ein Extrusionswerkzeug zum zumindest mittelbaren Extrudieren bzw. Erzeugen von Extrusionsprodukten wie Folien, Vliesstoffen, Profilen, Rohren, Blasformteilen, Filamenten, Platten, Halbzeugen, Schläuchen, Kabeln, Compounds oder Schaumhalbzeugen. Ein Extrusionswerkzeug umfasst im Allgemeinen einen oder mehrere Schmelzeleiter, der bzw. die als Schmelzeverteiler und/oder als Schmelzemischer ausgebildet sein können. Das Extrusionswerkzeug ist dazu vorgesehen, eine Polymerschmelze, die von mindestens einer Bereitstellungseinheit vorgehalten und eingespeist wird, zu verteilen und/oder zu mischen und, je nach Ausbildung des Schmelzeleiters bzw. der Schmelzeleiter direkt in die Umgebung des Extrusionswerkzeuges zu leiten. In einem solchen Fall fungiert ein Austritt oder mehrere Austritte des jeweiligen Schmelzeleiters jeweils als Extrusionsdüse bzw. als Düsenaustritt. Alternativ ist stromab des Schmelzeleiters oder der Schmelzeleiter eine separate Extrusionsdüse angeordnet, die von einem oder mehreren Schmelzeleitern mit Polymerschmelze gespeist wird und die Polymerschmelze zumindest mittelbar aus dem Extrusionswerkzeug in die Umgebung leitet. Das Extrusionswerkzeug umfasst in diesem Fall also den bzw. die Schmelzeleiter sowie eine in Fließrichtung der designierten Polymerschmelze nachgelagerte Extrusionsdüse.

Der bzw. die Schmelzeleiter sowie die Extrusionsdüse können separate Bauteile sein. Denkbar ist aber auch, dass der bzw. die Schmelzeleiter und die Extrusionsdüse einteilig ausgebildet sind. Das Extrusionswerkzeug kann somit eine Baugruppe sein, bestehend aus den genannten sowie, je nach Ausgestaltung und Anforderungen der Extrusionsanlage, weiteren Bauteilen. Die Düsenaustritte des jeweiligen Schmelzeleiters bzw. die Extrusionsdüse sind somit in Fließrichtung der Polymerschmelze das für das Extrusionsprodukt formgebende Bauteil.

Unter einem Schmelzemischer ist ein Bauteil oder eine Baugruppe zu verstehen, der eine plastifizierte Polymerschmelze in jeweils einem oder mehreren Eintritten aufnimmt, wobei die Polymerschmelze anschließend über zusammengeführte bzw. sich kreuzende Schmelzekanäle zusammengeführt bzw. gemischt wird, bis die Polymerschmelze an einem oder mehreren Austritten, deren Anzahl geringer ist als die der Eintritte aus dem Schmelzemischer jeweils austritt. Mithin ist die Polymerschmelze zunächst in einer Vielzahl von in Schmelzekanälen geführten Schmelzefäden aufgeteilt, die durch das Multikanalsystem nach und nach zusammenführt werden. Mit anderen Worten weist der Schmelzemischer in einer der designierten Fließrichtung der Polymerschmelzen entgegengesetzten Richtung Schmelzekanäle auf, die über wenigstens eine Verzweigung und mehrere Generationen Weiterverzweigungen in aufgeteilte Schmelzekanäle aufgeteilt sind. Im Umkehrschluss werden Schmelzekanäle und somit auch die Schmelzefäden in der designierten Fließrichtung der Polymerschmelzen über mehrere Generationen Zusammenführungen vereint, sodass an einer Austrittsseite des Schmelzemischers weniger Austritte vorliegend als an einer Eintrittsseite des Schmelzemischers Eintritte.

Demgegenüber ist unter einem Schmelzeverteiler ein Bauteil oder eine Baugruppe zu verstehen, der eine plastifizierte Polymerschmelze in einen oder mehrere Eintritte aufnimmt, wobei die Polymerschmelze anschließend über aufgeteilte Schmelzekanäle verteilt wird, bis die Polymerschmelze an zwei oder mehreren Austritten, deren Anzahl größer ist als die der Eintritte aus dem Schmelzeverteiler, austritt. Mithin wird die Polymerschmelze durch das Multikanalsystem nach und nach in eine Vielzahl von in Schmelzekanälen geführten Schmelzefäden aufgeteilt. Mit anderen Worten weist der Schmelzeverteiler in einer designierten Fließrichtung der Polymerschmelze Schmelzekanäle auf, die über wenigstens eine Verzweigung und mehrere Generationen Weiterverzweigungen in aufgeteilte Schmelzekanäle aufgeteilt sind. Im Umkehrschluss werden Schmelzekanäle in einer der designierten Fließrichtung der Polymerschmelze entgegengesetzten Richtung über mehrere Generationen Zusammenführungen vereint, sodass an einer Austrittsseite des Schmelzemischers mehr Austritte ausgebildet sind als an einer Eintrittsseite des Schmelzemischers Eintritte.

Die Erfindung betrifft auch eine Extrusionsanlage, die insbesondere als Flachfolien-, Meltblown-, Spunbond-, Blasfolien-, Mono-Filament- oder Multi-Filament-Anlage ausgebildet ist und ein Extrusionswerkzeug umfasst, wobei das Extrusionswerkzeug zumindest einen Schmelzeleiter der vorgenannten Art aufweist. Die Extrusionsanlage ist im Wesentlichen dazu ausgebildet, ein extrudierfähiges Polymer aufzunehmen, dieses zu einer Polymerschmelze umzuwandeln oder als Polymerschmelze weiterzuverarbeiten, um anschließend durch eine geeignete Leitung der Polymerschmelze und nachgelagerte Verdüsung ein Extrusionsprodukt zu erzeugen.

Unter dem Begriff "extrudierfähiges Polymer" sind im Wesentlichen Materialien und deren Abmischungen und handelsüblichen Additiven zu verstehen, die extrudierfähig sind bzw. von einem Extruder verarbeitbar sind. Darunter sind insbesondere Thermoplaste gemeint, wie zum Beispiel Polyvinylchlorid (PVC), Polyethylene (PE), Polypropylen (PP), Polyamid (PA), Acrylnitril-Butadien-Styrol-Copolymerisat (ABS) Polycarbonat (PC) Styrolbutadien (SB), Polymethylmethacrylat (PMMA) Polyurethan (PUR) Polyethylenterephthalat (PET), Polyvenyalkohl (PVOH, PVAL) oder Polysulfon (PSU). Insbesondere kann es sich bei dem Polymer um ein Kunststoffpolymer handeln. Darüber hinaus sind auch Biowerkstoffe wie thermoplastische Stärke, Lösungen und weitere Materialien extrudierfähig und können für die hier vorliegende Erfindung anstelle von oder gemeinsam mit einem Kunststoffpolymer verwendet werden. Der Einfachheit halber wird im Rahmen der hier vorliegenden Patentanmeldung meist nur von "Polymer" oder "Kunststoffpolymer" gesprochen.

Das extrudierfähige Polymer kann der Extrusionsanlage beispielsweise als Granulat oder Pulver oder Flakes in im Wesentlichen fester Form bereitgestellt werden. Alternativ ist denkbar, dass wenigstens ein Teil des extrudierfähigen Polymers in im Wesentlichen flüssiger Form vorliegt. Die Bereitstellungseinheit, welche das extrudierfähige Polymer vorhält, kann beispielsweise ein Speicher sein, der das Polymer zur Speisung des Schmelzeleiters in der für den Schmelzeleiter geeigneten Form bereitstellt. Alternativ kann die Bereitstellungseinheit ein Extruder sein, der das extrudierfähige Polymer vorab in eine zur Speisung des Schmelzeleiters optimale Phase, beispielsweise von einer im Wesentlichen festen Form in eine im Wesentlichen flüssige Form, umwandelt. Bei Speisung des Schmelzeleiters ist die Polymerschmelze in der Regel im Wesentlichen vollständig aufgeschmolzen bzw. plastifiziert oder in Lösung und wird anschließend durch den Schmelzeleiter aufgeteilt und/oder zusammengeführt. Ferner ist möglich, dass ein Teil des Polymers in im Wesentlichen fester Form vorliegt oder vor der Speisung des Schmelzeleiters der im Wesentlichen flüssigen bzw. aufgeschmolzenen Polymerschmelze als Zusatzstoff bzw. Additiv zugegeben wird, wobei der feste Anteil eine andere Schmelztemperatur aufweisen kann als der aufgeschmolzene Anteil. Mit anderen Worten besteht das Polymer in diesem Fall aus mindestens zwei Komponenten, die dem Schmelzeleiter gemeinsam oder separat zugeführt werden.

Die Erfindung betrifft des Weiteren ein Verfahren zum Betreiben einer Extrusionsanlage.

Gattungsgemäße Schmelzeleiter und Extrusionswerkzeuge sind aus dem Stand der Technik der Extrusionstechnik bekannt und können in unterschiedlichen Ausführungsformen realisiert sein.

Es sind Extrusionswerkzeuge mit einem kreisförmigen oder kreisringspaltförmigen Austrittsquerschnitt an der Extrusionsdüse bekannt. Beispielsweise existieren Wendelverteiler zum Beschicken von Runddüsen mit aus einer Bereitstellungseinheit bereitgestellter Polymerschmelze, wobei die Wendelverteiler wendelförmige Nuten aufweisen, welche außen oder innen an einer Mantelfläche eines Dorns oder einer Pinole eingearbeitet sind. In diesem Zusammenhang existieren auch Pinolenverteiler oder Stegdornhalter, mittels welchen Polymerschmelze derart gleichmäßig verteilt werden kann, dass aus dem Extrusionswerkzeug ein Folienschlauch oder ein Profil austreten kann.

Des Weiteren sind Extrusionswerkzeuge mit einem schlitzförmigen Austrittsquerschnitt an der Extrusionsdüse bekannt. Ziel des Schmelzeleiters dieses Extrusionswerkzeugs ist es, eine von einer Bereitstellungseinheit bereitgestellte Polymerschmelze möglichst gleichmäßig bis zu den Düsenaustritten bzw. der Extrusionsdüse heran zu fördern, so dass an jeder Stelle des Düsenaustritts eine erforderliche Menge an Polymerschmelze über eine gewünschte Breite vorliegt. Stand der Technik sind insbesondere Schmelzeleitersysteme als T-Verteiler, Fischschwanzverteiler sowie Kleiderbügelverteiler.

Außerdem sind Extrusionswerkzeuge mit einer Vielzahl einzelner Austrittsquerschnitte bekannt. Ziel des Schmelzeleiters dieses Extrusionswerkzeugs ist es, eine von einer Bereitstellungseinheit bereitgestellte Polymerschmelze möglichst gleichmäßig den Düsenaustritten bzw. der Extrusionsdüse zuzuführen. Je nach Anwendungsbereich werden diese Schmelzeleiter als T-Verteiler, Kleiderbügelverteiler, Strangverteiler, Kanalverteiler, Stufenverteiler, Pinolenverteiler, Wendelverteiler oder Spaltverteiler ausgebildet.

Die meisten bisher bekannten Schmelzeleiter werden als mehrteilige Konstruktion bereitgestellt, wobei mindestens zwei Schmelzeleiterhälften miteinander verschraubt werden. Darüber hinaus existieren auch Schweißkonstruktionen. Dabei erweist es sich zunehmend problematischer, dass bei immer größer dimensionierten Extrusionswerkzeugen auch die Dimensionen eines Schmelzeleiters ansteigen, wodurch aufgrund des durch Scherspannungen der Polymerschmelze bedingten herrschenden Werkzeuginnendrucks die Belastungen auf die Bauteile, insbesondere auf die die Polymerschmelze führenden Bauteile, zunehmen. Dadurch ergeben sich insbesondere bei der Extrusion von Produkten mit einem kleinen Extrusionsquerschnitt Einschränkungen bei der konstruktiven Gestaltung und Dimensionierung insbesondere des Extrusionswerkzeugs.

Jedenfalls werden solche Schmelzeleiter dazu eingesetzt, eine von einer Bereitstellungseinheit im Wesentlichen kontinuierlich bereitgestellte Polymerschmelze von einer Eintrittsseite des Schmelzeleiters mit einer Eintrittsquerschnittsgesamtfläche bis zu einer Austrittsseite des Schmelzeleiters mit einer geometrisch und räumlich wesentlich veränderten Austrittsquerschnittsgesamtfläche als die Eintrittsquerschnittsgesamtfläche gleichmäßig zu verteilen oder zusammenzuführen.

Ein als Schmelzeverteiler ausgebildeter Schmelzeleiter hat also die Aufgabe, die Polymerschmelze stromab an der Austrittsseite des Schmelzeverteilers mit einer größeren Austrittsquerschnittsgesamtfläche bereitzustellen als dem Schmelzeleiter stromauf zugeführt wurde. Mit anderen Worten gesagt, die Polymerschmelze muss von einem ersten Gesamtdurchgangsquerschnitt gleichmäßig auf einen zweiten Gesamtdurchgangsquerschnitt mit einer größeren Breite verteilt werden, wobei der jeweilige austrittsseitig austretende Schmelzekanalquerschnitt nicht geradlinig verlaufen muss, wie etwa bei einer austrittsseitig angeordneten Breitschlitzdüse, sondern auch bogenförmig oder auch kreisrund, wie zum Beispiel hinsichtlich einer austrittseitig angeordneten Runddüse, verlaufen kann. Jedenfalls ist der Gesamtumfang des zweiten Gesamtdurchgangsquerschnitts, das heißt die Summe aller Umfänge der Schmelzekanäle an der Austrittsseite des Schmelzeleiters, wesentlich größer als der des ersten Gesamtdurchgangsquerschnitts an der Eintrittsseite des Schmelzeleiters.

Demgegenüber hat ein als Schmelzemischer ausgebildeter Schmelzeleiter die Aufgabe, die Polymerschmelze stromab an der Austrittsseite mit einer geringeren Austrittsquerschnittsgesamtfläche bereitzustellen als dem Schmelzeleiter stromauf zugeführt wurde. Mit anderen Worten gesagt, die Polymerschmelze muss von einem ersten Gesamtdurchgangsquerschnitt gleichmäßig auf einen Gesamtdurchgangsquerschnitt mit einer wesentlich geringeren Gesamtquerschnittsfläche zusammengeführt bzw. gemischt werden, wobei der jeweilige austrittsseitig austretende Schmelzekanalquerschnitt auch in diesem Fall nicht geradlinig verlaufen muss.

Die Polymerschmelze wird in der Regel eintrittsseitig des Schmelzeleiters von mindestens einer Bereitstellungseinheit, insbesondere von mindestens einem Extruder oder dergleichen, kontinuierlich bereitgestellt und dem Schmelzeleiter zugeführt. Austrittsseitig des Schmelzeleiters wird die Polymerschmelze zumindest mittelbar verdüst, um kontinuierlich ein Extrusionsprodukt zu erzeugen.

Beispielsweise offenbart die DE 21 14 465 A eine Vorrichtung zur gleichmäßigen Verteilung thermoplastischer Kunststoffe von mindestens einer Extruderkopfdüse zu mehreren Blas- oder Spitzköpfen hin, wobei die Vorrichtung einen massiven Verteilerblock aufweist, in welchem eine Vielzahl an Bohrungen und zusätzlichen Bolzen eingebracht sind, um Schmelzeleitungen sowie Umlenkstellen innerhalb des massiven Verteilerblocks zu realisieren.

In der EP 0 197 181 B1 ist ein Verfahren zum Herstellen eines zusammengesetzten Spritzgießverteilers beschrieben, wobei der Spritzgießverteiler verschiedene Abzweigungen aufweist, um Schmelze von einer gemeinsamen Einlassöffnung zu einer Mehrzahl von Auslassöffnungen zu übertragen. Der Spritzgießverteiler ist aus zwei aus Werkzeugstahl bestehenden Platten mit sich gegenüberliegenden Oberflächen zusammengeschraubt, wobei die Oberflächen übereinstimmende Nuten aufweisen, um Schmelzekanäle im Inneren des Schmelzeverteilers auszugestalten.

Aus der DE 197 03 492 A1 ist ein Schmelzeverteiler für in einem Extruder plastifizierte Kunststoffschmelze bekannt, welche nach dem Auspressen aus einer Extrusionsdüse in mehrere, einzelne Stränge für vereinzelte Bearbeitungswerkzeuge aufgeteilt wird. Der Schmelzeverteiler weist einen Zuführkanal und einen daran anschließenden Stutzen mit Verteilerkanälen auf, wobei die Zahl der Verteilerkanäle der Anzahl der Bearbeitungswerkzeuge entspricht, und wobei die Mittelpunkte der Mündungen der am Stutzen ausgebildeten Verteilerkanäle auf einem Kreis liegen, um an allen Bearbeitungswerkzeugen Kunststoffschmelze mit möglichst gleichen Temperaturprofilen bereitstellen zu können.

Die Druckschriften US 4 990 293 A, US 6 579 555 B1, US 2004/126454 A1, US 4 017 240 A, US 5 783 129 A offenbaren weitere Schmelzeleiter.

Wann immer im Rahmen der hier vorliegenden Patentanmeldung von einem Schmelzeleiter die Rede ist, so sei vor allem an einen Schmelzeleiter einer Extrusionsanlage gedacht, der entweder selbst Düsenaustritte zum Erzeugen von Extrusionsprodukten aufweist oder zum Speisen einer formgebenden Extrusionsdüse ausgebildet ist. Es sei also an einen solchen Schmelzeleiter gedacht, der Teil eines Extrusionswerkzeugs einer Extrusionsanlage ist. In der Formulierung der Patentansprüche soll die Formulierung "für ein Extrusionswerkzeug einer Extrusionsanlage" nicht implizieren, dass das Extrusionswerkzeug oder die Anlage zwingender Teil des jeweiligen Anspruchs sein sollen, sondern vielmehr nur die Eignung fordern. Des Weiteren soll die Formulierung "für eine Extrusionsanlage" nicht implizieren, dass die Anlage zwingender Teil des jeweiligen Anspruchs sein soll.

Der Erfindung liegt die Aufgabe zugrunde, Schmelzeleiter weiterzuentwickeln sowie deren Nachteile zu überwinden. Insbesondere liegt der Erfindung die Aufgabe zugrunde, Extrusionswerkzeuge, Extrusionsanlagen sowie diesbezügliche Verfahren, insbesondere zum Betreiben solcher Extrusionsanlagen, weiterzuentwickeln.

Erfindungsgemäß wird diese Aufgabe durch einen Schmelzeleiter mit den Merkmalen der unabhängigen Patentansprüche 1 und 2 gelöst. Vorteilhafte optionale Weiterbildungen des Schmelzeleiters ergeben sich aus den Unteransprüchen 3 bis 12.

Weiterhin wird die Aufgabe der Erfindung durch ein Extrusionswerkzeug gemäß Patentanspruch 13 gelöst. Vorteilhafte Weiterbildungen des Extrusionswerkzeugs ergeben sich aus Unteranspruch 14. Ferner wird die Aufgabe der Erfindung durch eine Extrusionsanlage gemäß Patentanspruch 15 gelöst.

Außerdem wird die Aufgabe der Erfindung durch ein Verfahren zum Betreiben einer Anlage gemäß Patentanspruch 16 gelöst.

Nach einem ersten Aspekt der hier vorliegenden Erfindung löst diese Aufgabe ein Schmelzeleiter, insbesondere Schmelzeverteiler oder Schmelzemischer, für ein Extrusionswerkzeug einer Extrusionsanlage,

aufweisend einen Schmelzeleiterblock mit einem Multikanalsystem,

wobei das Multikanalsystem sich dreidimensional erstreckend innerhalb des Schmelzeleiterblocks angeordnet ist sowie mindestens einen Eintritt und mindestens einen Austritt für Polymerschmelze aufweist,

wobei zwischen einem Eintritt und einem mit dem Eintritt fluidisch verbundenen Austritt mehrere hintereinander angeordnete Verzweigungen und mehrere Generationen Weiterverzweigungen über mehrere Generationen aufgeteilter Schmelzekanäle ausgebildet sind,

wobei m Schmelzekanäle a-ter Generation mit x-ten lokalen Querschnitten und n Schmelzekanäle b-ter Generation mit y-ten lokalen Querschnitten vorhanden sind,

wobei n>m, wenn b>a,

wobei die y-ten lokalen Querschnitte der Schmelzekanäle b-ter Generation kleiner sind als die x-ten lokalen Querschnitte der Schmelzekanäle a-ter Generation,

und wobei

in designierter Fließrichtung der Polymerschmelze die Schmelzekanäle a-ter Generation dem Eintritt und die Schmelzekanäle b-ter Generation dem Austritt zu orientiert sind, sodass der Schmelzeleiter für einen designierten Schmelzestrom der Polymerschmelze als Schmelzeverteiler dient,

oder

in designierter Fließrichtung der Polymerschmelze die Schmelzekanäle a-ter Generation dem Austritt und die Schmelzekanäle b-ter Generation dem Eintritt zu orientiert sind, sodass der Schmelzeleiter für einen designierten Schmelzestrom der Polymerschmelze als Schmelzemischer dient.

Zunächst sei ausdrücklich darauf hingewiesen, dass im Rahmen der hier vorliegenden Patentanmeldung unbestimmte Artikel und Zahlenangaben wie "ein", "zwei" usw. im Regelfall als "mindestens"-Angaben zu verstehen sein sollen, also als "mindestens ein...", "mindestens zwei..." usw., sofern sich nicht aus dem jeweiligen Kontext ausdrücklich ergibt oder es für den Fachmann offensichtlich oder technisch zwingend ist, dass dort nur "genau ein...", "genau zwei..." usw. gemeint sein können.

Weiterhin sind alle Zahlenangaben sowie Angaben zu Verfahrensparametern und/oder Vorrichtungsparametern im technischen Sinne zu verstehen, d.h. als mit den üblichen Toleranzen versehen zu verstehen.

Auch aus der expliziten Angabe der Einschränkung "wenigstens" oder "mindestens" o.ä. darf nicht geschlossen werden, dass bei der einfachen Verwendung von "ein", also ohne die Angabe von "wenigstens" o.ä., ein "genau ein" gemeint ist.

Begrifflich sei hierzu Folgendes erläutert: Unter einem "Schmelzeleiter" ist ein Bauteil oder eine Baugruppe, umfassend einen Schmelzeleiterblock mit dem Multikanalsystem, zu verstehen, welches dazu ausgebildet ist, eine dem Schmelzeleiter zugeführte Polymerschmelze je nach Ausbildung des Multikanalsystems zu verteilen und/oder zusammenzuführen. Der Schmelzeleiter kann ausschließlich als Schmelzeverteiler ausgebildet sein, der die designierte Polymerschmelze von wenigstens einem Eintritt auf eine Vielzahl Austritte verteilt. Ferner kann der Schmelzeleiter ausschließlich als Schmelzemischer ausgebildet sein, der die designierte Polymerschmelze von zwei oder mehr Eintritten auf eine der Anzahl der Eintritte gegenüber geringere Gesamtzahl Austritte zusammenführt. Außerdem kann der Schmelzeleiter in beliebiger Reihenfolge teilweise als Schmelzeverteiler sowie teilweise als Schmelzemischer ausgebildet sein, sodass die designierte Polymerschmelze beliebig verteilt und zusammengeführt werden kann, wobei die Anzahl der Ein- und Austritte anwendungsgemäß beliebig wählbar ist. Der Schmelzeleiter ist vorzugsweise wenigstens teilweise mittels eines additiven Herstellungsverfahrens hergestellt.

Als "Schmelzeleiterblock" wird dasjenige Bauteil des Schmelzeleiters bezeichnet, welches das Multikanalsystem ganz oder teilweise aufnimmt. Der Schmelzeleiterblock ist vorzugsweise mittels eines additiven Herstellungsverfahrens ausgebildet. Der Schmelzeleiterblock kann ein Grundkörper sein, welcher massiv oder mit Stützstrukturen, beispielsweise in Skelettbauweise ausgebildet ist. Die Stützstrukturen können zur Gewährleistung einer statischen Stabilität des Schmelzeleiterblocks ausgeformt sein, wobei die Stützstruktur ferner zur Stützung des Multikanalsystems ausgebildet sein kann. Ist der Schmelzeleiter als Schmelzeverteiler ausgebildet, wird nachfolgend der Begriff "Schmelzeverteilerblock" als Synonym für den Schmelzeleiterblock verwendet. Gleichermaßen wird, wenn der Schmelzeleiter als Schmelzemischer ausgebildet ist, der Begriff "Schmelzemischerblock" als Synonym für den Schmelzeleiterblock verwendet.

Als "Schmelzekanal" wird ein Polymerschmelze bzw. ein Schmelzestrom der Polymerschmelze führender, im Wesentlichen länglich ausgebildeter Abschnitt des Multikanalsystems bezeichnet, der sich ausschließlich longitudinal bzw. gerade erstrecken oder Krümmungen, beispielsweise in Form von Kurven aufweisen kann, um eine dreidimensionale Ausbildung des Multikanalsystems zu realisieren. Eine Mehrzahl solcher Schmelzekanäle sind über Verzweigungen und Weiterverzweigungen fluidisch miteinander verbunden und bilden so das Multikanalsystem aus, wobei zwei oder mehr Schmelzekanäle in Reihe und/oder parallel angeordnet sein können, um die Polymerschmelze entsprechend den Anforderungen an den Schmelzeleiter zu verteilen und/oder zu mischen. Die Schmelzekanäle erstrecken sich vom jeweiligen Eintritt bis zu dem mit dem Eintritt fluidisch verbundenen jeweiligen Austritt.

Der jeweilige Schmelzekanal kann beliebig ausgeformt sein. So ist denkbar, dass der Schmelzekanal einen im Wesentlichen unveränderten Schmelzekanalquerschnitt, das heißt einen beliebig ausgebildeten lokalen Querschnitt aufweist, der sich über die gesamte Länge des jeweiligen Schmelzekanals zwischen den Verzweigungen erstreckt. Der lokale Querschnitt kann eine im Wesentlichen kreisrunde Querschnittsform, eine im Wesentlichen ovale oder elliptische Querschnittsform und/oder eine im Wesentlichen rechteckige oder quadratische Querschnittsform aufweisen. Auch eine von den bekannten geometrischen Standardformen abweichende Querschnittsform kann für den Schmelzekanal gewählt werden, insbesondere bei Übergängen zwischen den bekannten Standardformen. Wann immer im Rahmen dieser Erfindung von einer bestimmten Querschnittsform eines Schmelzekanals gesprochen wird, so ist damit gemeint, dass der jeweilige Schmelzekanal die besagte Querschnittsform bzw. den lokalen Querschnitt über einen Großteil von dessen axialer Erstreckung im Wesentlichen konstant aufweist, vorzugsweise von größer oder gleich 50 % der Länge des jeweiligen Schmelzekanals, bevorzugt von mindestens 2/3 der Länge des jeweiligen Schmelzekanals, ferner bevorzugt von mindestens 3/4 der Länge des jeweiligen Schmelzekanals.

In Reihe hintereinander angeordnete und über Verzweigungen bzw. Weiterverzweigungen miteinander fluidisch verbundene Schmelzekanäle werden im Rahmen der hier vorliegenden Patentanmeldung als in "Generationen" eingeteilt beschrieben, die je nach Ausbildung des Schmelzeleiters und in Abhängigkeit der Fließrichtung der designierten Polymerschmelze in aufsteigender oder absteigender alphabetischer Reihenfolge bezeichnet werden. Gleiches gilt auch für die Verzweigungen und Weiterverzweigungen, die ebenfalls in Generation mit aufsteigender bzw. absteigender Reihenfolge bezeichnet werden.

Die "designierte Fließrichtung" der Polymerschmelze bezieht sich auf die Anordnung des Schmelzeleiters in der Extrusionsanlage sowie die Ausbildung des Multikanalsystems, wobei die Fließrichtung stets von einem Eintritt bis zu einem mit dem Eintritt fluidisch verbundenen Austritt verläuft, unabhängig davon, ob Polymerschmelze im Multikanalsystem verteilt und/oder vermischt wird. Insbesondere verläuft die designierte Fließrichtung der Polymerschmelze von einer Eintrittsseite bis hin zu einer Austrittsseite des Schmelzeleiters.

Als "Multikanalsystem" wird eine vorzugsweise zumindest teilweise mittels eines additiven Herstellungsverfahrens hergestellte Kanalstruktur innerhalb des Schmelzeleiters bezeichnet, die im Schmelzeleiterblock integriert ist und sich dreidimensional innerhalb des Schmelzeleiterblocks erstreckt. Das Multikanalsystem besteht aus einer Vielzahl miteinander fluidisch verbundener Schmelzekanäle, die sich von mindestens einem Eintritt hin zu mindestens einem fluidisch mit dem Eintritt verbundenen Austritt erstrecken und die je nach Ausbildung des Schmelzeleiters über Verzweigungen und Weiterverzweigungen bzw. über Zusammenführungen fluidisch miteinander verbunden sind. Die Schmelzekanäle des Multikanalsystems sind in Reihe fluidisch hintereinander verbunden oder parallel zueinander geschaltet angeordnet. Bei einer Reihenschaltung ist mindestens ein Schmelzekanal a-ter Generation über eine Verzweigung bzw. Weiterverzweigung mit mindestens einem Schmelzekanal b-ter Generation fluidisch verbunden, wobei der Schmelzekanal a-ter Generation je nach Ausbildung des Schmelzeleiters als Verteiler oder Mischer in der designierten Fließrichtung der Polymerschmelze stromab oder stromauf des jeweiligen Schmelzekanals b-ter Generation liegt. Mit anderen Worten ist der Schmelzekanal a-ter Generation über eine Verzweigung oder eine Zusammenführung mit dem Schmelzekanal b-ter Generation fluidisch verbunden. Demgegenüber sind mehrere, bevorzugt alle, Schmelzekanäle einer jeweiligen Generation parallel angeordnet.

Unter einem "Eintritt" des Multikanalsystems ist der Eingang des Multikanalsystems in den Schmelzeleiterblock zu verstehen, in den die von einer Bereitstellungseinheit bereitgestellte Polymerschmelze in den Schmelzeleiterblock gespeist wird. Anders gesagt ist der jeweilige Eintritt eintrittsseitig bzw. an einer Eintrittsseite am Schmelzeleiterblock angeordnet.

Demgegenüber ist unter einem "Austritt" des Multikanalsystems der Ausgang oder Ausfluss des Multikanalsystems aus dem Schmelzeleiterblock zu verstehen, aus dem die durch den Schmelzeleiterblock geführte bzw. verteilte und/oder zusammengeführte Polymerschmelze aus dem Schmelzeleiterblock austritt. Der jeweilige Austritt kann derart ausgebildet sein, dass er als Düse fungiert, wobei der jeweilige Austritt somit ein Düsenaustritt ist. Alternativ oder ergänzend kann der jeweilige Austritt auch derart ausgebildet sein, dass er eine stromab des Schmelzeleiters angeschlossene Extrusionsdüse speist, die die Polymerschmelze entsprechend verdüst, um ein Extrusionsprodukt zumindest mittelbar herzustellen. Mithin ist der jeweilige Austritt austrittsseitig bzw. an einer Austrittsseite am Schmelzeleiterblock angeordnet.

Der Schmelzeleiterblock weist demnach eine Eintrittsseite und eine Austrittseite auf, wobei die Eintrittsseite mit dem jeweiligen Eintritt in Bezug auf die designierte Fließrichtung einer Polymerschmelze stromab der Bereitstellungseinheit angeordnet ist, und wobei die Austrittsseite mit dem jeweiligen Austritt stromauf einer Extrusionsdüse bzw. stromab der Eintrittsseite mit dem jeweiligen Eintritt angeordnet ist.

Wenn der vorliegende Schmelzeleiter als Schmelzeverteiler ausgebildet ist, weist der Schmelzeleiter mehr Austritte auf als Eintritte, da der jeweilige Eintritt vorzugsweise über mindestens zwei Generationen aufgeteilter Schmelzekanäle mit einer Vielzahl von Austritten fluidisch verbunden ist. Um einen Schmelzestromabriss der designierten Polymerschmelze zu verhindern, das Multikanalsystem vor ungewollten Ablagerungen zu schützen sowie die Schubspannungen im Multikanalsystem im Wesentlichen konstant zu halten, vergrößert sich ein Gesamtquerschnitt aller lokalen Querschnitte der Schmelzekanäle einer jeweiligen Generation mit steigender Generation. Zwar verkleinert sich der jeweilige lokale Querschnitt der n Schmelzekanäle b-ter Generation im Vergleich zum jeweiligen lokalen Querschnitt der m Schmelzekanäle a-ter Generation, jedoch nimmt die Anzahl der Schmelzekanäle von Generation zu Generation, das heißt mit steigender Reihenfolge des Alphabets, zu. Anders gesagt ist der Schmelzekanal a-ter Generation dem Eintritt zu orientiert, wobei der Schmelzekanal b-ter Generation dem Austritt zu orientiert ist und in der designierten Fließrichtung der Polymerschmelze auf den Schmelzekanal a-ter Generation folgt. Dementsprechend folgt ein Schmelzekanal c-ter Generation in der designierten Fließrichtung der Polymerschmelze auf den Schmelzekanal b-ter Generation, und so weiter, wobei der Schmelzekanal c-ter Generation in Bezug auf den Schmelzekanal a-ter und b-ter Generation ebenfalls dem Austritt zu orientiert ist. Der Schmelzekanal b-ter Generation ist demgegenüber in Bezug auf den Schmelzekanal c-ter Generation dem Eintritt zu orientiert. Ein Schmelzekanal einer a-ten Generation teilt sich in mindestens zwei Schmelzekanäle einer b-ten Generation auf, wobei sich wiederum ein Schmelzekanal der b-ten Generation in mindestens zwei Schmelzekanäle einer c-ten Generation aufteilt, und so weiter. Mithin steigt die alphabetische Reihe der Generationen der Schmelzekanäle sowie die Anzahl der Schmelzekanäle entlang der designierten Fließrichtung der Polymerschmelze von Generation zu Generation.

Ist der vorliegende Schmelzeleiter als Schmelzemischer ausgebildet, weist der Schmelzeleiter mehr Eintritte auf als Austritte, da mindestens zwei der Eintritte über vorzugsweise mindestens zwei Generationen zusammengeführter Schmelzekanäle mit einer geringeren Anzahl von Austritten fluidisch verbunden ist. Der Gesamtquerschnitt aller lokalen Querschnitte der Schmelzekanäle einer jeweiligen Generation nimmt mit sinkender Generation ab, um einen Schmelzestromabriss der designierten Polymerschmelze zu verhindern sowie die Wandschubspannungen im Multikanalsystem im Wesentlichen konstant zu halten. Zwar vergrößert sich der jeweilige lokale Querschnitt der n Schmelzekanäle b-ter Generation im Vergleich zum jeweiligen lokalen Querschnitt der m Schmelzekanäle a-ter Generation, jedoch nimmt die Anzahl der Schmelzekanäle von Generation zu Generation, das heißt mit sinkender Reihenfolge des Alphabets, ab. Anders gesagt ist am Beispiel von drei Generationen Schmelzekanäle im Multikanalsystem der jeweilige Schmelzekanal c-ter Generation dem Eintritt zu orientiert, wobei der Schmelzekanal b-ter Generation dem Austritt zu orientiert ist und in der designierten Fließrichtung der Polymerschmelze auf den Schmelzekanal c-ter Generation folgt. Dementsprechend folgt ein Schmelzekanal a-ter Generation in der designierten Fließrichtung der Polymerschmelze auf den Schmelzekanal b-ter Generation, und ist in Bezug auf den Schmelzekanal c-ter und b-ter Generation ebenfalls dem Austritt zu orientiert. Der Schmelzekanal b-ter Generation ist demgegenüber in Bezug auf den Schmelzekanal c-ter Generation dem Eintritt zu orientiert. Das heißt, dass mindestens zwei Schmelzekanäle einer c-ten Generation zu einer dazu geringeren Anzahl Schmelzekanäle einer b-ten Generation zusammengeführt werden, wobei wiederum mindestens zwei Schmelzekanäle der b-ten Generation zu einer dazu geringeren Anzahl Schmelzekanäle einer a-ten Generation zusammengeführt werden. Mithin steigt die alphabetische Reihe der Generationen der Schmelzekanäle sowie die Anzahl der Schmelzekanäle entgegen der designierten Fließrichtung der Polymerschmelze von Generation zu Generation an.

Darüber hinaus ist denkbar, den Schmelzeleiter teilweise als Schmelzeleiter und teilweise als Schmelzemischer auszubilden. Darunter ist anhand eines Beispiels zu verstehen, dass sich zunächst je ein Schmelzekanal einer a-ten Generation in mindestens zwei Schmelzekanäle einer b-ten Generation aufteilt, wobei sich wiederum ein Schmelzekanal der b-ten Generation in mindestens zwei Schmelzekanäle einer c-ten Generation aufteilt, sodass zunächst eine Verteilung der Polymerschmelze von Generation zu Generation erfolgt. Mindestens zwei Schmelzekanäle der c-ten Generation können darauffolgend wieder zu einer dazu geringeren Anzahl Schmelzekanäle einer b'-ten Generation zusammengeführt werden, wobei mindestens zwei Schmelzekanäle der b'-ten Generation anschließend in Schmelzekanäle a'-ten Generation zusammengeführt werden können, und so weiter, sodass eine Zusammenführung der Polymerschmelze von Generation zu Generation erfolgt. Auch eine umgekehrte Anordnung, bei der zunächst Schmelzekanäle zusammengeführt und anschließend aufgeteilt werden sowie eine beliebige Kombination von Verteilungen und Zusammenführungen ist je nach Anforderungen an die Polymerschmelze und das daraus hergestellte Extrusionsprodukt denkbar.

Der Wortlaut "zu orientiert" ist im Rahmen der Erfindung als eine Anordnung eines Schmelzekanals und/oder einer Verzweigung oder Weiterverzweigung einer ersten Generation relativ zu einer weiteren Generation zu verstehen. Weist ein Multikanalsystem beispielsweise eine a-te, b-te und c-te Generation Schmelzekanäle auf, wobei die a-te Generation direkt am Eintritt des Schmelzeleiterblocks, die c-te Generation direkt am Austritt des Schmelzeleiterblocks und die b-te Generation in designierter Fließrichtung der Polymerschmelze zwischen der a-ten und c-ten Generation angeordnet sind, so ist der Schmelzekanal der a-ten Generation relativ zu den Schmelzekanälen b-ten und c-ten Generation dem Eintritt zu orientiert. Der Schmelzekanal der c-ten Generation ist demgegenüber relativ zu den Schmelzekanälen der a-ten und b-ten Generation dem Austritt zu orientiert. Der Schmelzekanal der b-ten Generation ist folglich einerseits relativ zum Schmelzekanal der a-ten Generation dem Austritt zu orientiert und andererseits relativ zum Schmelzekanal der c-ten Generation dem Eintritt zu orientiert.

Unter dem Begriff "sich dreidimensional erstreckend" ist im Folgenden zu verstehen, dass das Multikanalsystem in bis zu sechs verschiedenen Freiheitsgraden innerhalb des Schmelzeleiterblocks ausgebildet bzw. ausgeformt sein kann. Mit anderen Worten kann ein Schmelzekanal des Multikanalsystems abschnittsweise vertikal nach oben und/oder unten und/oder horizontal nach links und/oder nach rechts und/oder vor und/oder zurück verlaufen. Dabei werden, unabhängig davon, wie das Multikanalsystem innerhalb des Schmelzeleiterblocks ausgebildet ist, stets mindestens drei der sechs Freiheitsgrade genutzt. Wird beispielsweise ein vertikal nach unten verlaufender Schmelzekanal a-ter Generation über eine im Wesentlichen 90°-Verzweigung in einer gemeinsamen Ebene in zwei Schmelzekanäle b-ter Generation aufgeteilt, verlaufen die aufgeteilten Schmelzekanäle ausgehend vom Schmelzekanal a-ter Generation beispielsweise in horizontaler Richtung nach links bzw. rechts. Mithin werden bei einer solchen einfachen Aufteilung eines Schmelzekanals bereits drei Freiheitsgrade genutzt. Wird einer der Schmelzekanäle jedoch derart verzweigt, wenigstens einer der aufgeteilten Schmelzekanäle teilweise mit einem Winkel zu der genannten Ebene bzw. verläuft, wird ein vierter und/oder fünfter Freiheitsgrad genutzt. Darüber hinaus kann einer der Schmelzekanäle b-ter Generation auch teilweise entgegen den vertikal nach unten geführten Schmelzekanal a-ter Generation, das heißt eine entgegengesetzte Fließrichtung der Polymerschmelze aufweisend, geführt werden, sodass auch der sechste Freiheitgrad genutzt wird. Ferner ist eine gekrümmte Ausbildung des Multikanalsystems bzw. der Schmelzekanäle und/oder der Weiterverzweigungen im Raum denkbar, sodass gleichzeitig mehrere Freiheitsgrade in Anspruch genommen werden können.

Eine "Verzweigung" bzw. "Weiterverzweigung" ist in der vorliegenden Erfindung ein Knotenpunkt, an dem unabhängig von einer Fließrichtung einer Polymerschmelze ein Schmelzekanal in mindestens zwei Schmelzekanäle aufgeteilt wird. Dabei ist eine Weiterverzweigung eine Verzweigung ab der zweiten Generation. Bei einem Schmelzeverteiler wird über eine Verzweigung ein Schmelzekanal a-ter Generation in zwei oder mehr Schmelzekanäle b-ter Generation aufgeteilt. Ein Schmelzekanal b-ter Generation wird nachfolgend über eine Weiterverzweigung in zwei oder mehr Schmelzekanäle c-ter Generation aufgeteilt. Bei einem Schmelzemischer fungieren demgegenüber die Verzweigung bzw. die Weiterverzweigungen jeweils als Zusammenführung, wobei zwei oder mehr Schmelzekanäle b-ter Generation über eine Zusammenführung in einen Schmelzekanal a-ter Generation oder in eine geringere Anzahl Schmelzekanäle a-ter Generation zusammengeführt bzw. zusammengefasst werden.

Mittels eines als Schmelzeverteiler ausgebildeten Schmelzeleiters gelingt es, eine in den Schmelzeverteiler bzw. in das Multikanalsystem des Schmelzeverteilerblocks kontinuierlich eingespeiste Polymerschmelze bis zu einer Vielzahl Austritten derart zu verteilen, dass die Polymerschmelze an diesen Austritten bzw. Austrittskanälen im Wesentlichen mit gleichen Schubspannungen bereitgestellt werden kann. Das Multikanalsystem ist demnach vorzugsweise derart ausgebildet, dass die Polymerschmelze stets die gleiche, das heißt eine symmetrische Schmelzehistorie aufweist. Hierdurch gelingt es ferner, dass die Polymerschmelze an der Austrittsseite des Schmelzeverteilerblocks flächig besonders gleichmäßig verteilt und damit auch besonders gleichmäßig verteilt an einem sich diesen Austrittskanälen weiter stromab anschließenden Extrusionsraum, das heißt insbesondere einem Sammelraum und/oder einem Eingang der Extrusionsdüse bereitgestellt werden kann.

Der Begriff "gleiche Schubspannungen" beschreibt im Sinne der Erfindung im Wesentlichen Wandschubspannungen zwischen der Wandung des Multikanalsystems und der im jeweiligen Schmelzekanal geführten Polymerschmelze, insbesondere in allen Verzweigungsstufen bzw. in allen Generation der Schmelzkanäle, wobei die Schubspannungen im Wesentlichen gleich bzw. konstant oder annähernd gleich bzw. konstant sind, wobei hierbei die Schubspannungen weniger als 30 %, vorzugsweise weniger als 20 % und besonders bevorzugt weniger als 10 %, voneinander abweichen.

Mittels eines als Schmelzemischer ausgebildeten Schmelzeleiters gelingt es, eine in den Schmelzemischer bzw. in das Multikanalsystem des Schmelzemischerblocks kontinuierlich eingespeiste Polymerschmelze an einer geringeren Anzahl Austritte derart zusammenzuführen, dass die Polymerschmelze an diesem Austritt bzw. diesen Austritten im Wesentlichen mit gleichen Schubspannungen bereitgestellt werden kann. Auch in diesem Fall ist das Multikanalsystem vorzugsweise derart ausgebildet, dass die Polymerschmelze am Austritt stets die gleiche, das heißt eine symmetrische Historie aufweist. Hierdurch gelingt es ferner, dass die Polymerschmelze an der Austrittsseite des Schmelzeverteilerblocks besonders gleichmäßig zusammengeführt und damit auch gezielt an einem sich dem Austrittskanal oder den Austrittskanälen weiter stromab anschließenden Extrusionsraum, das heißt insbesondere einem Sammelraum und/oder einem Eingang der Extrusionsdüse bereitgestellt werden kann.

Dies wird im Wesentlichen realisiert durch sich von Generation zu Generation ändernde Querschnittsgrößen der Schmelzekanäle sowie den zwischen den Schmelzekanalgenerationen angeordneten Verzweigungen und Weiterverzweigungen bzw. Zusammenführungen.

Im Fall eines Schmelzeverteilers reduziert sich die Querschnittsfläche jedes Schmelzekanals einer jeweiligen Generation mit steigender Generation sowie in designierter Fließrichtung der Polymerschmelze, wobei die Summe an Schmelzekanälen pro Generation mit steigender Generation zunimmt, sodass von Generation zu Generation in designierter Fließrichtung eine Aufteilung von Schmelzeströmen erfolgt.

Bei einem Schmelzemischer steigt die Querschnittsfläche jedes Schmelzekanals einer jeweiligen Generation mit sinkender Generation sowie in designierter Fließrichtung der Polymerschmelze an, wobei die Summe an Schmelzekanälen pro Generation mit sinkender Generation abnimmt, sodass von Generation zu Generation in designierter Fließrichtung eine Zusammenführung von Schmelzeströmen erfolgt.

Es hat sich überraschenderweise ergeben, dass ein bestimmter geometrischer Zusammenhang zwischen einem ersten Schmelzekanal und einem in designierter Fließrichtung der Polymerschmelze nachgelagerten zweiten Schmelzekanal zu im Wesentlichen konstanten Schubspannungen innerhalb des Multikanalsystems führt. So sind erfindungsgemäss ein Umfang und eine Querschnittsfläche von wenigstens zwei aus einem gemeinsamen Schmelzekanal entspringenden und aufgeteilten Schmelzekanälen in Abhängigkeit von

$$\frac{U_1{}^x}{A_1{}^{x+1}} = \frac{1}{n_K} * \frac{U_2{}^x}{A_2{}^{x+1}}$$

dimensioniert, wobei $U_1$ der erste Umfang und $A_1$ die erste Querschnittsfläche des gemeinsamen Schmelzekanals ist, wobei $U_2$ der zweite Umfang und $A_2$ die zweite Querschnittsfläche eines der aufgeteilten Schmelzekanäle ist, wobei $n_K$ die Gesamtanzahl der aufgeteilten Schmelzekanäle ist, und wobei x größer oder gleich -0,5 ist, vorzugsweise mindestens ein Wert von 0,5 ist, bevorzugt mindestens ein Wert von 0,75 ist, und wobei x höchstens ein Wert von 4 ist, bevorzugt höchstens ein Wert von 2,5 ist, ferner bevorzugt höchstens ein Wert von 1,5 ist. Es hat sich überraschenderweise gezeigt, dass ein Wert für x zwischen 0,6 und 2 von Vorteil ist

Im Fall eines als Schmelzeverteiler ausgebildeten Schmelzeleiters wird ein Schmelzekanal in wenigstens zwei stromab davon angeordnete Schmelzekanäle aufgeteilt, sodass $U_1$ der erste Umfang und $A_1$ die erste Querschnittsfläche des gemeinsamen weiter stromauf angeordneten Schmelzekanals ist, wobei $U_2$ der zweite Umfang und $A_2$ die zweite Querschnittsfläche eines der weiter stromab angeordneten, aufgeteilten Schmelzekanäle, bezogen auf die designierte Fließrichtung der Polymerschmelze somit der Schmelzekanäle nachgelagerter Generation, ist.

Bei einem als Schmelzemischer ausgebildeten Schmelzeleiter werden mindestens zwei Schmelzekanäle vorzugsweise zu einem stromab davon angeordneten, gemeinsamen Schmelzekanal zusammengeführt. $U_1$ ist der erste Umfang und $A_1$ ist die erste Querschnittsfläche des gemeinsamen weiter stromab angeordneten Schmelzekanals, wobei $U_2$ der zweite Umfang und $A_2$ ist die zweite Querschnittsfläche eines der wenigstens zwei weiter stromauf angeordneten Schmelzekanäle, bezogen auf die designierte Fließrichtung der Polymerschmelze somit der Schmelzekanäle vorgelagerter Generation, ist.

Die Anzahl $n_K$ der aufgeteilten bzw. getrennten Schmelzekanäle einer Generation ist in Abhängigkeit von Durchmessern der Schmelzekanäle dieser Verzweigungsstufe derart gewählt, dass die Gefahr von Schubspannungsschwankungen und damit einhergehenden möglichen Schmelzestromabrissen innerhalb des Multikanalsystems reduziert wird.

Dieser Zusammenhang ist insbesondere deshalb von Vorteil, weil die Geometrie des jeweiligen Schmelzekanals über dessen Länge in der Praxis nicht in jedem Punkt konstant bleibt. Vorteilhaft ist dieser geometrische Zusammenhang insbesondere für einfache Querschnittsgeometrien der Kanäle des Multikanalsystems. Es hat sich zudem erwiesen, dass eine Konstruktion des Multikanalsystems anhand eines solchen Zusammenhangs für solche Schmelzekanalquerschnitte von Vorteil ist, die im Wesentlichen symmetrisch ausgebildet sind und bei denen eine Querschnittsbreite nicht um ein Vielfaches höher ist als eine Querschnittshöhe.

Für Querschnittsgeometrien der Schmelzekanäle, bei denen sich im lokalen Querschnitt des jeweiligen Schmelzekanals die schmalste und breiteste Stelle annähern, kann es demgegenüber vorteilhaft sein, lediglich einen Zusammenhang zwischen einer Querschnittsfläche eines aufzuteilenden Schmelzekanals und einer Querschnittsfläche eines aufgeteilten Schmelzekanals in Abhängigkeit der Anzahl aufgeteilter Schmelzekanäle zu erstellen. Bei einem Kreisquerschnitt sind die schmalste und breiteste Stelle des lokalen Querschnitts des jeweiligen Schmelzekanals identisch und entsprechen dem Durchmesser. Die Betrachtung eines flächenmäßigen Zusammenhang, wie nachfolgend erläutert, ist insbesondere bei Schmelzekanälen von Vorteil, deren schmalste und breiteste Stelle sich um weniger als den Faktor 10, bevorzugt um wenigster als den Faktor 5, besonders bevorzugt um wenigster als den Faktor 2,5 unterscheiden.

Ein Querschnitt von wenigstens zwei aus einem gemeinsamen Schmelzekanal entspringenden und aufgeteilten Schmelzekanälen ist erfindungsgemäss in Abhängigkeit von

$$A_2 = A_1 * (1/\ n_K)^{2/y}$$

dimensioniert, wobei $A_1$ die erste Querschnittsfläche des gemeinsamen Schmelzekanals ist, wobei $A_2$ die zweite Querschnittsfläche eines der aufgeteilten Schmelzekanäle ist, wobei $n_K$ die Gesamtanzahl der aufgeteilten Schmelzekanäle ist, und wobei y mindestens ein Wert von 2, bevorzugt mindestens ein Wert von 2,5, ferner bevorzugt mindestens ein Wert von 2,85 ist, und wobei y höchstens ein Wert von 7, bevorzugt höchstens ein Wert von 5, ferner bevorzugt höchstens ein Wert von 3,35 ist. Es hat sich überraschenderweise gezeigt, dass ein Wert für y zwischen 2,5 und 5 von Vorteil ist.

Ist der Schmelzeleiter als Schmelzeverteiler mit im Wesentlichen kreisrund ausgebildeten Schmelzekanälen ausgebildet, wird ein Schmelzekanal in wenigstens zwei stromab davon angeordnete Schmelzekanäle aufgeteilt, sodass A₁ die erste Querschnittsfläche des gemeinsamen weiter stromauf angeordneten Schmelzekanals und A₂ die zweite Querschnittsfläche eines der wenigstens zwei weiter stromab angeordneten, aufgeteilten Schmelzekanälen, bezogen auf die designierte Fließrichtung der Polymerschmelze somit der Schmelzekanäle nachgelagerter Generation, sind.

Bei einem als Schmelzemischer ausgebildeten Schmelzeleiter mit im Wesentlichen kreisrund ausgebildeten Schmelzekanälen werden mindestens zwei Schmelzekanäle vorzugsweise zu einem stromab davon angeordneten, gemeinsamen Schmelzekanal zusammengeführt. A₁ ist dementsprechend die erste Querschnittsfläche des gemeinsamen bzw. zusammengeführten und weiter stromab angeordneten Schmelzekanals, und A₂ ist die zweite Querschnittsfläche eines der wenigstens zwei weiter stromauf angeordneten Schmelzekanäle, bezogen auf die designierte Fließrichtung der Polymerschmelze somit der Schmelzekanäle vorgelagerter Generation.

Werden ein Schmelzekanal a-ter Generation und ein Schmelzekanal b-ter Generation in Abhängigkeit dieses geometrischen Zusammenhangs ausgebildet, können im Wesentlichen konstante Schubspannungen innerhalb des Multikanalsystems realisiert werden. Zudem besteht ein materialunabhängiger Zusammenhang zwischen den fluidisch miteinander verbundenen Kanälen des Multikanalsystems, sodass die Gefahr von Schubspannungsschwankungen und Schmelzestromabrissen deutlich reduziert wird. Ein solcher Zusammenhang zwischen den Querschnittsgeometrien eignet sich besonders für Querschnitte, bei welchen die Breite des Querschnitts um ein Vielfaches größer ist als die Höhe.

Bevorzugt weisen die Schmelzekanäle des jeweiligen Multikanalsystems wenigstens abschnittsweise eine von einer kreisrunden Querschnittsform verschiedene lokale Querschnittsform auf. Die lokale Querschnittsform der Schmelzekanäle ist beliebig ausbildbar, wobei die spezifische Ausformung abhängig von den Eigenschaften der Polymerschmelze sowie den Anforderungen an das Extrusionsprodukt ist. Beispielsweise sind ellipsoide, ovale, tropfenförmige, maulförmige und/oder eiförmige Querschnittsformen je nach Anwendungsfall besonders vorteilhaft. Des Weiteren ist eine derartige Ausformung der Schmelzekanäle von Vorteil, bei der Ablagerungen von Polymerschmelze im Multikanalsystem verhindert werden. Aufgrund der wenigstens teilweise additiven Herstellung des Multikanalsystems lässt sich grundsätzlich jede bekannte geometrische Standardform als lokale Querschnittsform herstellen, wobei die Erfindung ausdrücklich nicht nur auf Standardgeometrien der Schmelzekanalquerschnitte beschränkt ist. Mit anderen Worten sind beliebig ausgeformte Freiformoberflächen der Wandungen der Schmelzekanäle möglich, welche idealerweise die designierte Polymerschmelze mit im Wesentlichen gleichbleibender Schubspannung durch das Multikanalsystem führen.

Die Erfindung schließt die technische Lehre ein, dass der Schmelzeleiterblock ein erstes Multikanalsystem und ein zweites Multikanalsystem, insbesondere ein drittes, viertes oder fünftes Multikanalsystem aufweist. Auch mehr als fünf Multikanalsysteme sind denkbar, die jeweils wenigstens teilweise mittels eines additiven Herstellungsverfahrens innerhalb des Schmelzeleiterblocks ausgebildet werden. Die unterschiedlichen Multikanalsysteme können identische, beispielsweise aber auch unterschiedliche oder teils identische und teils unterschiedliche Polymerschmelzen leiten, um beispielsweise mehrlagige oder wenigstens teilweise überlappende Folienbahnen oder Filamente herzustellen. Ferner können hinsichtlich ihrer Materialanforderungen und -eigenschaften unterschiedliche Polymerschmelzen in den Multikanalsystemen geleitet, insbesondere zusammengeführt und/oder verteilt werden, um ein entsprechendes Extrusionsprodukt zu erzeugen. Ferner ist denkbar, dass einzelne Filamente, insbesondere einzelne Endlosfilamente, aus Polymerschmelzen verschiedener Multikanalsysteme erzeugt werden. Mithin können Filamente aus unterschiedlichen Komponenten bzw. Polymerschmelzen mit beliebigen Mischungsverhältnissen ausgebildet werden, wobei die Komponenten beispielsweise benachbart aneinander anliegend, in Lagen, Schichten und/oder Segmenten im jeweiligen Filament angeordnet sind.

Nach einem Ausführungsbeispiel sind die Multikanalsysteme fluidisch voneinander getrennt ausgebildet, wobei jedes Multikanalsystem mindestens einen Eintritt für Polymerschmelze und mindestens einen Austritt aufweist. Mittels mehrerer fluidisch voneinander getrennter Multikanalsysteme können konstruktiv einfach beispielsweise Zwei- oder Mehrfolienbahnen und/oder zwei- oder mehrlagige Folienbahnen erzeugt werden, insbesondere mit unterschiedlichen Folienlagen, wenn in den fluidisch voneinander getrennten Multikanalsystemen unterschiedliche Polymerschmelzen durch den Schmelzeleiter hindurch geleitet werden. Des Weiteren können eine Vielzahl von Filamenten mit gleichen oder verschiedenen Materialeigenschaften erzeugt werden, die zu einem Vlies bzw. Vliesstoff verarbeitet werden können. Ein Vlies besteht aus einer Vielzahl Einzelfilamenten, bevorzugt aus 20 bis 10.000 Einzelfilamenten pro Meter Breite des Vlieses. Die Austritte des jeweiligen Multikanalsystems können zur Verdüsung der Polymerschmelze zu einem Filament ausgebildet sein. Ferner ist denkbar, dass die dem Schmelzeleiterblock nachgelagerte Extrusionsdüse zur Herstellung der Filamente und anschließend des Vlieses vorgesehen ist.

Ferner ist denkbar, eine Vielzahl einzelner Filamente herzustellen, die jeweils aus unterschiedlichen Polymeren bestehen bzw. aus verschiedenen Polymerschmelzen hergestellt werden. Solche Filamente können unterschiedlich ausgebildet sein, wobei die Filamente beispielsweise zu Vliesen bzw. Vliesstoffen oder Garnen verarbeitet werden können. Ein Filament kann zum Beispiel eine im Wesentlichen kreisrunde Querschnittsform aufweisen, wobei ein erster Strang, resultierend aus der ersten Polymerschmelze des ersten Multikanalsystems, von einem den ersten Strang ummantelnden zweiten Strang, resultierend aus der zweiten Polymerschmelze des zweiten Multikanalsystems ausgebildet wird. Auch eine Zusammenführung von mehr als zwei Strängen ist denkbar, wobei die Polymerschmelzestränge durch geeignete Anordnung der Austritte des jeweiligen Multikanalsystem beliebig miteinander zusammengeführt werden können, beispielsweise benachbart aneinander anliegend, in Lagen, Schichten und/oder Segmenten.

Alternativ weist das erste Multikanalsystem eine Zusammenführung mit wenigstens dem zweiten Multikanalsystem auf. Dadurch lassen sich insbesondere Verbundstoffe oder Compound-Produkte herstellen. So kann beispielsweise eine im Wesentlichen aufgeschmolzene Polymerschmelze durch ein erstes Multikanalsystem geleitet werden, wohingegen in einem zweiten Multikanalsystem entweder eine sich von der ersten Polymerschmelze unterscheidende zweite Polymerschmelze oder wenigstens teilweise als Schmelze vorliegende Füllstoffe, Verstärkungsstoffe oder andere Additive bereitgestellt bzw. geführt werden, die an der jeweiligen Zusammenführung mit der im ersten Multikanalsystem geführten ersten Polymerschmelze an der jeweiligen Zusammenführung vermengt bzw. vermischt werden. Im Bereich der jeweiligen Zusammenführung werden folglich mindestens zwei Stoffe zunächst miteinander vermengt und während der Verdüsung der Schmelze mit anschließender Abkühlung fest miteinander verbunden. Mithin erfolgt eine sogenannte Compoundierung. Ziel dieser Compoundierung ist es, die Eigenschaften der miteinander zusammengeführten Stoffe bzw. Schmelzen auf einen Anwendungsfall des Extrusionsprodukts hin zu modifizieren.

In diesem Zusammenhang ist es möglich, durch ein erstes Multikanalsystem ein Rezyklat eines Polymertyps zu leiten und durch ein anderes Multikanalsystem ein Neumaterial bzw. Neuware des gleichen Polymertyps zuzuführen. Entsprechend den gewünschten Endprodukteigenschaften werden die beiden Schmelzeströme des gleichen Polymertyps miteinander in einem prozesstechnisch wählbaren Mischungsverhältnis vermischt.

Je nach Anforderung an das Extrusionsprodukt können die verschiedenen Schmelzen vergleichsweise früh miteinander vermischt bzw. zusammengeführt werden, beispielsweise kurz nach den Eintritten der jeweiligen Multikanalsysteme. Dies ist insbesondere dann von Vorteil, wenn eine möglichst gute Durchmischung der ersten Polymerschmelze mit der zweiten Schmelze gewünscht ist oder wenn die Fließeigenschaften der designierten zusammengeführten Polymerschmelze zur Leitung durch das Multikanalsystem zu verbessern sind. Alternativ kann eine Zusammenführung der Schmelzen auch vergleichsweise spät im jeweiligen Multikanalsystem erfolgen, beispielsweise kurz vor Erreichen der Austritte der jeweiligen Multikanalsysteme. Dies ist insbesondere dann wünschenswert, wenn es andernfalls zu Entmischungserscheinungen der Strömungskomponenten in längeren Kanalquerschnitten kommt.

Nach einem Ausführungsbeispiel ist das jeweilige Multikanalsystem mit einer Vielzahl von Austritten ausgebildet, die dazu eingerichtet sind, eine Polymerschmelze zur Speisung einer Extrusionsdüse in einen Sammelraum zu führen. Anders gesagt sind bei einer solchen Ausführungsform Austritte über eine bestimmte Breite des Schmelzeleiters, insbesondere des Schmelzeleiterblocks, verteilt angeordnet und münden in den Sammelraum.

Die Austritte können quer zur Austrittsrichtung des designierten Schmelzestroms beabstandet zueinander angeordnet sein. Dabei können die Austritte auf einer gemeinsamen Linie beabstandet zueinander an der Austrittsseite des Schmelzeleiterblocks ausgebildet sein, wobei die Linie gerade oder gekrümmt sein kann. Ferner ist denkbar, dass die Austritte auf zwei oder mehr Ebenen aus dem Schmelzeleiterblock austreten, wobei Austritte der ersten Ebene und Austritte der weiteren Ebene oder Ebenen quer zur Austrittsrichtung des designierten Schmelzestroms übereinander, teilweise überlagernd oder abwechselnd angeordnet sind. Vor allem bei der Herstellung von Folienbahnen, Platten oder Blasfolien ist, unabhängig davon, ob ein Sammelraum gespeist wird oder die Polymerschmelze direkt in eine Extrusionsdüse gefördert wird, eine teilweise überlagernde Anordnung der Austritte in zwei oder mehreren Ebenen von Vorteil, da insbesondere ein in der Breite kontinuierlich und gleichmäßig hergestelltes, recht homogenes Extrusionsprodukt realisierbar ist, welches keine oder nur abgeschwächte Bindenähte aufweist.

Als "Sammelraum" ist in diesem Zusammenhang ein im Wesentlichen hohler Raum zu verstehen, in dem die durch den Schmelzeleiter zusammengeführte und/oder verteilte Polymerschmelze gesammelt wird und einer Extrusionsdüse zugeführt wird. Anders gesagt kann der Sammelraum ein Extrusionsraum oder ein Düsenraum zur Speisung einer Extrusionsdüse sein. Der Sammelraum kann ferner dazu ausgebildet sein, zwei oder mehrere Extrusionsdüsen zu speisen. Das Speisen erfolgt in einer designierten Extrusionsrichtung der Polymerschmelze an einer stromaufwärtigen Seite der jeweiligen Extrusionsdüse.

Des Weiteren ist denkbar, dass der Sammelraum in zwei oder mehrere Sammelraumsegmente unterteilt ist, die beliebig in Form und Größe ausgebildet sein können. Somit wiese das Extrusionswerkzeug mehrere Sammelräume bzw. Sammelraumsegmente auf, die jeweils eine oder mehrere Extrusionsdüsen speisen.

Der Sammelraum ist vorzugsweise am Schmelzeleiter, insbesondere am Schmelzeleiterblock, integriert. Dies ist aufgrund der additiv hergestellten Form des Schmelzeleiters, insbesondere des Schmelzeleiterblocks, konstruktiv einfach realisierbar. Außerdem können im Bereich des Sammelraumes Mittel zur Aufnahme von Befestigungs- und/oder Anschlusselementen der jeweiligen Extrusionsdüse vorgesehen sein, die ebenfalls wenigstens teilweise additiv hergestellt sein können.

Es sei ausdrücklich darauf hingewiesen, dass eine Vorrichtung mit den Merkmalen der vorstehenden Absätze auch für sich genommen einen unabhängigen Aspekt der Erfindung darstellt, also unabhängig vom zuvor beschriebenen unabhängigen Patentanspruch. Eine als unabhängig und selbständig vorteilhaft offenbart zu verstehende Merkmalskombination wäre demnach wie folgt:

Schmelzeleiter, insbesondere Schmelzeverteiler oder Schmelzemischer, für ein Extrusionswerkzeug einer Extrusionsanlage, aufweisend einen Schmelzeleiterblock mit einem Multikanalsystem, wobei das Multikanalsystem sich dreidimensional erstreckend innerhalb des Schmelzeleiterblocks angeordnet ist sowie einen oder mehrere Eintritte und eine Vielzahl von Austritten aufweist, wobei eine Vielzahl der Schmelzekanäle über die Austritte einen Sammelraum speisen, der dazu eingerichtet ist, eine Extrusionsdüse des Extrusionswerkzeug zu speisen.

Ferner bevorzugt weist der Schmelzeleiter, insbesondere der Schmelzeleiterblock, ein räumlich zwischen den aufgeteilten Schmelzekanälen des jeweiligen Multikanalsystems angeordnetes Hohlkammersystem mit wenigstens einer Hohlkammer auf. Mit anderen Worten weist der Schmelzeleiterblock einen Grundkörper mit einer Hohlkammer, vorzugsweise mit einer Vielzahl Hohlkammern, auf. Das Multikanalsystem kann derart vom Hohlkammersystem umgeben sein, dass Hohlkammern des Hohlkammersystems mit dem Multikanalsystem wirkverbunden sind. Hierdurch ist konstruktiv besonders einfach eine Leichtbauweise des Schmelzeleiters und insbesondere des Schmelzeleiterblocks ermöglicht.

Mittels eines solchen Hohlkammersystems kann speziell der Schmelzeleiterblock erheblich gewichtsreduzierter, aber dennoch mit einer entsprechenden Festigkeit stabil hergestellt werden, wodurch beispielsweise das Handling des Schmelzeleiterblocks stark vereinfacht werden kann. Dies ist etwa bei Auswechselarbeiten, Wartungsarbeiten oder dergleichen von Vorteil. Darüber hinaus kann ein durch ein Hohlkammersystem realisierter Schmelzeleiterblock materialsparender hergestellt werden, wodurch auch Herstellungskosten des Schmelzeleiters signifikant sinken.

Besonders vorteilhaft ist es jedoch, dass neben den polymerführenden Schmelzekanälen des Multikanalsystems, selbst in sehr großer Zahl, sogleich zusätzliche Kavitäten bzw. Kammern im Schmelzeleiterblock bereitgestellt werden können, sodass sich mit dem Grundkörper des Schmelzleiterblocks auch weitere Funktionen verwirklichen lassen. Beispielsweise können einzelne Hohlkammern des Hohlkammersystems, gegebenenfalls auch bereichsweise, mit Isolatoren oder dergleichen ausgerüstet, insbesondere befüllt, sein.

Ferner ist denkbar, das Hohlkammersystem zumindest teilweise oder bereichsweise derart auszubilden, dass ein Medium durch die Hohlkammern geführt werden kann. Insbesondere ist denkbar, dass ein Temperiermedium zum Heizen oder Kühlen des mit dem Hohlkammersystems wirkverbundenen Multikanalsystems durch das Hohlkammersystem geleitet wird. Dadurch lässt sich eine Temperierung der designierten Polymerschmelze sowie eine homogene Bauteiltemperatur des Schmelzeleiters, insbesondere des Schmelzeleiterblocks, realisieren.

Das Hohlkammersystem kann in mehrere Segmente unterteilt sein, die jeweils eine oder mehrere Hohlkammern umfassen können. Dadurch ist es möglich mehrere unterschiedliche Temperiermedien zuzuführen. Vorteilhafterweise ist das Multikanalsystem in dem Hohlkammersystem eingebettet, wodurch Schmelzekanalwände durch Profilelemente, wie etwa Stege, Rippen oder sonstige Materialanhäufungen des Hohlkammersystems, zusätzlich abgestützt werden können.

Beispielsweise können sich Schmelzekanalwände zweier oder mehrerer im Raum benachbarter Schmelzekanäle mittels des Hohlkammersystems gegenseitig stabilisieren, wodurch das Multikanalsystem trotz Leichtbauweise des Schmelzeleiterblocks wesentlich höhere Polymerschmelzedrücke beherrschen kann.

Es versteht sich, dass ein derartiges Hohlkammersystem beliebig konstruiert sein kann, beispielsweise in Form einer Gitterstruktur, einer Quadratstruktur, einer Kugelstruktur, einer Halbkugelstruktur, einer Bogenstruktur, oder dergleichen.

Eine bevorzugte Ausführungsvariante sieht vor, dass das Hohlkammersystem eine Wabenstruktur aufweist, mithin die Hohlkammern wenigstens teilweise als Waben ausgebildet sind. Eine Wabenstruktur kann auf den Schmelzeleiter, insbesondere auf den Schmelzeleiterblock einwirkende Kräfte, besonders gut aufnehmen und weiter- bzw. ableiten. Ferner stehen mit vorzugsweise sechs oder mehr Seitenwänden der Waben eine vorteilhafte Anzahl an Wandflächen zur Verfügung, an welchen etwa Durchbrüche zu einer Vielzahl an benachbarten Waben oder dergleichen, Anschlussmöglichkeiten für Kanäle oder dergleichen, und ähnlichem innerhalb des Schmelzeleiterblocks verwirklicht werden können. Insofern kann hiermit eine besonders zweckmäßige Leichtbauweise des Schmelzleiterblocks mit hoher Stabilität umgesetzt werden.

Das für den vorliegenden Schmelzleiterblock vorteilhafte Hohlkammersystem kann vielfältig hergestellt werden. Besonders zweckmäßig ist es jedoch, wenn das Hohlkammersystem mittels eines additiven Herstellverfahrens hergestellt ist. Ein solches additives Herstellverfahren ermöglicht besonders unkompliziert, verschiedenste Hohlkammerstrukturen innerhalb des Schmelzeleiterblocks zu erzeugen.

Es sei ausdrücklich darauf hingewiesen, dass eine Vorrichtung mit den Merkmalen der vorstehenden Absätze auch für sich genommen einen unabhängigen Aspekt der Erfindung darstellt, also unabhängig vom zuvor beschriebenen unabhängigen Patentanspruch. Eine als unabhängig und selbständig vorteilhaft offenbart zu verstehende Merkmalskombination wäre demnach wie folgt:

Schmelzeleiter, insbesondere Schmelzeverteiler oder Schmelzemischer, für ein Extrusionswerkzeug einer Extrusionsanlage, aufweisend einen Schmelzeleiterblock mit einem Multikanalsystem, wobei das Multikanalsystem sich dreidimensional erstreckend innerhalb des Schmelzeleiterblocks angeordnet ist, wobei der Schmelzeleiter, insbesondere der Schmelzeleiterblock, ein räumlich zwischen Schmelzekanälen des Multikanalsystems angeordnetes Hohlkammersystem mit einer Vielzahl Hohlkammern aufweist, wobei bevorzugt zwischen benachbarten Hohlkammern Durchtritte vorgesehen sind, sodass zumindest an den Schmelzekanälen angrenzende Hohlkammer von einem Temperierfluid durchströmbar sind.

Bevorzugt weist das Multikanalsystem eine globale Maschinenrichtung durch den Schmelzeleiterblock auf, welche vom Eintritt zum Austritt einer designierten Schmelzeströmung der Kunststoffschmelze führt, wobei die aufgeteilten Schmelzekanäle bei Projektion einer lokalen Maschinenrichtung auf die globale Maschinenrichtung abschnittsweise entgegen der globalen Maschinenrichtung verlaufen.

Unter einer "globalen Maschinenrichtung" ist die Anordnung des Schmelzeleiters, insbesondere des Schmelzeleiterblocks, in der Extrusionsanlage zu verstehen, wobei die globale Maschinenrichtung entlang der designierten Fließrichtung zwischen der Bereitstellungseinheit und einer eventuellen Extrusionsdüse bzw. den Düsenaustritten am Schmelzeleiterblock verläuft. Mithin ist die globale Maschinenrichtung eine räumliche Erstreckung des Schmelzeleiters, insbesondere des Schmelzeleiterblocks, in der Extrusionsanlage unter Berücksichtigung der Eintrittsseite und Austrittsseite des Multikanalsystems für die designierte Polymerschmelze.

Demgegenüber kann eine "lokale Maschinenrichtung" lokal von der globalen Maschinenrichtung abweichen, wobei die lokale Maschinenrichtung die lokale Ausrichtung des Multikanalsystems beschreibt, insbesondere des jeweiligen Schmelzekanals relativ zur globalen Maschinenrichtung. Die lokale Maschinenrichtung verläuft koaxial zur Längsachse des Schmelzekanals in Richtung der designierten Fließrichtung der Polymerschmelze. In einem besonders vereinfachten Fall kann die lokale Maschinenrichtung vorzugsweise dann abschnittsweise deckungsgleich mit der globalen Maschinenrichtung sein, wenn das Multikanalsystem einen Eintritt an einer Eintrittsseite des Schmelzeleiterblocks und einen fluidisch damit verbundenen und koaxial dazu angeordneten Austritt an einer der Eintrittsseite gegenüberliegenden Austrittsseite des Schmelzeleiterblocks aufweist. Die Ausrichtung des Schmelzekanals im Raum und somit die lokale Maschinenrichtung kann in diesem Fall zumindest partiell koaxial zur globalen Maschinenrichtung sein.

Da das Multikanalsystem sich dreidimensional erstreckend im Schmelzeleiter bzw. im Schmelzeleiterblock ausgebildet ist, weicht die lokale Maschinenrichtung regelmäßig von der globalen Maschinenrichtung ab. Da alle sechs Freiheitsgrade zur Ausbildung des Multikanalsystems ausnutzbar sind, kann zum einen eine schräge Anordnung des jeweiligen Schmelzekanals relativ zur globalen Maschinenrichtung vorgesehen sein. Jedoch ist auch denkbar und kann insbesondere zum Einsparen von Bauraum von Vorteil sein, dass die lokale Maschinenrichtung bezogen auf die globale Maschinenrichtung abschnittsweise in die entgegengesetzte Richtung verläuft.

Dadurch können Schmelzekanäle des Multikanalsystems in einem besonderen Ausführungsbeispiel bis nahezu zur Eintrittsseite des Schmelzeleiters, insbesondere des Schmelzeleiterblocks, zurückgeführt werden. Der Vorteil des Führens der lokalen Maschinenrichtung der Schmelzekanäle entgegengesetzt zur globalen Maschinenrichtung besteht folglich darin, dass der Schmelzeleiter bzw. der Schmelzeleiterblock durch beliebige Führung der Schmelzekanäle relativ zur globalen Maschinenrichtung besonders bauraumsparend ausgebildet werden kann. Außerdem können die Schmelzekanäle beliebig um Anschluss- oder Befestigungselemente, insbesondere Schrauben, Gewinde oder dergleichen herumgeführt werden.

Es sei ausdrücklich darauf hingewiesen, dass eine Vorrichtung mit den Merkmalen der vorstehenden Absätze auch für sich genommen einen unabhängigen Aspekt der Erfindung darstellt, also unabhängig vom zuvor beschriebenen unabhängigen Patentanspruch. Eine als unabhängig und selbständig vorteilhaft offenbart zu verstehende Merkmalskombination wäre demnach wie folgt:

Schmelzeleiter, insbesondere Schmelzeverteiler oder Schmelzemischer, für ein Extrusionswerkzeug einer Extrusionsanlage, aufweisend einen Schmelzeleiterblock mit einem Multikanalsystem, wobei das Multikanalsystem sich dreidimensional erstreckend innerhalb des Schmelzeleiterblocks angeordnet ist, wobei das Multikanalsystem einen Eintritt und einen Austritt aufweist, wobei der Eintritt über eine Vielzahl aufgeteilter und/oder zusammengeführter Schmelzekanäle, jeweils aufweisend eine lokale Maschinenrichtung, mit einem Austritt fluidisch verbunden ist, wobei der Schmelzeleiterblock eine globale Maschinenrichtung von einer Eintrittsseite des Schmelzeleiterblocks zu einer Austrittsseite des Schmelzeleiterblocks aufweist, wobei die aufgeteilten Schmelzekanäle des Multikanalsystems bei Projektion einer lokalen Maschinenrichtung auf die globale Maschinenrichtung abschnittsweise entgegen der globalen Maschinenrichtung verlaufen.

Die Schmelzekanäle können sich beliebig dreidimensional im Raum erstreckend ausgebildet sein, wobei der jeweilige Schmelzekanal somit auch schräg im Raum, das heißt mit einem Winkel zur globalen Maschinenrichtung verlaufen kann. Ferner ist denkbar, dass der jeweilige Schmelzekanal in seiner Erstreckung entlang der lokalen Maschinenrichtung des jeweiligen Schmelzekanals eine Richtungsänderung bzw. ein Kurvenabschnitt mit einem Kurvenradius aufweist, welcher größer ist, vorzugsweise um ein Vielfaches größer als ein lokaler Durchmesser dieses Schmelzekanals. Dadurch können Ablagerungen im Multikanalsystem vermieden und eine gleichmäßigere Führung der Polymerschmelze realisiert werden.

Bevorzugt ist die Richtungsänderung zwischen zwei Verzweigungen und/oder Weiterverzweigungen des Schmelzekanals angeordnet. Anders gesagt ist der jeweilige Kurvenabschnitt zwischen einem Eingang und einem Ausgang des jeweiligen Schmelzekanals ausgebildet. Gleiches gilt auch für die Verzweigungen und/oder Weiterverzweigungen, die gleichermaßen eine Richtungsänderung bzw. ein Kurvenabschnitt mit einem Kurvenradius aufweist, welcher größer ist, vorzugsweise um ein Vielfaches größer, als ein lokaler Durchmesser dieses Schmelzekanals. Selbstverständlich ist denkbar, dass der jeweilige Schmelzekanal, die jeweilige Verzweigung und/oder Weiterverzweigung auch zwei oder mehrere Richtungsänderungen bzw. Kurvenabschnitte aufweisen können, wobei zwischen den Richtungsänderungen gerade Abschnitte ausgebildet sein können.

Vorzugsweise weist der Schmelzeleiterblock ferner einen Medienkanal auf, insbesondere für eine zirkulierende Fluidversorgung, vor allem zum Temperieren, und/oder für eine elektrische Leitung und/oder für eine Messeinrichtung.

Unter einem "Medienkanal" ist in diesem Zusammenhang ein zusätzliches, neben dem Multikanalsystem ausgebildetes und fluidisch davon getrenntes Kanalsystem zu verstehen, das vom Aufbau grundsätzlich wie das Multikanalsystem ausgebildet sein kann. Das bedeutet, dass auch der Medienkanal sich dreidimensional erstreckend durch den Schmelzeleiterblock verlaufen kann und einen Eintritt sowie einen damit fluidisch verbundenen Austritt aufweist. Der Medienkanal verläuft räumlich beabstandet zwischen den Schmelzekanälen des Multikanalsystems und kann mit dem Multikanalsystem wirkverbunden sein. Der Medienkanal kann beispielsweise zur Führung eines Mediums, insbesondere eines Temperiermediums, ausgebildet sein. Im Gegensatz zum Hohlkammersystem ist der Medienkanal ein separater, platzsparend ausgebildeter Kanal oder ein separates Kanalsystem, durch den bzw. das eine Wechselwirkung mit der in den Schmelzekanälen geführten, designierten Polymerschmelze realisierbar ist. Darüber hinaus kann der Medienkanal oder ein weiterer Medienkanal zur Führung von elektrischen Leitungen und/oder einer Messeinrichtung, wie beispielsweise eine Sensorik mit dessen elektrischer Versorgungsleitung, vorgesehen sein. Das Multikanalsystem kann aufgrund dessen additiver Herstellung um den ebenfalls additiv herstellbaren Medienkanal, oder umgekehrt, herumgeführt werden. Die zuvor beschriebenen Stützstrukturen können gleichermaßen zur Realisierung statischer Stabilität des Mediankanals genutzt werden.

Es sei ausdrücklich darauf hingewiesen, dass eine Vorrichtung mit den Merkmalen der vorstehenden Absätze auch für sich genommen einen unabhängigen Aspekt der Erfindung darstellt, also unabhängig vom zuvor beschriebenen unabhängigen Patentanspruch. Eine als unabhängig und selbständig vorteilhaft offenbart zu verstehende Merkmalskombination wäre demnach wie folgt:

Schmelzeleiter, insbesondere Schmelzeverteiler oder Schmelzemischer, für ein Extrusionswerkzeug einer Extrusionsanlage, aufweisend einen Schmelzeleiterblock mit einem Multikanalsystem, wobei das Multikanalsystem sich dreidimensional erstreckend innerhalb des Schmelzeleiterblocks angeordnet ist, wobei der Schmelzeleiter, insbesondere der Schmelzeleiterblock, einen räumlich zwischen Schmelzekanälen des Multikanalsystems angeordneten Medienkanal aufweist, insbesondere für eine zirkulierende Fluidversorgung, vor allem zum Temperieren, und/oder für eine elektrische Leitung und/oder für eine Messeinrichtung.

Nach einem Ausführungsbeispiel weist der Schmelzeleiterblock ein statisches Funktionselement zur zumindest mittelbaren Beeinflussung der designierten Polymerschmelze auf. Unter einem "statischen Funktionselement" ist wenigstens ein an oder im Multikanalsystem angeordnetes oder ausgebildetes im Wesentlichen ortsfestes Element oder Bauteil zu verstehen, das mit der designierten Polymerschmelze wechselwirkt. Das statische Funktionselement realisiert eine derartige Beeinflussung der designierten Polymerschmelze, sodass die Eigenschaften, insbesondere die Fließeigenschaften, der Polymerschmelze vom Eintritt bis zum Austritt im Wesentlichen gleich bleiben, vorzugsweise verbessert werden. Insbesondere kann das statische Funktionselement bewirken, dass eine Schmelzetemperatur des Schmelzestroms homogener gestaltet wird. Auch können Ablagerungen und/oder Entmischungserscheinungen der Polymerschmelze im Multikanalsystem durch eine Homogenisierung des Schmelzestroms verhindert werden.

Vorzugsweise ist das statische Funktionselement ein statisches Mischelement. Das statische Mischelement ist vorzugsweise innerhalb des Multikanalsystems bzw. in einem Schmelzekanal des Multikanalsystems angeordnet und wird vorteilhafterweise bei additiver Herstellung des Multikanalsystems ebenfalls wenigstens teilweise additiv hergestellt. Das Mischelement kann rampenförmig, stabförmig, gekrümmt oder dergleichen ausgebildet sein und dient vornehmlich zur Durchmischung und Homogenisierung der designierten Polymerschmelze. Aufgrund der vorliegenden Schubspannungen in der Polymerschmelze liegen im Schmelzekanal unterschiedliche Fließgeschwindigkeiten des Schmelzestroms vor, die von einer Mittelachse des Schmelzekanals zur Schmelzekanalwand hin abnimmt. Das statische Funktionselement, insbesondere das statische Mischelement, realisiert in diesem Zusammenhang eine Vergleichmäßigung des im Schmelzekanal geführten Schmelzestranges. Beispielsweise unmittelbar vor einem Austritt des Multikanalsystems kann eine Vergleichmäßigung der Schmelzeströmung durch ein statisches Mischelement eine gleichmäßige Speisung einer Extrusionsdüse oder eines stromauf der Extrusionsdüse ausgebildeten Sammelraums realisieren.

Das statische Mischelement ist vorzugsweise im Schmelzekanal zwischen zwei Verzweigungen bzw. Weiterverzweigungen angeordnet. Es ist denkbar, dass im Bereich des Mischelements eine geringfügige lokale Querschnittsänderung der lokalen Querschnittsform des Schmelzekanals ausgebildet ist, insbesondere um eine Mischwirkung zu verbessern. Bevorzugt ist eine lokale Aufweitung des Schmelzekanals vorgesehen, die abhängig von der im jeweiligen Schmelzekanal vorliegenden Strömungseigenschaften ausgeformt ist, wobei der statische Mischer innerhalb der lokalen Aufweitung ausgebildet ist. Der Schmelzekanal weist vorzugsweise vor und nach der lokalen Aufweitung des Schmelzekanals im Wesentlichen die gleiche Querschnittsgröße und -form auf, wobei in designierter Fließrichtung der Polymerschmelze dazwischen ein lokal vergrößerter Querschnitt ausgebildet ist. Die Querschnittsänderung kann stufenförmig und/oder rampenförmig ausgebildet sein. Des Weiteren ist es vorteilhaft, wenn nach einer Richtungsänderung des Schmelzekanals mit einem einfachen statischen Mischelement die Polymerschmelze bzw. die Schmelzeströmung von der Mittelachse des jeweiligen Schmelzekanals in Richtung der Wand des Schmelzekanals gelenkt wird.

Es sei ausdrücklich darauf hingewiesen, dass eine Vorrichtung mit den Merkmalen der vorstehenden Absätze auch für sich genommen einen unabhängigen Aspekt der Erfindung darstellt, also unabhängig vom zuvor beschriebenen unabhängigen Patentanspruch. Eine als unabhängig und selbständig vorteilhaft offenbart zu verstehende Merkmalskombination wäre demnach wie folgt:

Schmelzeleiter, insbesondere Schmelzeverteiler oder Schmelzemischer, für ein Extrusionswerkzeug einer Extrusionsanlage, aufweisend einen Schmelzeleiterblock mit einem Multikanalsystem, wobei das Multikanalsystem sich dreidimensional erstreckend innerhalb des Schmelzeleiterblocks angeordnet ist, wobei der Schmelzeleiter, insbesondere der Schmelzeleiterblock, ein statisches Funktionselement zur zumindest mittelbaren Beeinflussung der designierten Polymerschmelze aufweist.

Nach einem zweiten Aspekt der Erfindung wird die Aufgabe durch ein Extrusionswerkzeug für eine Extrusionsanlage zum Erzeugen von Extrusionsprodukten gelöst, umfassend einen Schmelzeleiter gemäß der zuvor beschriebenen Ausgestaltung, wobei der Schmelzeleiter dazu ausgebildet ist, mindestens eine Polymerschmelze zu verteilen und/oder zu mischen.

Unter einem "Extrusionswerkzeug" ist eine Baugruppe einer Extrusionsanlage zu verstehen, die ein oder mehrere Schmelzeleiter mit jeweils einem oder mehreren Schmelzeleiterblöcken umfasst. Das Extrusionswerkzeug wird mit Polymerschmelze gespeist, die zumindest mittelbar in den Schmelzeleiter bzw. ein Multikanalsystem eines Schmelzeleiterblocks des Schmelzeleiters geleitet wird. Stromauf des Extrusionswerkzeugs ist eine Bereitstellungseinheit in Form eines Extruders oder dergleichen zur Bereitstellung der designierten Polymerschmelze angeordnet. Stromab des Schmelzeleiters bzw. des jeweiligen Schmelzeleiterblocks ist vorzugsweise mindestens eine Extrusionsdüse angeordnet, die Teil des Extrusionswerkzeugs sein kann. Die Extrusionsdüse weist einen Extrusionsdüsenaustritt auf, der zur Zwischenformgebung oder endgültigen Formgebung des Extrusionsprodukts ausgebildet ist.

Alternativ kann der jeweilige Schmelzeleiterblock bereits eine einteilig damit verbundene Extrusionsdüse umfassen oder als Extrusionsdüse ausgebildet sein bzw. die Funktionen einer Extrusionsdüse übernehmen, sodass auf eine separate Extrusionsdüse verzichtet werden kann. Dazu ist der jeweilige Austritt des jeweiligen Multikanalsystems an der Austrittsseite des Schmelzeleiterblocks entsprechend ausgeformt und dimensioniert, sodass eine Verdüsung der designierten Polymerschmelze realisiert wird. In diesem Fall wird die Summe aller Austritte am Schmelzeleiterblock als Extrusionsdüsenaustritt bezeichnet, wobei der Extrusionsdüsenaustritt je nach Anordnung der Austritte zueinander in Höhe und Breite beliebig ausgestaltet sein kann. Der Extrusionsdüsenaustritt weist vorzugsweise eine um ein Vielfaches größere Breite als Höhe auf.

Ebenso wie der Schmelzeleiter können auch die separate Extrusionsdüse und dementsprechend auch der Extrusionsdüsenaustritt wenigstens teilweise mit einem additiven Herstellungsverfahren hergestellt werden. Ein additives Herstellverfahren ermöglicht besonders unkompliziert verschiedenste Geometrien der Extrusionsdüse und des Extrusionsdüsenaustritts sowie entsprechende Anschlussmittel zum form- und/oder kraftschlüssigen Anschluss der Extrusionsdüse an den Schmelzeleiter zu erzeugen.

Der Extrusionsdüsenaustritt des Extrusionswerkzeugs ist vorzugsweise mit einer Breite von mehr als 5.000 mm, bevorzugt von mehr als 6.000 mm oder mehr als 8.000 mm ausgebildet. Durch die wenigstens teilweise additive Fertigung des Extrusionswerkzeugs, insbesondere des Extrusionsdüsenaustritts, lassen sich bisher nicht mögliche Abmessungen realisieren. Insbesondere lässt sich die Extrusionsdüse sowie der Extrusionsdüsenaustritt in Übergröße herstellen. Zudem sind eine schnellere Herstellung und Nachlieferung verschlissener oder defekter Teile möglich. Des Weiteren kann die Extrusionsdüse und/oder der Extrusionsdüsenaustritt mehrteilig ausgebildet werden, wobei durch insbesondere passgenaue Bauteile mit geringen Toleranzen bereitgestellt werden können.

Es sei ausdrücklich darauf hingewiesen, dass eine Vorrichtung mit den Merkmalen der vorstehenden Absätze auch für sich genommen einen unabhängigen Aspekt der Erfindung darstellt, also unabhängig vom zuvor beschriebenen unabhängigen Patentanspruch. Eine als unabhängig und selbständig vorteilhaft offenbart zu verstehende Merkmalskombination wäre demnach wie folgt:

Schmelzeleiter, insbesondere Schmelzeverteiler oder Schmelzemischer, für ein Extrusionswerkzeug einer Extrusionsanlage, aufweisend einen Schmelzeleiterblock mit einem Multikanalsystem, wobei das Multikanalsystem sich dreidimensional erstreckend innerhalb des Schmelzeleiterblocks angeordnet ist, wobei der Schmelzeleiter, insbesondere der Schmelzeleiterblock, mit einer Breite von mehr als 5.000 mm, bevorzugt von mehr als 6.000 mm oder mehr als 8.000 mm ausgebildet ist.

In diesem Zusammenhang wäre eine weitere als unabhängig und selbständig vorteilhaft offenbart zu verstehende Merkmalskombination wie folgt:

Extrusionswerkzeug für eine Extrusionsanlage zum Erzeugen von Extrusionsprodukten, umfassend einen Extrusionsdüsenaustritt, der eine Breite von mehr als 5.000 mm, bevorzugt von mehr als 6.000 mm oder mehr als 8.000 mm aufweist.

Nach einem dritten Aspekt der Erfindung löst die Aufgabe eine Extrusionsanlage zum Erzeugen von Extrusionsprodukten, umfassend ein Extrusionswerkzeug gemäß der zuvor beschriebenen Art. Die Extrusionsanlage ist insbesondere zur Aufbereitung von Polymerschmelzen sowie zur Erzeugung von Extrusionsprodukten vorgesehen. Die Extrusionsanlage wird von einer Bereitstellungseinheit mit Polymerschmelze gespeist, die ein Silo und/oder einen Extruder oder dergleichen umfasst. Ein derartiges Extrusionswerkzeug hat den Vorteil, dass aufgrund dessen Herstellungsweise beispielsweise zu Instandhaltungs- und/oder Wartungsarbeiten ein besonders schneller und einfacher Wechsel des Schmelzeleiters, des Schmelzeleiterblocks, einer eventuellen Extrusionsdüse und/oder eines eventuellen Extrusionsdüsenaustritts an der Extrusionsdüse möglich ist. Zudem können Extrusionsprodukte in Übergröße, insbesondere in Überbreite, hergestellt werden, da das Extrusionswerkzeug in beliebiger Form und Größe, insbesondere in beliebiger Breite, ausgebildet sein kann. Des Weiteren ist eine mehrteilige Ausbildung des Schmelzeleiters mit mehreren parallel oder in Reihe geschalteter Schmelzeleiterblöcke möglich, um eine Herstellung von Extrusionsprodukten mit bisher nicht möglichen Abmessungen, insbesondere in Überbreite, zu realisieren.

Die erfindungsgemäße Extrusionsanlage mit dem erfindungsgemäßen Schmelzeleiter kann als Vorrichtung zur Herstellung von Filamenten oder Fäden ausgebildet sein. Derartige Vorrichtungen haben gemeinsam, dass sie einen punktförmigen Polymerschmelzeaustritt am Extrusionswerkzeug bzw. am Schmelzeleiterblock des Schmelzeleiters aufweisen, wobei austrittsseitig jeweils mehrere kleine Düsenbohrungen ausgebildet sind. Die Fäden formen als Endlosfilamente beispielsweise sogenannte Vliesstoffe, Mono- oder Multifilamente oder Bändchen. Der erfindungsgemäße Schmelzeleiter kommt dabei vorteilhafterweise als Schmelzeverteiler des formgebenden Extrusionswerkzeuges zur Verteilung der Polymerschmelze zum Einsatz.

Insbesondere kann der erfindungsgemäße Schmelzeleiter in einer Vorrichtung zur Herstellung von Vliesstoffen aus Endlosfilamenten (einer sogenannten Spinnvliesanlage), im Wesentlichen bestehend aus mindestens einer Spinneinrichtung zum Erspinnen der Filamente, einer Kühleinrichtung zum Kühlen der Filamente, einer Verstreckeinrichtung zum Strecken der Filamente, einer Ablageeinrichtung, insbesondere einem Ablagesiebband, zum Ablegen der Filamente zu einer Vliesbahn, einer Verfestigungseinrichtung zum Verfestigen der Filamente Vliesbahn und einer Wickeleinrichtung zum Aufwickeln der Vliesbahn, zum Einsatz kommen.

Dabei besteht die Spinneinrichtung im Wesentlichen aus mindestens einer gravimetrischen oder volumetrischen Dosiereinrichtung zur Dosierung und Zuführung mindestens einer Polymerkomponente zu einem Extruder bzw. zu einer Bereitstellungseinheit, mindestens einem Extruder bzw. einer Bereitstellungseinheit zum Verdichten, Aufschmelzen und Fördern der mindestens einen Polymerkomponente, mindestens einem Schmelzefilter, der idealerweise als Siebwechsler mit oder ohne automatischer Reinigung zum Filtern von Partikeln aus der Polymerschmelze, mindestens einer Schmelze- und/oder Spinnpumpe zum Fördern der Polymerschmelze, mindestens einem als Schmelzeverteiler ausgebildeten Schmelzeleiter, der die Polymerschmelze im Wesentlichen quer zur globalen Maschinenrichtung bzw. in sogenannter "Cross Direction" (CD) der Vorrichtung gleichmäßig verteilt, gegebenenfalls mindestens einem weiteren als Schmelzeverteiler ausgebildeten Schmelzeleiter, der die Polymerschmelze zusätzlich ebenfalls quer zur globalen Maschinenrichtung, jedoch auch senkrecht zur "Cross Direction" (CD) in eine sogenannte "Machine Direction" (MD) der Vorrichtung verteilt, einem ein- oder mehrreihigen Düsenwerkzeug des Extrusionswerkzeugs zur Erzeugung von Filamenten aus Polymerschmelze und Rohr- und/oder Schlauchleitungen zur Verbindung der vorstehenden Einrichtungen. Der erfindungsgemäße Schmelzeleiter kommt somit insbesondere als Schmelzeverteiler zur Verteilung der Polymerschmelze zum Einsatz.

Die Erfindung kann ebenso in einer Vorrichtung zur Herstellung von Vliesstoffen aus ultrafeinen Endlosfilamenten (einer sogenannten Schmelzblasanlage), im Wesentlichen bestehend aus mindestens einer Blaseinrichtung zur Erzeugung und anschließender Kühlung ultrafeiner Filamente, einer Ablageeinrichtung, insbesondere einer Ablagewalze, zum Ablegen der ultrafeinen Filamente zu einer Vliesbahn, einer Verfestigungseinrichtung zum Verfestigen der Filamente Vliesbahn und einer Wickeleinrichtung zum Aufwickeln der Vliesbahn, zum Einsatz kommen.

Dabei besteht die Spinneinrichtung im Wesentlichen aus mindestens einer gravimetrischen oder volumetrischen Dosiereinrichtung zur Dosierung und Zuführung mindestens einer Polymerkomponente zu einem Extruder bzw. zu einer Bereitstellungseinheit, mindestens einem Extruder bzw. eine Bereitstellungseinheit zum Verdichten und Aufschmelzen der mindestens einen Polymerkomponente, mindestens einem Schmelzefilter, der idealerweise als Siebwechsler mit oder ohne automatischer Reinigung zum Filtern von Partikeln aus der Polymerschmelze, mindestens einer Schmelze- und/oder Spinnpumpe zum Aufbau eines kontinuierlichen Druckes der Polymerschmelze, mindestens einem als Schmelzeverteiler ausgebildeten Schmelzeleiter der die Polymerschmelze in "Cross Direction" (CD) der Vorrichtung gleichmäßig verteilt, gegebenenfalls mindestens einem weiteren als Schmelzeverteiler ausgebildeten Schmelzeleiter der die Polymerschmelze zusätzlich in "Machine Direction" (MD) der Vorrichtung verteilt, einem ein- oder mehrreihigen Düsenwerkzeug des Extrusionswerkzeugs zur Erzeugung von ultrafeinen Filamenten aus Polymerschmelze und Rohr- und/oder Schlauchleitungen zur Verbindung der vorstehenden Einrichtungen. Der erfindungsgemäße Schmelzeleiter kommt somit insbesondere als Schmelzeverteiler zum Verteilen der Polymerschmelze zum Einsatz.

Die erfindungsgemäße Extrusionsanlage mit dem erfindungsgemäßen Schmelzeleiter kann in einer weiteren Variante eine Vorrichtung zur Herstellung von Platten oder Flachfolien sein. Derartige Vorrichtungen haben gemeinsam, dass ein linienförmiger Polymerschmelzeaustritt am Extrusionswerkzeug, insbesondere am Schmelzeleiterblock des Schmelzeleiters, ausgebildet ist, wodurch das Extrusionsprodukt wenigstens eine Ober- und Unterseite erhält. Der erfindungsgemäße Schmelzeleiter kommt dabei vorteilhafterweise als Schmelzeverteiler des formgebenden Extrusionswerkzeuges zur Verteilung der Polymerschmelze zum Einsatz.

In einer weiteren Variante kann erfindungsgemäße Schmelzeleiter in einer Vorrichtung zur Herstellung von Flachfolien (einer sogenannten Flachfolienanlage), umfassend eine Einrichtung zum Bereitstellen einer Polymerschmelze, einer Breitschlitzdüse bzw. ein Werkzeug zum Erzeugen eines tafelförmigen Polymerschmelzestroms und einer Kühlwalzeneinheit zum Einsatz kommen.

Dabei besteht die Einrichtung zum Bereitstellen einer Polymerschmelze aus mindestens einer gravimetrischen oder volumetrischen Dosiereinrichtung zur Dosierung und Zuführung mindestens einer Polymerkomponente zum Extruder, mindestens einem Extruder zum Verdichten, Aufschmelzen und Fördern der mindestens einen Polymerkomponente, mindestens einem Schmelzefilter, der idealerweise als Siebwechsler mit oder ohne automatischer Reinigung zum Filtern von Partikeln aus der Polymerschmelze, optional aus einer Schmelze- und/oder Spinnpumpe zum Fördern der Polymerschmelze, optional aus einem Schmelzemischer zum Erzeugen eines mehrlagigen Aufbau des Schmelzestroms, einem als Schmelzeverteiler ausgebildeten Schmelzeleiter zur Verteilung des Schmelzestroms in "Cross Direction" (CD), einer als Breitschlitzdüse ausgebildeten Extrusionsdüse zum Formen eines tafelförmigen Polymerschmelzestroms und Rohr- und/oder Schlauchleitungen zur Verbindung der vorstehenden Einrichtungen. Es ist bei derartigen Vorrichtungen denkbar, den Schmelzeleiter als Schmelzeverteiler, als Schmelzemischer sowie in einer Kombination aus Schmelzeverteiler und Schmelzemischer auszubilden.

Die erfindungsgemäße Extrusionsanlage mit dem erfindungsgemäßen Schmelzeleiter kann in einer weiteren Variante als Vorrichtung zur Herstellung von Rohren, Profilen oder Schläuchen ausgebildet sein. Solche Vorrichtungen sehen einen Polymerschmelzeaustritt vor, der durch entsprechend ausgebildete Schmelzekanalführung und/oder ergänzende Einbauten innenliegende und außenliegende Oberflächen des Extrusionsprodukts erzeugt. Der erfindungsgemäße Schmelzeleiter kommt dabei vorteilhafterweise als Schmelzeverteiler des formgebenden Extrusionswerkzeuges zur Verteilung der Polymerschmelze zum Einsatz.

Die erfindungsgemäße Extrusionsanlage mit dem erfindungsgemäßen Schmelzeleiter kann in einer weiteren Variante als Vorrichtung zur Herstellung einer Schlauchfolie ausgebildet sein. Ein solche Vorrichtung weist einen wenigstens teilweise kreislinienförmig ausgebildeten Polymerschmelzeaustritt am Extrusionswerkzeug auf, der einen Ringspalt umfasst, wodurch das Extrusionsprodukt eine Innen- und Außenseite erhält. Der erfindungsgemäße Schmelzeleiter kommt dabei vorteilhafterweise als Schmelzeverteiler des formgebenden Extrusionswerkzeuges zur Verteilung der Polymerschmelze zum Einsatz.

Insbesondere kann der erfindungsgemäße Schmelzeleiter in einer Vorrichtung zur Herstellung von Blasfolien (einer sogenannten Blasfolienanlage), im Wesentlichen bestehend aus einer Einrichtung zum Bereitstellen einer Polymerschmelze bzw. einer Bereitstellungseinheit, einem Blaskopf zum Erzeugen eines Folienschlauches, einer Abzugseinrichtung zum Abziehen und Quer- und Längsverstrecken des Folienschlauches in Extrusionsrichtung und einer Kühleinrichtung zum Kühlen des Folienschlauches, zum Einsatz kommen.

Dabei besteht die Einrichtung zum Bereitstellen einer Polymerschmelze bzw. die Bereitstellungseinheit aus mindestens einer gravimetrischen oder volumetrischen Dosiereinrichtung zur Dosierung und Zuführung mindestens einer Polymerkomponente zum Extruder, mindestens einem Extruder zum Verdichten, Aufschmelzen und Fördern der mindestens einen Polymerkomponente, mindestens einem Schmelzefilter, der idealerweise als Siebwechsler mit oder ohne automatischer Reinigung zum Filtern von Partikeln aus der Polymerschmelze, optional aus einer Schmelze- und/oder Spinnpumpe zum Fördern der Polymerschmelze, und Rohr- und/oder Schlauchleitungen zur Verbindung der vorstehenden Einrichtungen und des Blaskopfes, wobei zumindest der Blaskopf als Extrusionswerkzeug gemäß der Erfindung mit im Blaskopf integriertem Schmelzeverteiler, insbesondere Wendelverteiler oder Plattenverteiler, zu verstehen ist, der Blaskopf umfassend eine Ringschlitzdüse mit Wendelverteiler, insbesondere einem Radialwendelverteiler zum Formen eines ein- oder mehrschichtigen ringförmigen Polymerschmelzestroms sowie eine Aufblaseinrichtung zum Aufblasen eines Folienschlauches. Der erfindungsgemäße Schmelzeleiter kommt somit insbesondere als Schmelzeverteiler zur Verteilung der Polymerschmelze zum Einsatz.

Nach einem vierten Aspekt der Erfindung löst die Aufgabe ein Verfahren zum Betreiben einer Extrusionsanlage gemäß der zuvor beschriebenen Ausgestaltung, wobei der Extrusionsanlage mindestens ein extrudierfähiges Polymer, insbesondere mindestens ein Kunststoff, zugeführt wird, welches zu einer jeweiligen Polymerschmelze plastifiziert wird, wobei die jeweilige Polymerschmelze einem Schmelzeleiter gemäß der zuvor beschriebenen Art zugeführt wird, der die jeweilige Polymerschmelze verteilt und/oder mischt.

Die Zuführung des extrudierfähigen Polymers erfolgt beispielsweise über ein Silo oder eine Fördereinrichtung, die entweder Teil der Extrusionsanlage oder ein separates Bauteil oder Baugruppe ist. Das extrudierfähige Polymer kann als Granulat, also in im Wesentlichen fester Form, oder als wenigstens teilweise aufgeschmolzene Schmelze der Extrusionsanlage zugeführt werden.

Granulat kann nach dessen Zuführung in die Extrusionsanlage von einer Bereitstellungseinheit, insbesondere einem Extruder oder dergleichen, weiterverarbeitet und durch Aufschmelzen und/oder weiteren Bearbeitungsschritten derart plastifiziert werden, dass es dem Schmelzeleiter als Polymerschmelze zur Zusammenführung und/oder Aufteilung zugeführt werden kann. Nach Aufteilung und/oder Zusammenführung der Polymerschmelze kann diese aus dem Schmelzeleiter einer Extrusionsdüse zugeführt werden, die die Polymerschmelze zur Erzeugung des Extrusionsprodukts weiterverarbeitet.

Vorteilhaft bei einer derartigen Anlage ist, dass eine Anlage mit einem solchen Extrusionswerkzeug sehr viel wirtschaftlicher betrieben werden kann, weil Produktwechselzeiten bei einem Polymerwechsel deutlich kürzer sind und die Gesamtlaufzeit des Extrusionswerkzeuges vor einer Werkzeugreinigung deutlich länger sind. Mithin werden Umspülzeiten optimiert.

Alle im Rahmen dieser Erfindung als additiv hergestelltes Bauteil beschriebenen Komponenten der Extrusionsanlage, insbesondere das Extrusionswerkzeug, der Schmelzeleiter und der Schmelzeleiterblock, sind aus einem zur additiven Fertigung und/oder Guss geeigneten Material ausgebildet. Als Material eignet sich insbesondere Metall, Kunststoff und/oder Keramik. Unter dem Begriff "Kunststoff" sind vorzugsweise Hochleistungskunststoffe zu verstehen, die Betriebstemperaturen des Extrusionswerkzeugs von über 200 °C ermöglichen. Ein Vorteil von aus Keramik additiv hergestellten Bauteilen, insbesondere von aus Keramik additiv hergestellten Schmelzekanälen, ist die Minimierung von Ablagerungen. Vorteilhafterweise sind die Flächen der Schmelzekanäle, die in direkten Kontakt mit der Polymerschmelze kommen, als eine ein- oder mehrlagige Keramikschicht in Form eines Inliners, in einem aus einem im Gegensatz zum bestehenden Schmelzeleiterblock verschiedenen Material ausgebildet. Mit anderen Worten können die Kanäle des jeweiligen Multikanalsystems wenigstens abschnittsweise eine ein- oder mehrlagige Keramikschicht zur Kanaloberflächenmodifikation aufweisen. Es ist jedoch auch denkbar, den gesamten Schmelzeleiterblock ganz oder teilweise aus Keramik auszubilden. Mit anderen Worten kann der Schmelzeleiterblock mit dem Multikanalsystem segmentweise aus unterschiedlichen Werkstoffen bestehen, deren Vorteile für den jeweiligen Anwendungsfall nutzbar sind. Dies können insbesondere unterschiedliche Metalle sein, oder auch eine Kombination aus Metall, Keramik und/oder Kunststoff.

Je nach Material des Schmelzeleiterblocks und/oder der Kanäle des Multikanalsystems kann alternativ eine Oberflächenbehandlung zur Veredelung der Oberfläche der Kanäle des Multikanalsystems erfolgen. Dies kann eine Wärmebehandlung, eine chemische Gasphasenabscheidung, eine physikalische Gasphasenabscheidung, ein Infiltrieren oder dergleichen umfassen. Dadurch wird eine Beschichtung in einer oder mehreren Lagen, insbesondere an den Kanaloberflächen des Multikanalsystems, ausgebildet, wodurch die Oberflächenbeschaffenheit der Kanäle des Multikanalsystems beeinflusst wird, sodass vorteilhafterweise Fließeigenschaften der Polymerschmelze verbessert und Ablagerungen innerhalb des Multikanalsystems reduziert werden.

Nach Herstellung des Schmelzeleiterblocks kann die Innenfläche der Kanäle des Multikanalsystems und, sofern vorgesehen, die Beschichtung der Kanäle nachbearbeitet bzw. nachbehandelt werden. Dies kann zum einen ein Reinigen und/oder Spülen des Multikanalsystems umfassen. Des Weiteren ist denkbar, ein Strömungsschleifen der Kanäle des Multikanalsystems durchzuführen. Diese Schritte können auch in Wartungsintervallen oder bei Produktwechseln durchgeführt werden, um eventuelle Ablagerungen im Multikanalsystem zu lösen und entsprechend zu entfernen.

Es versteht sich, dass Merkmale der vorstehend bzw. in den Ansprüchen beschriebenen Lösungen gegebenenfalls auch kombiniert werden können, um die vorliegend erzielbaren Vorteile und Effekte entsprechend kumuliert umsetzen zu können.

Weitere Merkmale, Effekte und Vorteile vorliegender Erfindung sind anhand der Zeichnung und nachfolgender Beschreibung erläutert, in welchen beispielhaft eine kontinuierlich polymerverarbeitende Extrusionsanlage und Ausführungsbeispiele zu verschiedenen Schmelzeleitern dargestellt und beschrieben sind.

Komponenten, welche in den einzelnen Figuren wenigstens im Wesentlichen hinsichtlich ihrer Funktion übereinstimmen, können hierbei mit gleichen Bezugszeichen gekennzeichnet sein, wobei die Komponenten nicht in allen Figuren beziffert und erläutert sein müssen.

In der Zeichnung zeigen

Fig. 1    eine schematische Ansicht eines möglichen Aufbaus einer Extrusionsanlage mit einem Schmelzeleiter, umfassend einen Schmelzeleiterblock und ein Multikanalsystem nach einer ersten Alternative,

Fig. 2A    eine schematische Perspektivansicht des Multikanalsystems gemäß Fig. 1, wobei der Schmelzeleiter als Schmelzeverteiler ausgebildet ist;

Fig. 2B    eine schematische Schnittdarstellung zwei in Fließrichtung einer designierten Polymerschmelze nachgelagerter Schmelzekanäle;

Fig. 3    eine schematische Perspektivansicht eines zweiten alternativen Ausführungsbeispiels des Multikanalsystems, wobei der Schmelzeleiter als Schmelzemischer ausgebildet ist;

Fig. 4    eine schematische Perspektivansicht eines dritten alternativen Ausführungsbeispiels des Multikanalsystems, wobei der Schmelzeleiter teilweise als Schmelzeverteiler und teilweise als Schmelzemischer ausgebildet ist;

Fig. 5    eine schematische Perspektivansicht eines vierten alternativen Ausführungsbeispiels des Multikanalsystems, wobei der Schmelzeleiter teilweise als Schmelzemischer und teilweise als Schmelzeverteiler ausgebildet ist;

Fig. 6A    eine schematische Perspektivansicht eines fünften alternativen Ausführungsbeispiels des Multikanalsystems, wobei der Schmelzeleiter als Schmelzeverteiler ausgebildet ist;

Fig. 6B    eine weitere schematische Perspektivansicht des fünften alternativen Ausführungsbeispiels gemäß Fig. 6A;

Fig. 7A    eine schematische Draufsicht eines sechsten alternativen Ausführungsbeispiels des Multikanalsystems, wobei der Schmelzeleiter als Schmelzeverteiler ausgebildet ist;

Fig. 7B    eine schematische Perspektivansicht des sechsten alternativen Ausführungsbeispiels gemäß Fig. 7A;

Fig. 7C    eine weitere schematische Perspektivansicht des sechsten alternativen Ausführungsbeispiels gemäß Fig. 7A und Fig. 7B;

Fig. 7D    eine weitere schematische Perspektivansicht des sechsten alternativen Ausführungsbeispiels gemäß Fig. 7A bis Fig. 7C;

Fig. 8    eine schematische Draufsicht eines siebten alternativen Ausführungsbeispiels des Multikanalsystems, wobei der Schmelzeleiter als Schmelzeverteiler ausgebildet ist;

Fig. 9    eine schematische Perspektivansicht einer exemplarischen Verzweigung eines achten alternativen Ausführungsbeispiels des Multikanalsystems,

Fig. 10    eine schematische Perspektivansicht einer exemplarischen Verzweigung eines neunten alternativen Ausführungsbeispiels des Multikanalsystems,

Fig. 11    eine schematische Perspektivansicht eines zehnten alternativen Ausführungsbeispiels des Multikanalsystems, wobei der Schmelzeleiter als Schmelzeverteiler ausgebildet ist;

Fig. 12    eine schematische Perspektivansicht eines elften alternativen Ausführungsbeispiels des Multikanalsystems, wobei der Schmelzeleiter als Schmelzeverteiler ausgebildet ist;

Fig. 13A    eine schematische Perspektivansicht eines zwölften alternativen Ausführungsbeispiels des Multikanalsystems, wobei der Schmelzeleiter als Schmelzeverteiler ausgebildet ist;

Fig. 13B    eine schematische Draufsicht des zwölften alternativen Ausführungsbeispiels gemäß Fig. 13A;

Fig. 13C    eine weitere schematische Perspektivansicht des zwölften alternativen Ausführungsbeispiels gemäß Fig. 13A und Fig. 13B;

Fig. 13D    eine weitere schematische Perspektivansicht des zwölften alternativen Ausführungsbeispiels gemäß Fig. 13A bis Fig. 13C;

Fig. 14A    eine schematische Perspektivansicht eines dreizehnten alternativen Ausführungsbeispiels des Multikanalsystems, wobei der Schmelzeleiter als Schmelzeverteiler ausgebildet ist;

Fig. 14B    eine schematische Draufsicht des dreizehn- ten alternativen Ausführungsbeispiels ge- mäß Fig. 14A;

Fig. 14C    eine weitere schematische Perspektivan- sicht des dreizehnten alternativen Ausfüh- rungsbeispiels gemäß Fig. 14A und Fig. 14B;

Fig. 15A    eine schematische Perspektivansicht eines vierzehnten alternativen Ausführungsbeispiels des Multikanalsystems, wobei der Schmelzeleiter als Schmelzeverteiler ausgebildet ist;

Fig. 15B    eine schematische Draufsicht des vierzehn- ten alternativen Ausführungsbeispiels ge- mäß Fig. 15A;

Fig. 16A    eine schematische Ansicht eines fünfzehnten alternativen Ausführungsbeispiels des Multikanalsystems; wobei der Schmelzeleiter als Schmelzeverteiler ausgebildet ist; und

Fig. 16B    eine schematische Seitenansicht des fünfzehnten alternativen Ausführungsbeispiels gemäß Fig. 16A.

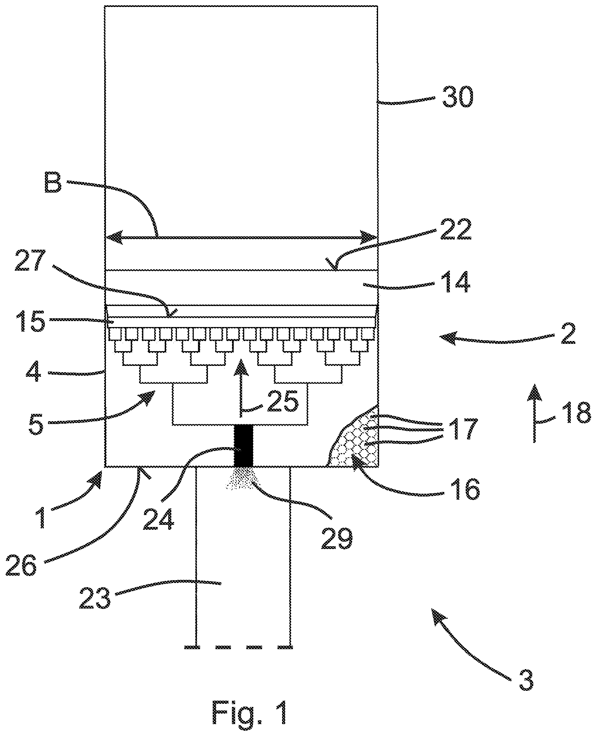

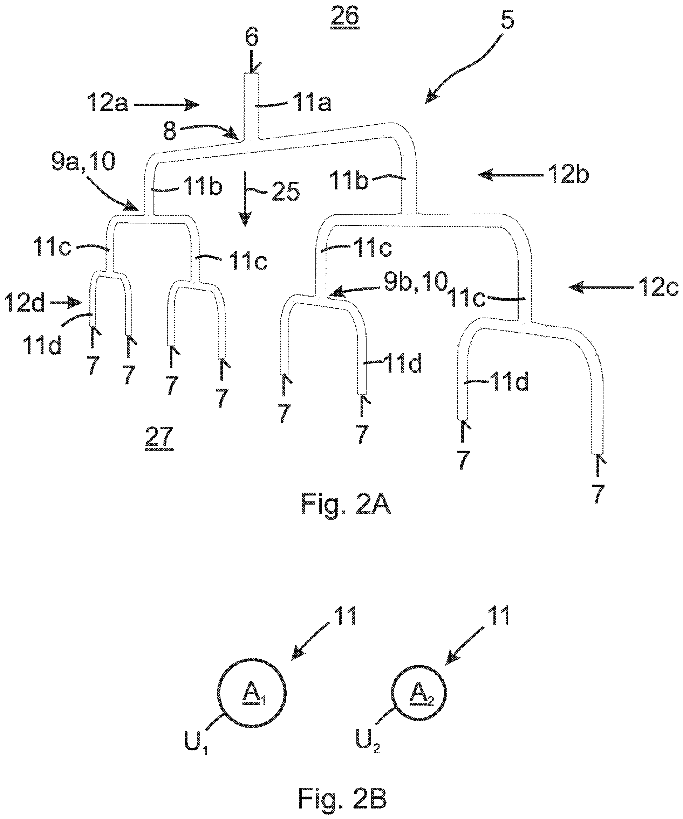

In Fig. 1 ist eine Extrusionsanlage 3 stark vereinfacht dargestellt. Die Extrusionsanlage 3 umfasst eine Bereitstellungseinheit 23, die dazu ausgebildet ist, eine Polymerschmelze 24, vorliegend einen Kunststoff, be- reitzustellen und aufzubereiten. Die Bereitstellungsein- heit 23 ist vorliegend als - hier nicht näher dargestellter - Extruder ausgebildet, der mindestens ein extrudierfähiges Polymer 29 zur Polymerschmelze 24 plastifiziert. Die Bereitstellungseinheit 23 kann auch zum Bereitstellen von einer oder mehreren unterschiedlichen Polymerschmelzen 24 mit gleichen oder unterschiedlichen Eigenschaften ausgebildet sein. Die Polymerschmelze 24 wird von der Bereitstellungseinheit 23 kontinuierlich in ein Extrusionswerkzeug 2, umfassend einen Schmelzeleiter 1 und eine in designierter Fließrichtung 25 der Polymerschmelze 24 nachgelagerte Extrusionsdüse 14 gefördert. Das Extrusionswerkzeug 2 ist in der kontinuierlich arbeitenden Extrusionsanlage 3 integriert, an welcher die Polymerschmelze 24 in einer globalen Maschinenrichtung 18 kontinuierlich durch den Schmelzeleiter 1 gefördert wird, wobei sich die Bezeichnungen "stromab" und "stromauf" auf diese globale Maschinenrichtung 18 beziehen.
Der Schmelzeleiter 1, der gemäß diesem ersten Ausführungsbeispiel als Schmelzeverteiler ausgebildet ist, weist einen Schmelzeleiterblock 4 mit einem sich dreidimensional innerhalb des Schmelzeleiterblocks 4 erstreckenden Multikanalsystem 5 auf. Der Schmelzeleiterblock 4 ist mittels eines additiven Herstellungsverfahrens hergestellt und als auswechselbares Bauteil des Schmelzeleiters 1 in die kontinuierlich arbeitende Extrusionsanlage 3 integrierbar. Das Multikanalsystem 5 gemäß der ersten Ausführungsform ist in Fig. 2A näher dargestellt.
Die Bereitstellungseinheit 23 ist an einer Eintrittsseite 26 des Schmelzeleiterblocks 4 angeflanscht, wobei an der Austrittsseite 27 des Schmelzeleiterblocks 4 die Extrusionsdüse 14 ausgeformt ist, und zwar derart, dass auch die Extrusionsdüse 14 mittels eines additiven Herstellverfahrens gefertigt ist, nämlich gemeinsam mit dem Schmelzeleiterblock 4. An der Austrittsseite 27 des Schmelzeleiterblocks 4 ist ein Sammelraum 15 ausgebildet, in den das Multikanalsystem 5 mündet, wobei der Sammelraum 15 dazu ausgebildet ist, die mit dem als Schmelzeverteiler ausgebildeten Schmelzeleiter 1 verteilte Polymerschmelze 24 aufzunehmen und der Extrusionsdüse 14 kontinuierlich zuzuführen. Das Multikanalsystem 5 weist, wie in Fig. 2A bis Fig. 16B zu sehen ist, Austritte 7 auf, die dazu ausgebildet sind, die Polymerschmelze 24 zur Speisung der Extrusionsdüse 14 in den Sammelraum 15 zu führen. Die in Fig. 1 gezeigte Extrusionsdüse 14 besitzt einen Extrusionsdüsenaustritt 22 mit einer Breite B von mehr als 5.000 mm. Die Breite B definiert die Breite eines durch die Extrusionsanlage hergestelltes Extrusionsprodukt 30, das gemäß Fig. 1 als Folie ausgebildet ist.
Bei Fertigung des Schmelzeleiterblocks 4 in additiver Bauweise wird ein Hohlkammersystem 16 mit einer Vielzahl wabenförmig geformter Hohlkammern 17 ausgebildet, sodass das Hohlkammersystem 16 den Schmelzeleiterblock 4 bildet. Das Hohlkammersystem 16 ist hier nur angedeutet, es erstreckt sich jedoch im Wesentlichen durch den gesamten Schmelzeleiterblock 4. Das Hohlkammersystem 16 nimmt das Multikanalsystem 5 auf, das ebenfalls mittels eines additiven Herstellverfahrens gefertigt ist. Insofern wird das Multikanalsystem 5 durch das räumlich um das Multikanalsystem 5 herum angeordnete Hohlkammersystem 16 gestützt.
Der Schmelzeleiter 1 verteilt die Polymerschmelze 24 nach Fig. 2A im Multikanalsystem 5 bezogen auf dessen designierte Fließrichtung 25 von einem an einer Eintrittsseite 26 des in diesem Fall als Schmelzeverteilerblocks ausgebildeten Schmelzeleiterblocks 4 angeordneten Eintritt 6 über mehrere hintereinander angeordnete Verzweigungen 8, mehrere Generationen 9a, 9b Weiterverzweigungen 10 sowie mehrere dazwischen angeordnete Generationen aufgeteilter Schmelzekanäle 11 zu einer Vielzahl von fluidisch mit dem Eintritt 6 verbundenen und an einer Austrittsseite 27 des Schmelzeleiterblocks 4 angeordneten Austritte 7. Das Multikanalsystem 5 weist somit einen Eintritt 6 und eine Vielzahl von fluidisch mit dem Eintritt 6 verbundenen Austritten 7 auf. Der Eintritt 6 an der Eintrittsseite 26 des Schmelzeleiterblocks 4 ist folglich als Eintrittsöffnung ausgebildet, durch welchen hindurch die Polymerschmelze 24 in das Multikanalsystem 5 des Schmelzeleiterblocks 4 eingespeist wird.

Zur Vereinfachung ist das Multikanalsystem 5 in Fig. 2A lediglich mit einer Verzweigung 8 und zwei Generationen 9a, 9b Weiterverzweigungen 10 dargestellt. Die weiteren Weiterverzweigungen 10 und Schmelzekanäle sind im Wesentlichen analog dazu ausgebildet, um die Polymerschmelze 24 auf die entsprechende Breite B für den Extrusionsdüsenaustritt 22 zu verteilen. Somit sind auch drei oder mehr Generationen Weiterverzweigungen 10 denkbar. In designierter Fließrichtung 25 der Polymerschmelze 24 ist zwischen dem Eintritt 6 und der Verzweigung 8 ein Schmelzekanal 11a a-ter Generation 12a angeordnet, zwischen der Verzweigung 8 und der ersten Generation 9a Weiterverzweigungen 10 eine b-te Generation 12b Schmelzekanäle 11b, und zwischen der ersten Generation 9a Weiterverzweigungen 10 und der zweiten Generation 9b Weiterverzweigungen 10 eine c-te Generation 12c Schmelzekanäle 11c angeordnet. Der zweiten Generation 9b Weiterverzweigungen 10 ist außerdem eine d-te Generation 12d Schmelzekanäle 11d nachgelagert. Fig. 2A zeigt ferner, dass die Anzahl der Schmelzekanäle 11 mit zunehmender Generation zunimmt, und zwar werden aus einem Schmelzekanal 11a der a-ten Generation jeweils zwei Schmelzekanäle 11b der b-ten Generation, aus den zwei Schmelzekanälen 11b der b-ten Generation werden jeweils wiederum zwei Schmelzekanäle 11c der c-ten Generation, also in Summe vier Schmelzekanäle 11c gebildet werden, und so weiter. Anders gesagt verdoppelt sich die Anzahl der Schmelzekanäle 11 von Generation zu in Fließrichtung 25 nachgelagerter Generation. Insofern ist auch das Multikanalsystem 5 und dessen einzelne Kavitäten, vorliegend als Schmelzekanäle 11, Verzweigung 8 und Weiterverzweigungen 10 ausgebildet, mittels des additiven Herstellungsverfahrens gefertigt. Ferner können weitere Kavitäten beispielsweise als Sammelraum 15, lokale Aufweitungen 28 oder Zusammenführungen 13 vorgesehen sein, auf die in der weiteren Beschreibung alternativer Ausführungsbeispiele näher eingegangen wird. Außerdem können die Kavitäten als Verteil- oder Mischkammern (hier nicht gezeigt) oder dergleichen ausgebildet sein.

Gemäß diesem Ausführungsbeispiel weist der Schmelzekanal 11a a-ter Generation 12a einen ersten lokalen Querschnitt auf, der kleiner ausgebildet ist als der zweite lokale Querschnitt der aufgeteilten Schmelzekanäle 11b b-ter Generation 12b. Jeder lokale Querschnitt der aufgeteilten Schmelzekanäle 11b b-ter Generation 12b ist wiederum größer als der lokale Querschnitt der daraus aufgeteilten Schmelzekanäle 11c c-ter Generation 12c, und so weiter.

Der Zusammenhang der lokalen Querschnitte einer Generation Schmelzekanäle 11 und einer direkt vor- oder nachgelagerten Generation Schmelzekanäle 11 ist insbesondere bei konstruktiv einfach ausgebildeten Schmelzekanälen 11 bestimmbar anhand des Umfangs und einer Querschnittsfläche des jeweiligen Schmelzekanals. Dies zeigt Fig. 2B exemplarisch. Und zwar werden ein Umfang $U_2$ und eine Querschnittsfläche $A_2$ von wenigstens zwei aus einem gemeinsamen Schmelzekanal 11a entspringenden und aufgeteilten Schmelzekanälen 11b in Abhängigkeit von

$$\frac{U_1^x}{A_1^{x+1}} = \frac{1}{n_K} * \frac{U_2^x}{A_2^{x+1}}$$

dimensioniert, wobei $U_1$ der erste Umfang und $A_1$ die erste Querschnittsfläche des gemeinsamen Schmelzekanals 11a ist, wobei $U_2$ der zweite Umfang und $A_2$ die zweite Querschnittsfläche eines der aufgeteilten Schmelzekanäle 11b ist, wobei $n_K$ die Gesamtanzahl der aufgeteilten Schmelzekanäle 11b ist, und wobei x größer oder gleich -0,5 ist, vorzugsweise mindestens ein Wert von 0,5 ist, bevorzugt mindestens ein Wert von 0,75 ist, und wobei x höchstens ein Wert von 4 ist, bevorzugt höchstens ein Wert von 2,5 ist, ferner bevorzugt höchstens ein Wert von 1,5 ist.

Für Querschnittsgeometrien der Schmelzekanäle, bei denen sich im lokalen Querschnitt des jeweiligen Schmelzekanals die schmalste und breiteste Stelle annähern, kann es demgegenüber vorteilhaft sein, lediglich einen Zusammenhang zwischen einer erste Querschnittsfläche $A_1$ eines aufzuteilenden Schmelzekanals 11a und einer zweiten Querschnittsfläche $A_2$ eines aufgeteilten Schmelzekanals 11b in Abhängigkeit der Anzahl $n_K$ aufgeteilter Schmelzekanäle 11b zu erstellen. Beispielsweise bei in Kreisform ausgebildeten Querschnitten sind die schmalste und breiteste Stelle des lokalen Querschnitts des jeweiligen Schmelzekanals 11a, 11b identisch und entsprechen dem Durchmesser.

Insoweit kann ein Querschnitt $A_2$ von wenigstens zwei aus einem gemeinsamen Schmelzekanal 11a entspringenden und aufgeteilten Schmelzekanälen 11b in Abhängigkeit von

$$A_2 = A_1 * 1/ n_K^{2/y}$$

dimensioniert sein, wobei $A_1$ die erste Querschnittsfläche des gemeinsamen Schmelzekanals 11a ist, wobei $A_2$ die zweite Querschnittsfläche eines der aufgeteilten Schmelzekanäle 11b ist, wobei $n_K$ die Gesamtanzahl der aufgeteilten Schmelzekanäle 11b ist, und wobei y mindestens ein Wert von 2, bevorzugt mindestens ein Wert von 2,5, ferner bevorzugt mindestens ein Wert von 2,85 ist, und wobei y höchstens ein Wert von 7, bevorzugt höchstens ein Wert von 5, ferner bevorzugt höchstens ein Wert von 3,35 ist. Dies ist insbesondere dann vorteilhaft, wenn die Schmelzekanäle 11 des Multikanalsystems 5 über mindestens die Hälfte der Länge des jeweiligen Schmelzekanals 11, vorzugsweise über mindestens 2/3 der Länge des jeweiligen Schmelzekanals 11, bevorzugt über mindestens 3/4 der Länge des jeweiligen Schmelzekanals 11 eine von einer kreisrunden Querschnittsform verschiedene lokale Querschnittsform aufweisen. Dieser geometrische Zusammenhang zwischen den Schmelzekanälen 11 ist auf alle vorliegend beschriebenen Ausführungsbeispiele anwendbar.

Vorliegend ist der Schmelzekanal 11a a-ter Generation 12a in designierter Fließrichtung 25 der Polymerschmelze 24 dem Eintritt 6 und die Schmelzekanäle 11b b-ter Generation 12b gegenüber dem Schmelzekanal 11a a-ter Generation 12a dem Austritt 7 zu orientieren. Die Schmelzekanäle 11c c-ter Generation 12c sind gegenüber den Schmelzekanälen 11d d-ter Generation 12d dem Eintritt 6 zu orientieren, wobei die Schmelzekanäle 11d d-ter Generation 12d bezogen auf die Schmelzekanäle 11 a-ter, b-ter und c-ter Generation 12a, 12b, 12c dem jeweiligen Austritt 7 zu orientieren sind. Daraus ergibt sich, dass der Schmelzeleiter 1 als Schmelzeverteiler fungiert.

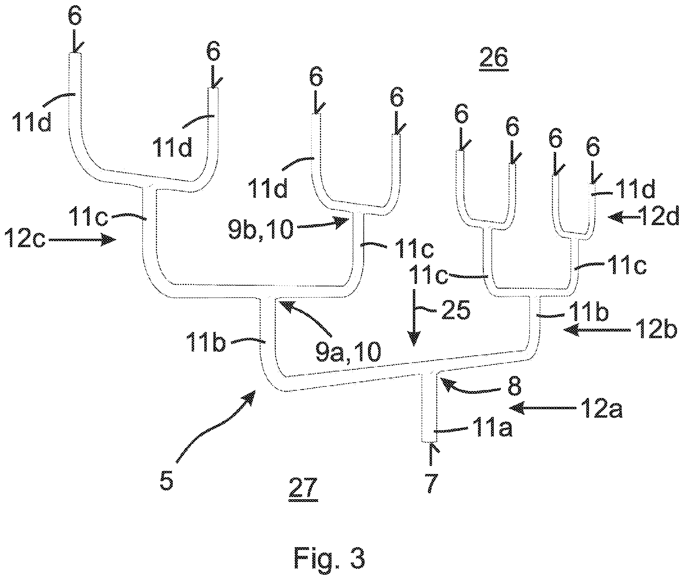

Nach Fig. 3, einem zweiten alternativen Multikanalsystem 5 eines - hier nicht gezeigten - zweiten alternativen Schmelzeleiterblocks 4, ist der Schmelzeleiter 1 im Gegensatz zu Fig. 2A umgekehrt im Extrusionswerkzeug 2 und in der Extrusionsanlage 3 angeordnet, sodass er gemäß diesem alternativen Ausführungsbeispiel als Schmelzemischer ausgebildet ist. Dies ergibt sich daraus, dass der Schmelzeleiter 1 eine Vielzahl, vorliegend acht Eintritte 6 an der Eintrittsseite 26 des Schmelzeleiterblocks 4 aufweist, über die eine oder bis zu acht gleiche oder wenigstens teilweise unterschiedliche Polymerschmelzen 24 zu einem fluidisch mit den Eintritten 6 verbundenen und an der Austrittsseite 27 des Schmelzeleiterblocks 4 angeordneten Austritt 7 zusammengeführt werden. Vorliegend ist der Schmelzeleiterblock 4 nicht gezeigt, sondern zur besseren Veranschaulichung nur das Multikanalsystem 5. Das Multikanalsystem 5 ist im Wesentlichen identisch zum Ausführungsbeispiel nach Fig. 1 und Fig. 2A ausgebildet. Der einzige Unterschied besteht darin, dass die Polymerschmelze 24 durch das Multikanalsystem 5 nicht verteilt wird, sondern dass bis zu acht verschiedene Polymerschmelzen 24 mittels des Multikanalsystems 5 zusammengeführt werden können. Das Multikanalsystem 5 weist vorliegend ebenfalls mehrere hintereinander angeordnete Verzweigungen 8, mehrere Generationen 9a, 9b Weiterverzweigungen 10 sowie mehrere dazwischen angeordnete Generationen 12a, 12b, 12c, 12d aufgeteilter Schmelzekanäle 11a, 11b, 11c, 11d auf, jedoch ist dies entgegen der designierten Fließrichtung 25 der Polymerschmelze 24 zu betrachten, und zwar von der Austrittsseite 27 zur Eintrittsseite 26.

Entgegen der designierten Fließrichtung 25 der Polymerschmelze 24 sind zwischen dem jeweiligen Austritt 7 und der Verzweigung 8 ein Schmelzekanal 11a a-ter Generation 12a angeordnet, zwischen der Verzweigung 8 und der ersten Generation 9a Weiterverzweigungen 10 eine b-te Generation 12b Schmelzekanäle 11b, und zwischen der ersten Generation 9a Weiterverzweigungen 10 und der zweiten Generation 9b Weiterverzweigungen 10 eine c-te Generation 12c Schmelzekanäle 11c angeordnet. Der zweiten Generation 9b Weiterverzweigungen 10 ist außerdem eine d-te Generation 12d Schmelzekanäle 11d nachgelagert, die direkt mit den Eintritten 6 fluidisch verbunden sind. Somit nimmt in designierter Fließrichtung 25 der Polymerschmelze 24 die Anzahl der Schmelzekanäle 11 von den Eintritten 6 zum Austritt 7 mit abnehmender Generation ab, und zwar werden aus jeweils zwei der vorliegend acht Schmelzekanälen 11d d-ter Generation 12d je ein Schmelzekanal 11c c-ter Generation 12c, also insgesamt vier Schmelzekanäle 11c c-ter Generation 12c. Aus jeweils zwei der vier Schmelzekanäle 11c c-ter Generation 12c gehen wiederum jeweils ein Schmelzekanal 11b b-ter Generation 12b, also insgesamt zwei Schmelzekanäle 11b b-ter Generation 12b, hervor, und aus den beiden Schmelzekanälen 11b b-ter Generation 12b wird ein Schmelzekanal 11a der a-ten Generation geformt, welcher direkt mit dem Austritt 7 fluidisch verbunden ist.

Umgekehrt zum Ausführungsbeispiel nach Fig. 1 und Fig. 2A nimmt der lokale Querschnitt der jeweiligen Schmelzekanalgeneration in designierter Fließrichtung 25 der Polymerschmelze 24 mit jeder abnehmenden Generation zu. Die Schmelzekanäle 11a a-ter Generation 12a sind in der designierten Fließrichtung 25 der Polymerschmelze 24 dem Austritt 7 und die Schmelzekanäle 11b b-ter Generation 12b gegenüber den Schmelzekanälen 11a a-ter Generation 12a den Eintritten 6 zu orientiert. Die Schmelzekanäle 11c c-ter Generation 12c sind gegenüber den Schmelzekanälen 11d d-ter Generation 12d dem Austritt 7 zu orientieren, wobei die Schmelzekanäle 11d d-ter Generation 12d bezogen auf die Schmelzekanäle 11a, 11b, 11c a-ter, b-ter und c-ter Generation 12a, 12b, 12c den Eintritten 6 zu orientieren sind. Daraus ergibt sich, dass der Schmelzeleiter 1 als Schmelzemischer fungiert.

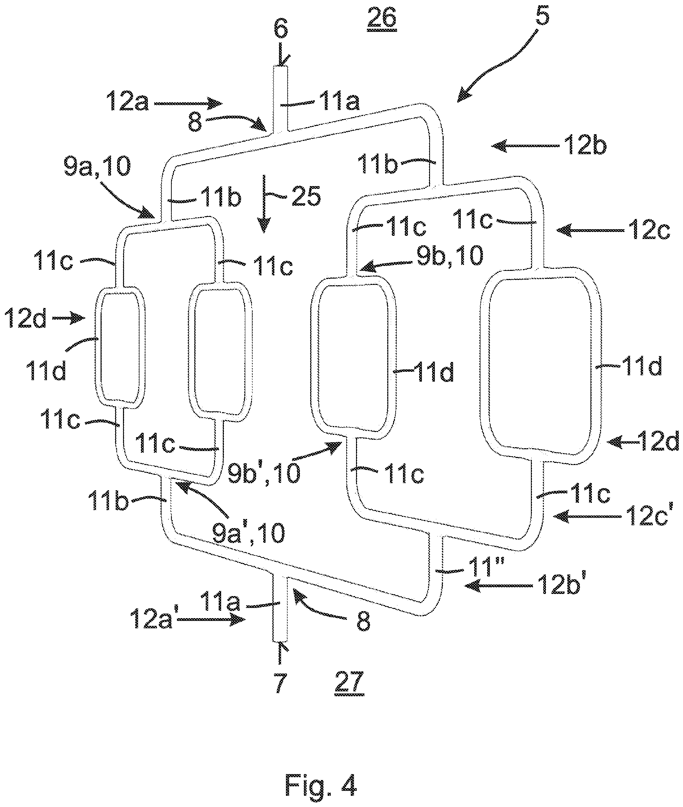

Fig. 4 zeigt ein drittes alternatives Multikanalsystem eines - hier nicht gezeigten - dritten alternativen Schmelzeleiterblock 4. Das vorliegende Multikanalsystem 5 ist als eine Kombination aus einem teilweise als Schmelzeverteiler und teilweise als Schmelzemischer ausgebildeten Schmelzeleiter 1 ausgeformt. Eintrittsseitig des Schmelzeleiterblocks 4 ist zunächst ein Eintritt 6 des Multikanalsystem 5 vorgesehen, wobei der Schmelzekanal 11a a-ter Generation 12a analog zum Ausführungsbeispiel nach Fig. 2A in eine Vielzahl Schmelzekanäle 11d d-ter Generation 12d aufgeteilt wird. Weiter stromab in designierter Fließrichtung 25 der Polymerschmelze erfolgt ausgehend von den Schmelzekanälen 11d d-ter Generation 12d wieder eine Zusammenführung der Schmelzekanäle 11 analog zum Ausführungsbeispiel nach Fig. 3 über Schmelzekanäle 11c, 11b c'-ter Generation 12c' und b'-ter Generation 12b' bis zu einem Schmelzekanal 11a a'-ter Generation 12a' bzw. dem Austritt 7.

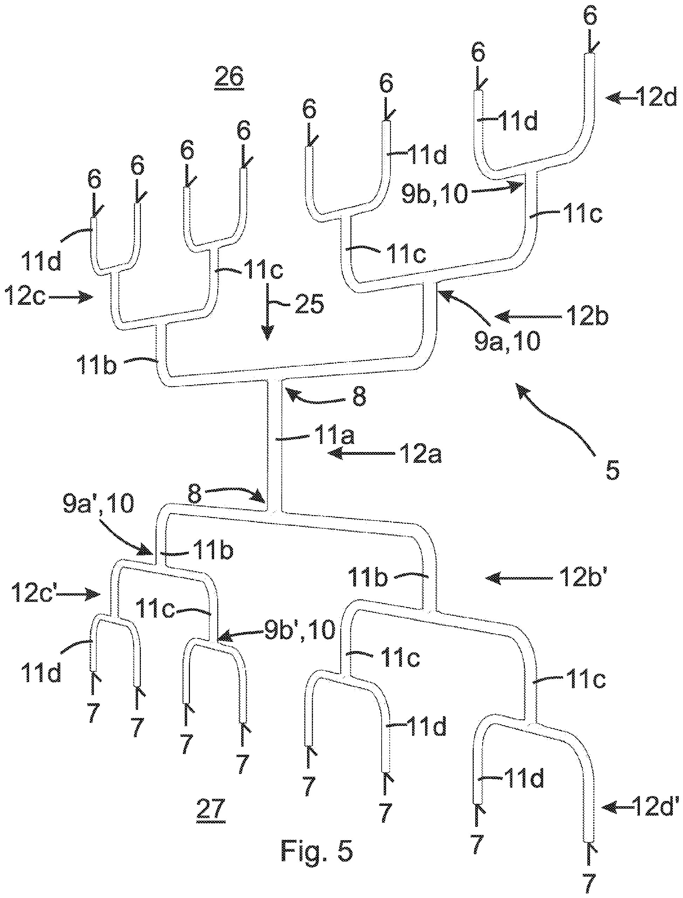

Gemäß Fig. 5 ist ein viertes alternatives Multikanalsystem 5 eines - nicht gezeigten - vierten alternativen Schmelzeleiterblocks 4 dargestellt, wobei vorliegend ebenfalls eine Kombination aus einem teilweise als Schmelzemischer und teilweise als Schmelzeverteiler ausgebildeten Schmelzeleiters 1 abgebildet ist. Die Funktionsweise ist hier jedoch im Gegensatz zum Ausführungsbeispiel nach Fig. 4 entgegengesetzt ausgeführt. Und zwar weist der Schmelzeleiterblock 4 an dessen Eintrittsseite 26 mehrere Eintritte 6 zum Multikanalsystem 5 auf, wobei die direkt mit den Eintritten 6 fluidisch verbundenen Schmelzekanäle 11d d-ter Generation 12d entlang der designierten Fließrichtung 25 der Polymerschmelze 24 analog zum Ausführungsbeispiel nach Fig. 3 bis zu einem Schmelzekanal 11a a-ter Generation 12a von Generation zu Generation zusammengeführt werden. Weiter stromab wird dieser Schmelzekanal 11a der a-ten Generation 12a analog zum Ausführungsbeispiel nach Fig. 2A und Fig. 2B über eine Verzweigung 8, mehrere Generationen 9a', 9b' Weiterverzweigungen 10 sowie dazwischen angeordnete Generationen 12b', 12c', 12d' Schmelzekanäle 11b, 11c, 11d von Generation zu Generation aufgeteilt, bis an der Austrittsseite 27 des Schmelzeleiterblocks 4 eine Vielzahl Austritte 7 angeordnet sind.

Das Multikanalsystem 5 gemäß dem Ausführungsbeispiel nach Fig. 4 sowie gemäß dem Ausführungsbeispiel nach Fig. 5 ist nicht auf die hier dargestellte Form und Anordnung begrenzt. Es ist ebenso denkbar, stromauf und/oder stromab des jeweiligen Multikanalsystems 5 weitere als Schmelzeverteiler und/oder Schmelzemischer ausgebildete Abschnitte vorzusehen, die beliebig ausgebildet und kombiniert sein können. Von Vorteil ist jedoch, wenn die Polymerschmelze 24 ganz unabhängig davon, durch welche Schmelzekanäle 11 oder Schmelzekanalfolge sie hindurchfließt, am Austritt 7 bzw. an den Austritten 7 immer die gleiche Schmelzehistorie aufweist. Bei acht Schmelzekanälen 11d der d-ten Generation 12d ist die Polymerschmelze 24 folglich in höchstens acht verschiedene Schmelzeströme unterteilt. Eine gleiche Historie der Polymerschmelze 24 bedeutet in diesem Zusammenhang, dass alle Schmelzeströme der Polymerschmelze 24 am Austritt 7 bzw. an den Austritten 7 die gleiche Strecke durch das Multikanalsystem 5 zurückgelegt sowie die gleiche Anzahl Schmelzekanäle 11, Verzweigungen 8 und Weiterverzweigungen 10 durchflossen haben.

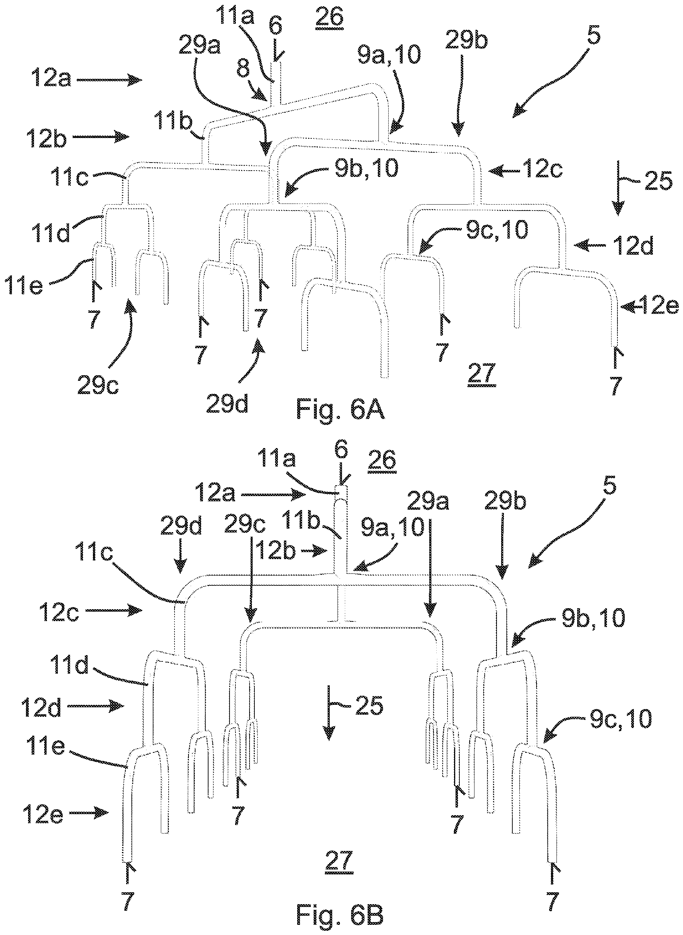

Die nachfolgend beschriebenen Ausführungsbeispiele gemäß Fig. 6A bis Fig. 16B beziehen sich ausschließlich auf als Schmelzeverteiler ausgebildete Schmelzeleiter 1, wobei die Polymerschmelze 24 im Multikanalsystem 5 von einem jeweiligen Eintritt 6 auf eine Vielzahl Austritte 7 verteilt wird. Somit ist die Anordnung und Zählweise der Generation der Schmelzekanäle 11, sowie der Verzweigungen 8 und Generationen der Weiterverzweigungen 10 analog zum ersten Ausführungsbeispiel nach Fig. 1 und Fig. 2A. Selbstverständlich sind die nachfolgenden Ausführungsformen auch zur Ausführung des Schmelzeleiters 1 als Schmelzemischer oder als beliebige Kombination aus Schmelzemischer und Schmelzeverteiler geeignet.

Nach den Ausführungsbeispielen gemäß Fig. 1 bis Fig. 5 ist das Multikanalsystem 5 jeweils im Wesentlichen in einer Ebene liegend ausgebildet, wobei folglich der jeweilige Eintritt 6 und der jeweilige Austritt 7 sowie alle Schmelzekanäle 11, Verzweigungen 8 und Weiterverzweigungen 10 in einer gemeinsamen Ebene liegen. Mithin werden mindestens drei Freiheitsgrade zur Ausbildung des Multikanalsystems 5 genutzt.

Demgegenüber ist in Fig. 6A und Fig. 6B ein fünftes alternatives Multikanalsystem 5 eines - hier nicht dargestellten - fünften alternativen Schmelzeleiterblocks 4 dargestellt, wobei sich das Multikanalsystem 5 vorliegend fünf Freiheitsgrade nutzend dreidimensional im Raum auffächert. Und zwar verlaufen, wie deutlich in Fig. 6B gezeigt ist, die Schmelzekanäle 11 in Fließrichtung der Polymerschmelze 24 ausgehend vom Eintritt 6 und verteilt über mehrere Generationen wenigstens teilweise nach unten, nach links, nach rechts, in die Blattebene hinein und aus der Blattebene hinaus. Die mit dem Eintritt 6 fluidisch verbundenen Schmelzekanäle 11 verteilen sich somit über die Verzweigungen 8 und Weiterverzweigungen 10 bis zu den Austritten 7, die sich aufgrund der vorliegenden Aufteilung auf zwei im Wesentlichen parallelen Ebenen aufteilen, wobei die erste Generation 9a Weiterverzweigungen 10 derart ausgebildet ist, dass die Schmelzekanäle 11c der c-ten Generation 12b im Vergleich zu den Schmelzekanälen 11b der b-ten Generation 12b um im Wesentlichen 90° verdreht verlaufen, sodass sich ausgehend von jedem Schmelzekanal 11c c-ter Generation ein separates Verteilungssystem 29a - 29d ausbildet. Das erste und zweite Verteilungssystem 29a, 29b sind in einer ersten Ebene angeordnet und das dritte und vierte Verteilungssystem 29c, 29d sind in einer zweiten Ebene angeordnet, wobei die beiden Ebenen im Wesentlichen parallel zueinander angeordnet sind.

Anhand eines derart ausgebildeten Schmelzeleiters 1 ist es in einfacher Weise möglich, die Polymerschmelze 24 nicht nur gleichmäßig in die Breite analog zu Fig. 2A sondern ebenso gleichmäßig quer dazu, das heißt je nach Blickrichtung in die Höhe bzw. Tiefe zu verteilen, um die Polymerschmelze 24 in einer vergleichsweise großen Fläche aus dem Schmelzeleiterblock 4 austreten lassen zu können. Dies eignet sich besonders zur Herstellung von Filamenten bzw. Endlosfilamenten, insbesondere zum Herstellen von Spinnvliesen mittels mehrreihiger Düsenwerkzeuge.

Unabhängig von der Ausbildung der Verzweigung 8 und der Weiterverzweigungen 10 relativ zu den Schmelzekanälen 11 sowie ihrer Anordnung im dreidimensionalen Raum, nimmt der lokale Querschnitt der Schmelzekanäle 11 von Generation zu Generation bis zu den Austritten 7 ab, wobei die Schmelzekanäle 11 jeder Generation 12a - 12e in allen Verteilungssystemen 29a - 29d stets symmetrisch ausgebildet sind und die aufgeteilten Schmelzeströme der Polymerschmelze 24 die gleiche Schmelzehistorie aufweisen.

Die Austritte 7 des ersten und zweiten Verteilungssystems 29a, 29b bzw. der ersten Ebene liegen somit auf einer gedachten ersten geraden Linie und die Austritte 7 des dritten und vierten Verteilungssystems 29c, 29d bzw. der zweiten Ebene auf einer gedachten zweiten geraden Linie. Beide Linien bzw. beide Ebenen sind parallel zueinander angeordnet. Da alle Schmelzekanäle 11 mit einem einzigen Eintritt 6 verbunden sind, weisen alle Schmelzeströme am jeweiligen Austritt 7 aufgrund der gleichen Polymerschmelze 24 identische Materialeigenschaften auf.

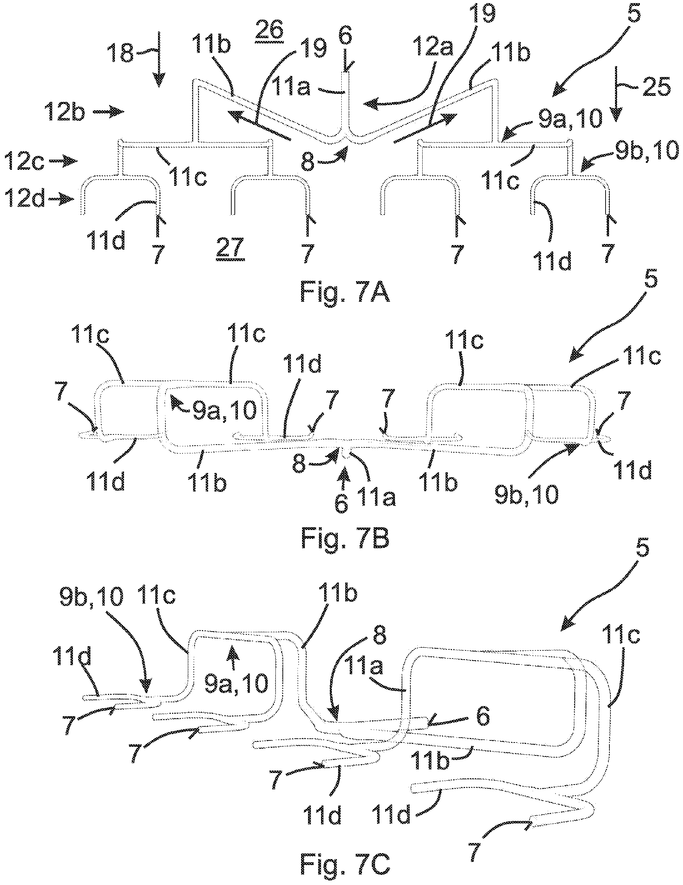

Gemäß Fig. 7A bis Fig. 7D ist ein sechstes alternatives Multikanalsystem 5 eines - hier nicht gezeigten - sechsten alternativen Schmelzeleiterblocks 4 dargestellt, wobei das Multikanalsystem 5 vorliegend sechs Freiheitsgrade nutzend dreidimensional im Raum auffächert. In diesem Ausführungsbeispiel ist gezeigt, dass die beiden Schmelzekanäle 11b der b-ten Generation 12b teilweise entgegen einer globalen Maschinenrichtung 18 verlaufen. Die globale Maschinenrichtung 18 führt vom Eintritt 6 zum Austritt 7 einer designierten Schmelzeströmung der Polymerschmelze 24. Jeder Schmelzekanal 11b der b-ten Generation 12b weist eine lokale Maschinenrichtung 19 auf, die in Abhängigkeit der Ausbildung und Erstreckung des jeweiligen Schmelzekanals 11 in Längsrichtung des Schmelzekanals 11 stets gleich ausgerichtet sein kann oder die in Längsrichtung des Schmelzekanals 11 eine sich ändernde Ausrichtung aufweisen kann. Dabei kann es von Vorteil sein, wenn die lokale Maschinenrichtung 19 wenigstens teilweise entgegen der globalen Maschinenrichtung 18 verläuft. Dies zeigt insbesondere in Fig. 7A.

Vorliegend sind der Eintritt 6 und die Austritte 7 des Multikanalsystems 5 im Wesentlichen in einer ersten Ebene angeordnet, wobei die Schmelzekanäle 11b der b-ten Generation 12b teilweise quer zu dieser ersten Ebene verlaufen, sodass die erste Generation 9a Weiterverzweigungen 10 auf einer zur ersten Ebene parallelen zweiten Ebene angeordnet sind. Die daran angeformten Schmelzekanäle 11c c-ter Generation 12c erstrecken sich teilweise in der zweiten Ebene und werden zur Weiterverteilung der Polymerschmelze 24 in die erste Ebene zurückgeführt. Durch die dreidimensionale Führung der Schmelzekanäle 11 im Raum, und insbesondere durch Führung der lokalen Maschinenrichtung 19 der Schmelzekanäle 11 teilweise entgegen der globalen Maschinenrichtung 18 wird eine Verteilung der Polymerschmelze 24 auf einem geringeren axialen Bauraum, also in globaler Maschinenrichtung 18 des Schmelzeleiters 1 realisiert. Mithin ist der Schmelzeleiter 1 in einem solchen Fall kompaktbauender ausbildbar.

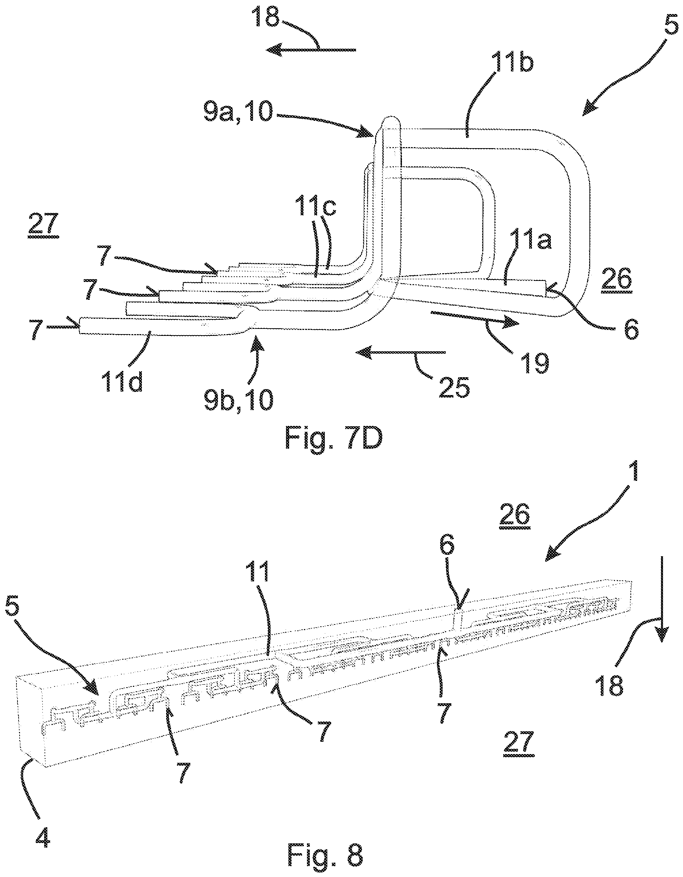

Fig. 8 zeigt einen siebten alternativen Schmelzeleiterblock 4 des Schmelzeleiters 1 mit einem siebten alternativen Multikanalsystem 5, wobei das sich dreidimensional erstreckende Multikanalsystem 5 von der Anordnung, Ausbildung und Führung der Schmelzekanäle 11 im Wesentlichen analog zum Multikanalsystem 5 nach Fig. 7 ausgeführt ist. Gezeigt werden soll eine mögliche Anordnung des Multikanalsystems 5 im - hier nur schematisch als Quader dargestellten - Schmelzeleiterblock 4, wobei der Schmelzeleiterblock 4 sich aufgrund der dreidimensionalen Führung der Schmelzekanäle 11 im Raum auf eine vergleichsweise große Breite bei gleichzeitig geringer Bauhöhe und geringer axialer Baulänge in globaler Maschinenrichtung 18 ausbilden lässt. Durch einen derartig ausgebildeten Schmelzeleiterblock 4 ist es möglich, die Polymerschmelze 24 derart zu verteilen, dass insbesondere Vliese mit 20 bis 10.000 Einzelfilamenten pro Meter Breite herstellbar sind.

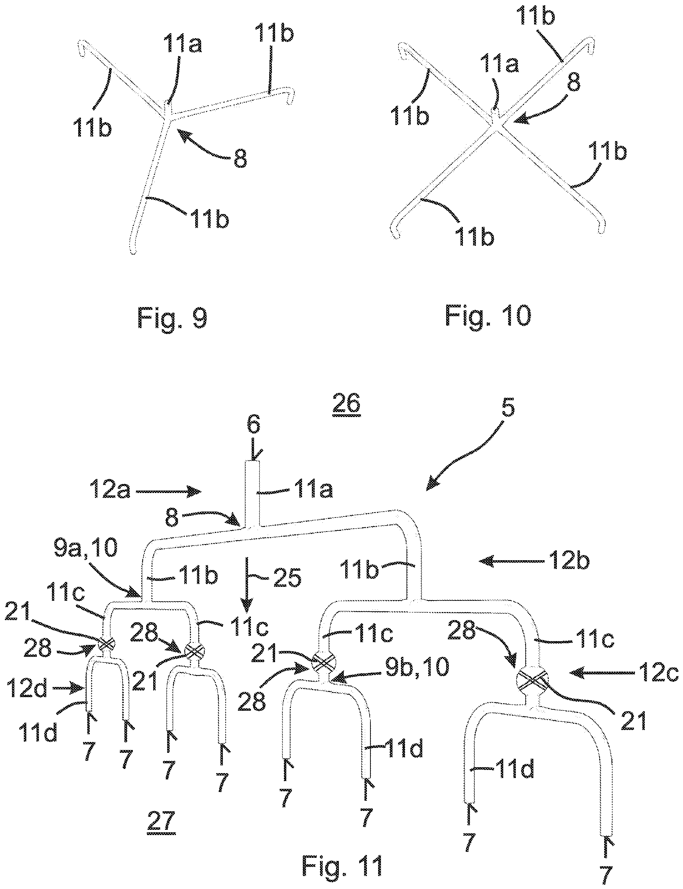

Nach Fig. 9 ist eine exemplarische Ausbildung einer Verzweigung 8 oder einer Weiterverzweigung 10 des Multikanalsystems 5 nach einer achten alternativen Ausführungsform eines achten alternativen Multikanalsystems 5 dargestellt. Vorliegend ist gezeigt, dass bei einem wenigstens teilweise als Schmelzeverteiler ausgebildeten Schmelzeleiter 1 ein Schmelzekanal 11a einer a-ten Generation 12a über die Verzweigung 8 in drei Schmelzekanäle 11b einer b-ten Generation 12b aufgeteilt werden kann. Dabei sind die drei Schmelzekanäle 11b b-ter Generation 12b gleichmäßig verteilt um den Schmelzekanal 11a a-ter Generation 12a angeordnet. Auch eine ungleichmäßige Anordnung um den Schmelzekanal 11a a-ter Generation 12a ist denkbar. Umgekehrt können auch bei einem wenigstens teilweise als Schmelzemischer ausgebildeten Schmelzeleiter 1 drei Schmelzekanäle 11b zu einem gemeinsamen Schmelzekanal 11a zusammengeführt werden.

Fig. 10 zeigt eine exemplarische Ausbildung einer Verzweigung 8 oder einer Weiterverzweigung 10 des Multikanalsystems 5 nach einer neunten alternativen Ausführungsform eines neunten alternativen Multikanalsystems 5. Es ist gezeigt, dass bei einem wenigstens teilweise als Schmelzeverteiler ausgebildeten Schmelzeleiter 1 ein Schmelzekanal 11a einer a-ten Generation 12a über die Verzweigung 8 in vier Schmelzekanäle 11b einer b-ten Generation 12b aufgeteilt werden kann. Dabei sind die vier Schmelzekanäle 11b b-ter Generation 12b gleichmäßig verteilt um den Schmelzekanal 11a a-ter Generation 12a angeordnet. Hier ist ebenfalls eine ungleichmäßige Anordnung um den Schmelzekanal 11a a-ter Generation 12a denkbar. Umgekehrt können auch bei einem wenigstens teilweise als Schmelzemischer ausgebildeten Schmelzeleiter 1 vier Schmelzekanäle 11b zu einem gemeinsamen Schmelzekanal 11a zusammengeführt werden.

Nach Fig. 11 ist ein zehntes Ausführungsbeispiel mit einem zehnten alternativen Multikanalsystem 5 dargestellt. Das Multikanalsystem 5 ist im Wesentlichen identisch zum Multikanalsystem 5 nach Fig. 1 ausgebildet. Der Unterschied besteht vorliegend darin, dass der Schmelzeverteilerblock 4, vorliegend im Bereich der Schmelzekanäle 11c c-ter Generation 12c jeweils ein in Form eines statischen Mischelementes ausgebildetes statisches Funktionselement 21 zur Beeinflussung der designierten Polymerschmelze 24 aufweist. Das jeweilige Funktionselement 21 ist innerhalb einer lokalen Aufweitung 28 der Schmelzekanäle 11c c-ter Generation 12c angeordnet und realisiert eine Durchmischung der innerhalb der Schmelzekanäle 11c c-ter Generation 12c geführten und verteilten Polymerschmelze 24. Dadurch kann eine Vergleichmäßigung des im jeweiligen Schmelzekanal 11 geführten Schmelzestranges der Polymerschmelze 24, insbesondere dessen Fließ- und Materialeigenschaften, gewährleistet werden. Somit ist das jeweilige Funktionselement 21 in einem der Schmelzekanäle 11c c-ter Generation 12c zwischen einer Weiterverzweigung 10 erster Generation 9a und einer Weiterverzweigung 10 zweiter Generation 9b angeordnet. Vor und nach der lokalen Aufweitung 28 weist der jeweilige Schmelzekanal 11c c-ter Generation 12c eine im Wesentlichen gleiche Querschnittsgröße und -form auf. Das statische Mischelement kann alternativ auch direkt im jeweiligen Schmelzekanal 11 angeordnet und somit nicht in einer lokalen Aufweitung ausgebildet sein.

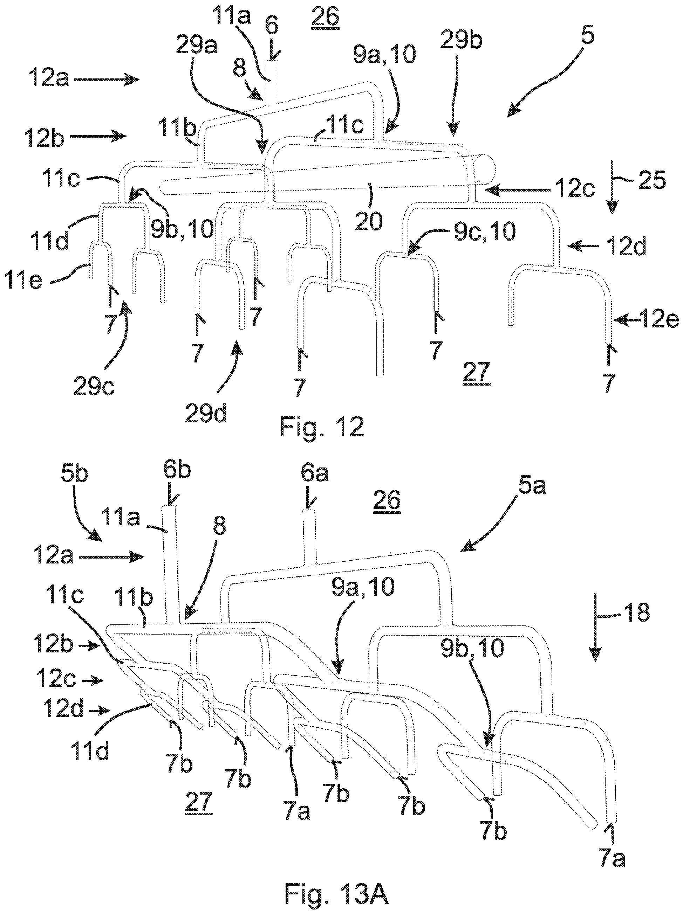

In Fig 12 ist ein elftes Ausführungsbeispiel mit einem elften alternativen Multikanalsystem 5 dargestellt. Das Multikanalsystem 5 ist identisch zum Multikanalsystem 5 nach Fig. 6A und Fig. 6B ausgebildet. Ergänzend dazu weist der Schmelzeleiterblock 4 einen Medienkanal 20 auf, der sich räumlich zwischen den Schmelzekanälen 11 des Multikanalsystems 5, vorliegend zwischen den beiden Ebenen der Verteilungssysteme 29a, 29b, 29c, 29d, erstreckt und eine Fluidführung realisiert. Die Fluidführung dient zum Temperieren des Schmelzeleiterblocks 4 und folglich der im Multikanalsystem 5 geführten Polymerschmelze 24. Der Medienkanal 20 ist nicht mit den Schmelzekanälen 11 des Multikanalsystems 5 fluidisch verbunden und bewirkt, dass der Schmelzeleiter 1 und insbesondere die Schmelzeleiterblöcke 4a - 4e während des Betriebs der Extrusionsanlage 3 temperiert werden. Es können ferner weitere beliebig ausgebildete Medienkanäle vorgesehen sein, die fluidisch getrennt von den Schmelzekanälen 11 des Multikanalsystems 5 im Schmelzeverteilerblock 4 angeordnet sind. Die weiteren Medienkanäle können auch in Form von Trockenschächten ausgebildet sein, die beispielsweise zur Aufnahme einer elektrischen Leitung und/oder zur Aufnahme einer Messeinrichtung vorgesehen sind.

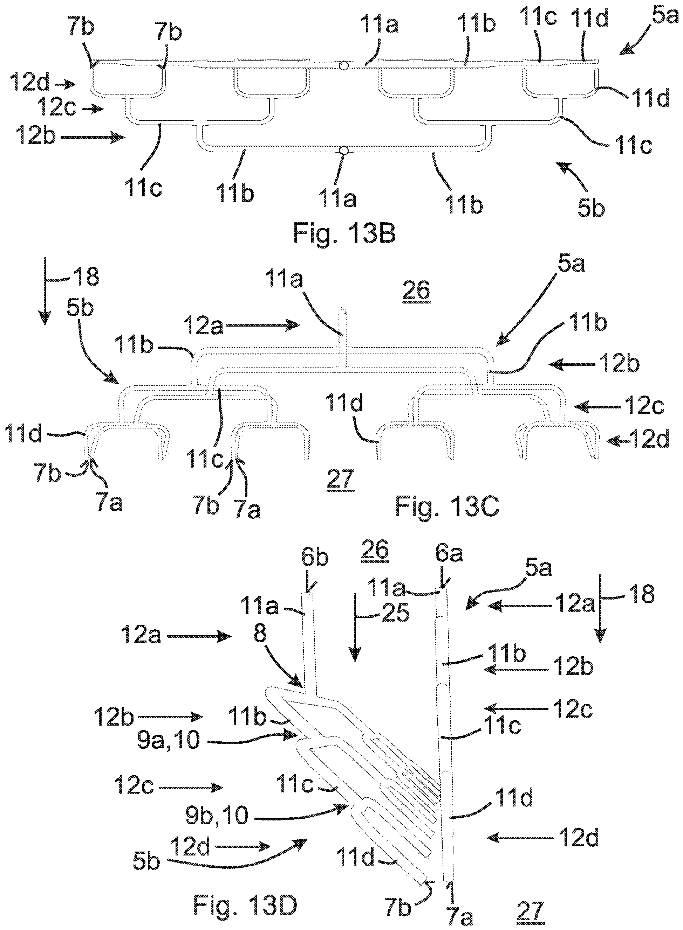

Gemäß den nachfolgenden Ausführungsbeispielen nach Fig. 13A bis Fig. 15B weist der Schmelzeleiterblock 4 ein erstes Multikanalsystem 5a und ein davon fluidisch getrenntes zweites Multikanalsystem 5b auf, wobei auch drei oder mehr Multikanalsysteme ohne weiteres denkbar sind.

Fig. 13A bis Fig. 13D zeigt ein zwölftes alternatives Ausführungsbeispiel, bei dem die beiden Multikanalsysteme 5a, 5b fluidisch voneinander getrennt ausgebildet sind. Mit anderen Worten werden in einen ersten Eintritt 6a des ersten Multikanalsystems 5a eine erste Polymerschmelze 24 und in einen zweiten Eintritt 6b des zweiten Multikanalsystems 5b eine zweite Polymerschmelze 24 zugeführt, wobei die Polymerschmelzen 24 gleiche oder unterschiedliche Eigenschaften besitzen können. Somit weist jedes Multikanalsystem 5a, 5b einen jeweiligen Eintritt 6a, 6b zur Zuführung der jeweiligen Polymerschmelze 24 sowie eine Vielzahl von Austritten 7a, 7b zur Speisung einer - hier nicht gezeigten - Extrusionsdüse mit der jeweiligen Polymerschmelze 24 auf. Das erste Multikanalsystem 5a ist im Wesentlichen analog zum Multikanalsystem 5 nach Fig. 2A ausgebildet. Es sei insofern auf die diesbezügliche Beschreibung verwiesen, wobei, da wo nicht unumgänglich, aus Gründen der Übersichtlichkeit auf eine erneute Wiedergabe der identischen Bezugszeichen verzichtet wird.

Der Schmelzekanal 11a der a-ten Generation 12a des zweiten Multikanalsystems 5b verläuft ausgehend vom Eintritt 6a des zweiten Multikanalsystems 5b zunächst parallel zum Schmelzekanal 11a der a-ten Generation 12a des ersten Multikanalsystems 5a. Die der Verzweigung 8 nachgelagerten aufgeteilten Schmelzekanäle 11b b-ter Generation 12b sind jedoch um vorliegend 45° verdreht, und zwar um etwa 45° zum ersten Multikanalsystem 5a hingedreht, sodass die Schmelzekanäle 11 b-ter, c-ter und d-ter Generation 12b, 12c, 12d des zweiten Multikanalsystems 5b zum ersten Multikanalsystem 5a hin verlaufen und sich mit steigender Generation konstant den Schmelzekanälen 11 des ersten Multikanalsystems 5a nähern. Dies führt in der Folge dazu, dass die Austritte 7b des zweiten Multikanalsystems 5b vergleichsweise nah an die Austritte 7a des ersten Multikanalsystems 5a herangeführt sind, sodass der Schmelzestrom der mit dem zweiten Multikanalsystem 5b verteilten Polymerschmelze 24 im Bereich der Austritte 7a, 7b mit einem vergleichsweise geringen Abstand zum Schmelzestrom der mit dem ersten Multikanalsystem 5a verteilten Polymerschmelze 24 austritt.

In der Frontalansicht nach Fig. 13A ist je ein Austritt 7a des ersten Multikanalsystems 5a und ein Austritt 7b des zweiten Multikanalsystems 5b vor- bzw. hintereinander beabstandet angeordnet. Zudem sind die ersten Austritte 7a des ersten Multikanalsystems 5a auf einer ersten geraden Linie und die zweiten Austritte 7b des zweiten Multikanalsystems 5b auf einer zweiten geraden Linie angeordnet, wobei die Linien im Wesentlichen parallel zueinander angeordnet sind. Mit anderen Worten sind die Austritte 7a, 7b des jeweiligen Multikanalsystems 5a, 5b auf zwei parallel zueinander angeordneten Ebenen angeordnet. Dadurch lassen sich zweilagige Folienbahnen erzeugen, deren Lagen gleiche oder unterschiedliche Materialeigenschaften haben können.

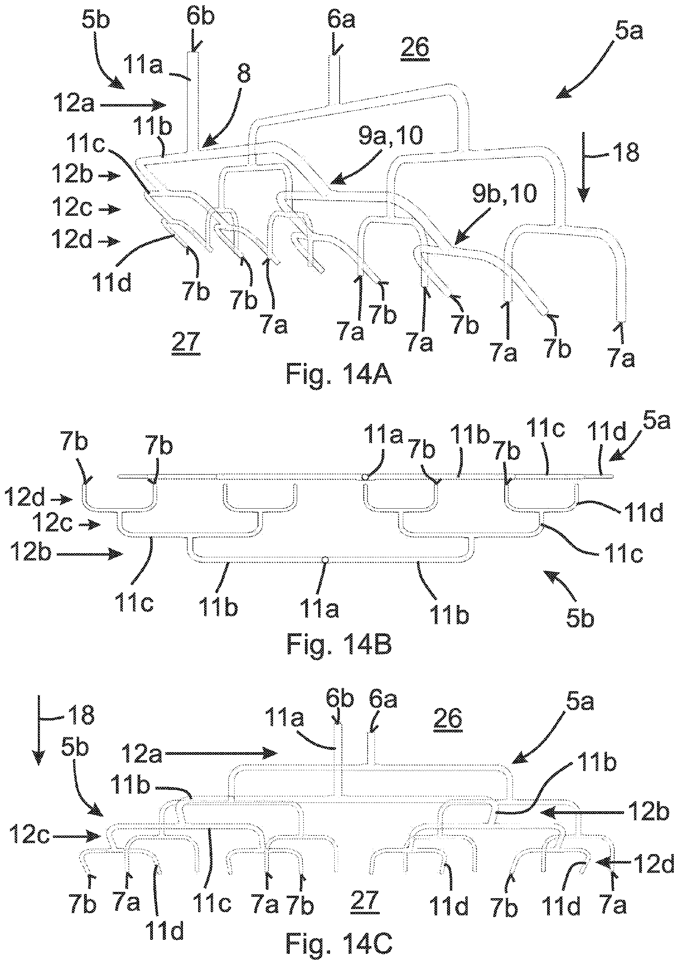

Ein dreizehntes alternatives Ausführungsbeispiel nach Fig. 14A bis Fig. 14C zeigt eine im Wesentlichen identisch zu der vorher beschriebenen Ausführungsform nach Fig. 13A bis Fig. 13D ausgebildete dreizehnte alternative Ausführungsform. Der wesentliche Unterschied besteht lediglich darin, dass die Austritte 7a, 7b der Multikanalsysteme 5a, 5b nicht jeweils vor- bzw. hintereinander, sondern quer zur designierten Fließrichtung 25 bzw. zur globalen Maschinenrichtung 18 der jeweiligen Polymerschmelze 24 versetzt zueinander angeordnet sind.

In Fig. 14C ist dies besonders deutlich gezeigt. Und zwar ist jeder Austritt 7a des ersten Multikanalsystems 5a zwischen zwei Austritten 7b des zweiten Multikanalsystems 5b angeordnet. Die beiden Multikanalsysteme 5a, 5b sind räumlich versetzt zueinander angeordnet. Dadurch lassen sich die Austritte 7a, 7b der Multikanalsysteme 5a, 5b im Vergleich zum Ausführungsbeispiel nach Fig. 13A bis Fig. 13D noch näher zusammenführen.

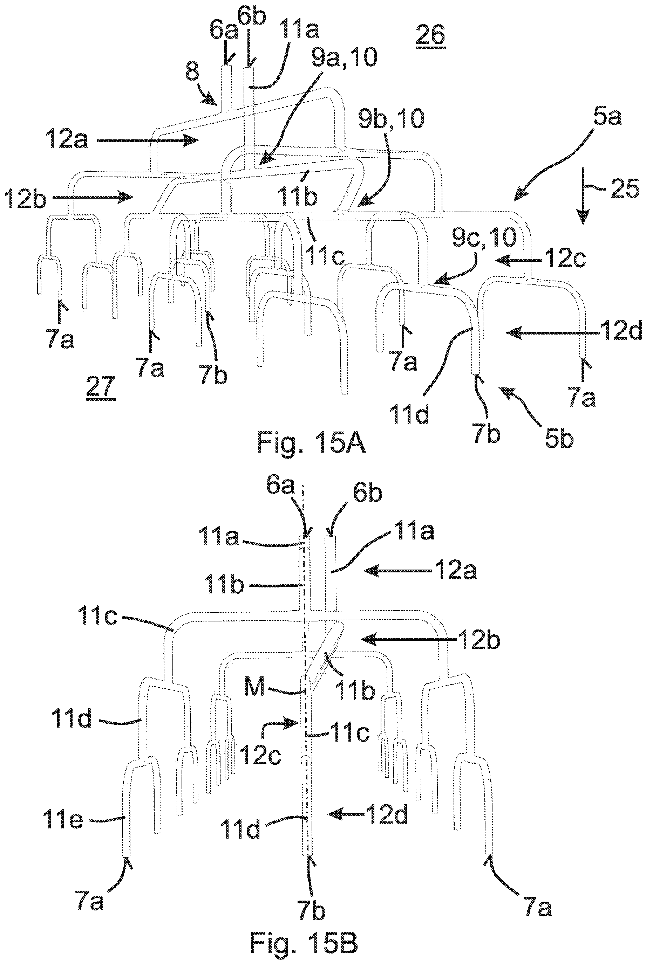

Fig. 15A und Fig. 15B zeigt ein vierzehntes alternatives Ausführungsbeispiel, bei dem die beiden Multikanalsysteme 5a, 5b fluidisch voneinander getrennt ausgebildet sind. In einen ersten Eintritt 6a des ersten Multikanalsystems 5a wird eine erste Polymerschmelze 24 und in einen zweiten Eintritt 6b des zweiten Multikanalsystems 5b wird eine zweite Polymerschmelze 24 zugeführt, wobei die Polymerschmelzen gleiche oder unterschiedliche Eigenschaften besitzen können. Somit weist jedes Multikanalsystem 5a, 5b einen jeweiligen Eintritt 6a, 6b zur Zuführung der jeweiligen Polymerschmelze 24 sowie eine Vielzahl von Austritten 7a, 7b zur Speisung der Extrusionsdüse 14 mit der jeweiligen Polymerschmelze 24 auf. Das erste Multikanalsystem 5a ist im Wesentlichen analog zum Multikanalsystem 5 nach Fig. 6A und Fig. 6B ausgebildet, bei dem die Schmelzekanäle 11b b-ter Generation 12b in je ein separates Verteilungssystem 29a, 29b, 29c, 29d auffächern. Zur Anordnung der Schmelzekanäle 11 des ersten Multikanalsystems 5a sei daher auf die Beschreibung zu Fig. 6A und Fig. 6B verwiesen. Es wird außerdem aus Gründen der Übersichtlichkeit auf eine Wiedergabe der identischen Bezugszeichen, wo nicht unumgänglich, verzichtet.

Das zweite Multikanalsystem 5b ist im Wesentlichen identisch zum Ausführungsbeispiel nach Fig. 2A ausgebildet. Der einzige Unterschied besteht darin, dass der Schmelzekanal 11a a-ter Generation 12a des zweiten Multikanalsystems 5b im Verhältnis zu den Schmelzekanälen 11c, 11d c-ter und d-ter Generation 12c, 12d des zweiten Multikanalsystems 5b versetzt ausgeführt ist. Vorliegend weist das erste Multikanalsystem 5a fünf Generationen 12a-12e Schmelzekanäle 11a-11e auf (analog zu Fig. 6A und Fig. 6B), wobei das zweite Multikanalsystem 5b vier Generationen 12a-12d Schmelzekanäle 11a-11d aufweist.

Der erste Eintritt 6a des ersten Multikanalsystems 5a ist zentrisch angeordnet, wobei der zweite Eintritt 6b des zweiten Multikanalsystems 5b zur fluidischen Trennung der Multikanalsysteme 5a, 5b parallel dazu und somit exzentrisch angeordnet ist. Der Schmelzekanal 11a a-ter Generation 12a des ersten Multikanalsystems 5a liegt parallel zu einer Mittelachse M, wobei die Schmelzekanäle 11c, 11d c-ter und d-ter Generation 12c, 12d bzw. die Austritte 7b des zweiten Multikanalsystems 5b ebenso wie der Eintritt 6a des ersten Multikanalsystems 5a auf der Mittelachse M angeordnet sind. Demnach sind die Schmelzekanäle 11b b-ter Generation 12b des zweiten Multikanalsystems 5b derart ausgebildet, dass die Polymerschmelze 24 vom Schmelzekanal 11a a-ter Generation 12a des ersten Multikanalsystems 5a zur Mittelachse M hingeführt wird. Somit wird erreicht, dass die Austritte 7a des ersten und zweiten Verteilungssystems 29a, 29b sowie des dritten und vierten Verteilungssystems 29c, 29d mit gleichem Abstand zu den Austritten 7b des zweiten Multikanalsystems 5b angeordnet sind.

Anders gesagt sind die ersten Austritte 7a des ersten Multikanalsystems 5a teilweise auf einer ersten geraden Linie und teilweise auf einer zweiten geraden Linie angeordnet, wobei die zweiten Austritte 7b des zweiten Multikanalsystems 5b auf einer dritten geraden Linie angeordnet sind. Die drei Linien sind im Wesentlichen parallel zueinander angeordnet. Mit anderen Worten sind die Austritte 7a, 7b des jeweiligen Multikanalsystems 5a, 5b auf parallel zueinander angeordneten Ebenen angeordnet. Dadurch lassen sich dreilagige Folienbahnen erzeugen, wobei die äußeren Lagen erste Materialeigenschaften aufweisen und die von den äußeren Lagen eingeschlossene innere Lage zweite Materialeigenschaften aufweisen. Dies kann für beispielsweise für nachhaltige Extrusionsprodukte vorteilhaft sein, wenn die Polymerschmelze 24, welches durch das zweite Multikanalsystem 5b auf der inneren Ebene verteilt wird, aus einem recycelten Material besteht und die Polymerschmelze 24, welche durch das erste Multikanalsystem 5a auf den beiden äußeren Ebenen verteilt wird, aus einem neuwertigen Material besteht. So kann neuwertiges Material eingespart werden und gleichzeitig recycliertes Material wiederverwertet werden.

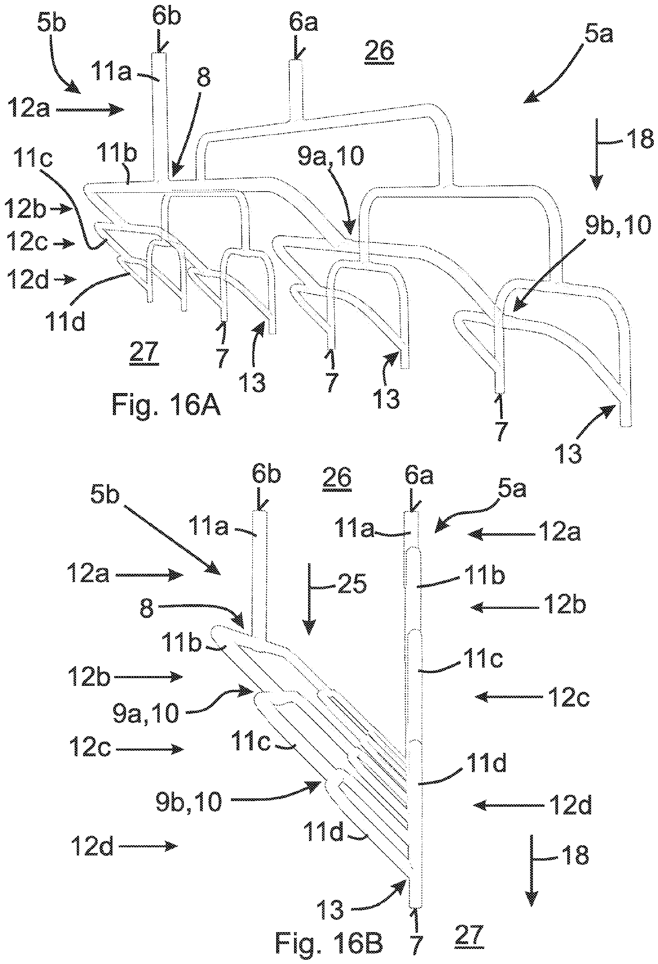

Gemäß Fig. 16A und Fig. 16B ist ein fünfzehntes Ausführungsbeispiel bei dem ebenfalls zwei Multikanalsysteme 5a, 5b im Wesentlichen analog zum Ausführungsbeispiel nach Fig. 13A bis Fig. 13D ausgebildet sind. Die beiden Multikanalsysteme 5a, 5b sind zunächst fluidisch voneinander getrennt ausgebildet, wobei in einen ersten Eintritt 6a des ersten Multikanalsystems 5a eine erste Polymerschmelze 24 und in einen zweiten Eintritt 6b des zweiten Multikanalsystems 5b eine zweite Polymerschmelze 24 zugeführt werden. Der Unterschied zur Ausführungsform nach Fig. 13A bis Fig. 13D besteht vorliegend im Wesentlichen darin, dass nicht jedes der Multikanalsysteme 5a, 5b separate Austritte 7a, 7b aufweist, sondern dass das erste Multikanalsystem 5a eine Zusammenführung 13 mit dem zweiten Multikanalsystem 5b aufweist, sodass gemeinsame Austritte 7 austrittsseitig des Multikanalsysteme 5a, 5b vorgesehen sind. Die Polymerschmelzen 24 beider Multikanalsysteme 5a, 5b werden vorliegend erst kurz vor Austreten aus dem Schmelzeleiterblock 4 zusammengeführt. Dadurch bleiben die jeweiligen Eigenschaften der beiden Polymerschmelzen 24 weitestgehend erhalten, wobei durch anschließende Verdüsung lediglich ein gegenseitiges Anhaften der Polymerschmelzen 24 aneinander realisiert wird. Mithin können die Eigenschaften der unterschiedlichen Polymerschmelzen 24 gemäß den Anforderungen an das Extrusionsprodukt optimal eingestellt werden. Alternativ ist denkbar, dass eine frühere Zusammenführung der Polymerschmelzen 24 aus dem ersten und zweiten Multikanalsystem 5a, 5b erfolgt, um insbesondere eine bessere Durchmischung der Polymerschmelzen 24 zu realisieren.

An dieser Stelle sei explizit darauf hingewiesen, dass Merkmale der vorstehend bzw. in den Ansprüchen und/oder Figuren beschriebenen Lösungen gegebenenfalls auch kombiniert werden können, um die erläuterten Merkmale, Effekte und Vorteile entsprechend kumuliert umsetzen bzw. erzielen zu können. Es sei zudem explizit erwähnt, dass die Ausführungsbeispiele nach Fig. 1 bis Fig. 10 auch mit zwei oder mehr Multikanalsystemen ausgeführt werden können. Für diese und die übrigen Ausführungsbeispiele bis Fig. 16B gilt gleichermaßen, dass der Schmelzeleiterblock 4 auch mit drei Multikanalsystemen, mit vier Multikanalsystemen, mit fünf Multikanalsystemen, aber auch mit mehr als fünf Multikanalsystemen ausgebildet werden kann.

Bezugszeichenliste:

| 1 | Schmelzeleiter |
| 2 | Extrusionswerkzeug |
| 3 | Extrusionsanlage |
| 4 | Schmelzeleiterblock |
| 5 | Multikanalsystem |
| 5a | Erstes Multikanalsystem |
| 5b | Zweites Multikanalsystem |
| 6 | Eintritt des Multikanalsystems |
| 6a | Eintritt eines ersten Multikanalsystems |
| 6b | Eintritt eines zweiten Multikanalsystems |
| 7 | Austritt des Multikanalsystems |
| 7a | Austritt eines ersten Multikanalsystems |
| 7b | Austritt eines zweiten Multikanalsystems |
| 8 | Verzweigung |
| 9a | Erste Generation einer Weiterverzweigung |
| 9b | Zweite Generation einer Weiterverzweigung |
| 9c | Dritte Generation einer Weiterverzweigung |
| 10 | Weiterverzweigung |
| 11 | Schmelzekanal |
| 11a | Aufzuteilender Schmelzekanal einer ersten Generation |
| 11b | Aufgeteilter Schmelzekanal einer zweiten Generation |
| 11c | Aufgeteilter Schmelzekanal einer dritten Generation |
| 11d | Aufgeteilter Schmelzekanal einer vierten Generation |
| 11e | Aufgeteilter Schmelzekanal einer fünften Generation |
| 12a | a-te Generation eines Schmelzekanals |
| 12a' a'-te | Generation eines Schmelzekanals 12b b-te Generation eines Schmelzekanals |
| 12b' b'-te | Generation eines Schmelzekanals |
| 12c c-te | Generation eines Schmelzekanals |
| 12c' c'-te | Generation eines Schmelzekanals |
| 12d d-te | Generation eines Schmelzekanals |
| 12d' d'-te | Generation eines Schmelzekanals |
| 12e | e-te Generation eines Schmelzekanals |
| 13 | Zusammenführung |
| 14 | Extrusionsdüse |
| 15 | Sammelraum |
| 16 | Hohlkammersystem |
| 17 | Hohlkammer |
| 18 | Globale Maschinenrichtung |
| 19 | Lokale Maschinenrichtung |
| 20 | Medienkanal |
| 21 | Statisches Funktionselement |
| 22 | Extrusionsdüsenaustritt |
| 23 | Bereitstellungseinheit |
| 24 | Polymerschmelze |
| 25 | Fließrichtung der Polymerschmelze |
| 26 | Eintrittsseite des Schmelzeleiterblocks |
| 27 | Austrittsseite des Schmelzeleiterblocks |
| 28 | Lokale Aufweitung des Schmelzekanals |
| 29 | Polymer |
| 30 | Extrusionsprodukt |
| $A_1$ | Erste Querschnittsfläche eines aufzuteilenden Schmelzekanals |
| $A_2$ | Zweite Querschnittsfläche eines aufgeteilten Schmelzekanals |
| B | Breite des Extrusionsdüsenaustritts |
| $n_K$ | Gesamtanzahl der aufgeteilten Schmelzekanäle |
| $U_1$ | Erster Umfang eines aufzuteilenden Schmelzekanals |
| $U_2$ | Zweiter Umfang eines aufgeteilten Schmelzekanals |
| M | Mittelachse |

**Patentansprüche**

1. Schmelzeleiter (1), insbesondere Schmelzeverteiler oder Schmelzemischer, für ein Extrusionswerkzeug (2) einer Extrusionsanlage (3),

aufweisend einen Schmelzeleiterblock (4) mit einem Multikanalsystem (5), wobei das Multikanalsystem (5) sich dreidimensional erstreckend innerhalb des Schmelzeleiterblocks (4) angeordnet ist sowie mindestens einen Eintritt (6) und mindestens einen Austritt (7) für Polymerschmelze aufweist,
wobei zwischen einem Eintritt (6) und einem mit dem Eintritt (6) fluidisch verbundenen Austritt (7) mehrere hintereinander angeordnete Verzweigungen (8) und mehrere Generationen (9a, 9b, 9c) Weiterverzweigungen (10) über mehrere Generationen (12a, 12b) aufgeteilter Schmelzekanäle (11a, 11b) ausgebildet sind, wobei m Schmelzekanäle (11a) a-ter Generation (12a) mit x-ten lokalen Querschnitten und n Schmelzekanäle (11b) b-ter Generation (12b) mit y-ten lokalen Querschnitten vorhanden sind, wobei n>m, wenn b>a, wobei die y-ten lokalen Querschnitte der Schmelzekanäle (11b) b-ter Generation (12b) kleiner sind als die x-ten lokalen Querschnitte der Schmelzekanäle (11a) a-ter Generation (12a),

und wobei

in designierter Fließrichtung der Polymerschmelze die Schmelzekanäle (11a) a-ter Generation (12a) dem Eintritt (6) und die Schmelzekanäle (11b) b-ter Generation (12b) dem Austritt (7) zu orientiert sind, sodass der Schmelzeleiter (1) für einen designierten Schmelzestrom der Polymerschmelze als Schmelzeverteiler dient, oder

in designierter Fließrichtung der Polymerschmelze die Schmelzekanäle (11a) a-ter Generation (12a) dem Austritt (7) und die Schmelzekanäle (11b) b-ter Generation (12b) dem Eintritt (6) zu orientiert sind, sodass der Schmelzeleiter (1) für einen designierten Schmelzestrom der Polymerschmelze als Schmelzemischer dient,

**dadurch gekennzeichnet, dass**

ein Umfang ($U_2$) und eine Querschnittsfläche ($A_2$) von wenigstens zwei aus einem gemeinsamen Schmelzekanal (11a) entspringenden und aufgeteilten Schmelzekanälen (11b) in Abhängigkeit von

$$\frac{U_1^x}{A_1^{x+1}} = \frac{1}{n_K} * \frac{U_2^x}{A_2^{x+1}}$$

dimensioniert sind, wobei $U_1$ der erste Umfang und $A_1$ die erste Querschnittsfläche des gemeinsamen Schmelzekanals (11a) ist, wobei $U_2$ der zweite Umfang und $A_2$ die zweite Querschnittsfläche eines der aufgeteilten Schmelzekanäle (11b) ist, wobei $n_K$ die Gesamtanzahl der aufgeteilten Schmelzekanäle (11b) ist, und wobei x größer oder gleich -0,5 ist, vorzugsweise mindestens ein Wert von 0,5 ist, bevorzugt mindestens ein Wert von 0,75 ist, und wobei x höchstens ein Wert von 4 ist, bevorzugt höchstens ein Wert von 2,5 ist, ferner bevorzugt höchstens ein Wert von 1,5 ist.

2. Schmelzeleiter (1), insbesondere Schmelzeverteiler oder Schmelzemischer, für ein Extrusionswerkzeug (2) einer Extrusionsanlage (3),

    aufweisend einen Schmelzeleiterblock (4) mit einem Multikanalsystem (5), wobei das Multikanalsystem (5) sich dreidimensional erstreckend innerhalb des Schmelzeleiterblocks (4) angeordnet ist sowie mindestens einen Eintritt (6) und mindestens einen Austritt (7) für Polymerschmelze aufweist,

    wobei zwischen einem Eintritt (6) und einem mit dem Eintritt (6) fluidisch verbundenen Austritt (7) mehrere hintereinander angeordnete Verzweigungen (8) und mehrere Generationen (9a, 9b, 9c) Weiterverzweigungen (10) über mehrere Generationen (12a, 12b) aufgeteilter Schmelzekanäle (11a, 11b) ausgebildet sind, wobei m Schmelzekanäle (11a) a-ter Generation (12a) mit x-ten lokalen Querschnitten und n Schmelzekanäle (11b) b-ter Generation (12b) mit y-ten lokalen Querschnitten vorhanden sind,

wobei n>m, wenn b>a,

wobei die y-ten lokalen Querschnitte der Schmelzekanäle (11b) b-ter Generation (12b) kleiner sind als die x-ten lokalen Querschnitte der Schmelzekanäle (11a) a-ter Generation (12a),

und wobei

in designierter Fließrichtung der Polymerschmelze die Schmelzekanäle (11a) a-ter Generation (12a) dem Eintritt (6) und die Schmelzekanäle (11b) b-ter Generation (12b) dem Austritt (7) zu orientiert sind, sodass der Schmelzeleiter (1) für einen designierten Schmelzestrom der Polymerschmelze als Schmelzeverteiler dient,

oder

in designierter Fließrichtung der Polymerschmelze die Schmelzekanäle (11a) a-ter Generation (12a) dem Austritt (7) und die Schmelzekanäle (11b) b-ter Generation (12b) dem Eintritt (6) zu orientiert sind, sodass der Schmelzeleiter (1) für einen designierten Schmelzestrom der Polymerschmelze als Schmelzemischer dient,

**dadurch gekennzeichnet, dass**

ein Querschnitt ($A_2$) von wenigstens zwei aus einem gemeinsamen Schmelzekanal (11a) entspringenden und aufgeteilten Schmelzekanälen (11b) in Abhängigkeit von

$$A_2 = A_1 * (1/ n_K )^{2/y}$$

dimensioniert ist, wobei $A_1$ die erste Querschnittsfläche des gemeinsamen Schmelzekanals (11a) ist, wobei $A_2$ die zweite Querschnittsfläche eines der aufgeteilten Schmelzekanäle (11b) ist, wobei $n_K$ die Gesamtanzahl der aufgeteilten Schmelzekanäle (11b) ist, und wobei y mindestens ein Wert von 2, bevorzugt mindestens ein Wert von 2,5, ferner bevorzugt mindestens ein Wert von 2,85 ist, und wobei y höchstens ein Wert von 7, bevorzugt höchstens ein Wert von 5, ferner bevorzugt höchstens ein Wert von 3,35 ist.

3. Schmelzeleiter (1) nach Anspruch 1 oder 2, **dadurch gekennzeichnet, dass** die Schmelzekanäle (11) des Multikanalsystems (5) wenigstens abschnittsweise eine von einer kreisrunden Querschnittsform verschiedene lokale Querschnittsform aufweisen.

4. Schmelzeleiter (1) nach einem der vorstehenden Ansprüche, *dadurch gekennzeichnet, dass* der Schmelzeleiterblock (4) ein erstes Multikanalsystem (5a) und ein zweites Multikanalsystem (5b), insbesondere ein drittes, viertes oder fünftes Multikanalsystem aufweist.

5. Schmelzeleiter (1) nach Anspruch 4, *dadurch gekennzeichnet, dass* die Multikanalsysteme (5a, 5b) fluidisch voneinander getrennt ausgebildet sind, wobei jedes Multikanalsystem (5a, 5b) mindestens einen Eintritt (6a, 6b) für Polymerschmelze und mindestens einen Austritt (7a, 7b) aufweist.

6. Schmelzeleiter (1) nach Anspruch 4, *dadurch gekennzeichnet, dass* das erste Multikanalsystem (5a) eine Zusammenführung (13) mit wenigstens dem zweiten Multikanalsystem (5b) aufweist.

7. Schmelzeleiter (1) nach einem der vorstehenden Ansprüche, *dadurch gekennzeichnet, dass* das jeweilige Multikanalsystem (5, 5a, 5b) mit einer Vielzahl von Austritten (7a, 7b) ausgebildet ist, die dazu eingerichtet sind, eine Polymerschmelze zur Speisung einer Extrusionsdüse (14) in einen Sammelraum (15) zu führen.

8. Schmelzeleiter (1) nach einem der vorstehenden Ansprüche, *dadurch gekennzeichnet, dass* der Schmelzeleiter (1), insbesondere der Schmelzeleiterblock (4), ein räumlich zwischen den Schmelzekanälen (11) des jeweiligen Multikanalsystems (5, 5a, 5b) angeordnetes Hohlkammersystem (16) mit wenigstens einer Hohlkammer (17) aufweist.

9. Schmelzeleiter (1) nach einem der vorstehenden Ansprüche, *dadurch gekennzeichnet, dass* das Multikanalsystem (5, 5a, 5b) eine globale Maschinenrichtung (18) durch den Schmelzeleiterblock (4) aufweist, welche vom Eintritt (6, 6a) zum Austritt (7, 7a) einer designierten Schmelzeströmung der Polymerschmelze führt, wobei die Schmelzekanäle (11) bei Projektion einer lokalen Maschinenrichtung (19) auf die globale Maschinenrichtung (18) abschnittsweise entgegen der globalen Maschinenrichtung (18) verlaufen.

10. Schmelzeleiter (1) nach einem der vorstehenden Ansprüche, *dadurch gekennzeichnet, dass* der Schmelzeleiterblock (4) einen Medienkanal (20) aufweist, insbesondere für eine zirkulierende Fluidversorgung, vor allem zum Temperieren, und/oder für eine elektrische Leitung und/oder für eine Messeinrichtung.

11. Schmelzeleiter (1) nach einem der vorstehenden Ansprüche, *dadurch gekennzeichnet, dass* der Schmelzeleiterblock (4) ein statisches Funktionselement (21) zur zumindest mittelbaren Beeinflussung der designierten Polymerschmelze aufweist.

12. Schmelzeleiter (1) nach Anspruch 11, *dadurch gekennzeichnet, dass* das statische Funktionselement (21) ein statisches Mischelement ist.

13. Extrusionswerkzeug (2) für eine Extrusionsanlage (3) zum Erzeugen von Extrusionsprodukten, umfassend einen Schmelzeleiter (1) nach einem der Ansprüche 1 bis 12, wobei der Schmelzeleiter (1) dazu ausgebildet ist, mindestens eine designierte Polymerschmelze zu verteilen und/oder zu mischen.

14. Extrusionswerkzeug (2) nach Anspruch 13, *gekennzeichnet durch* einen Extrusionsdüsenaustritt (22) mit einer Breite (B) von mehr als 5.000 mm, bevorzugt von mehr als 6.000 mm oder mehr als 8.000 mm.

15. Extrusionsanlage (3) zum Erzeugen von Extrusionsprodukten, umfassend ein Extrusionswerkzeug (2) nach einem der vorstehenden Ansprüche 13 oder 14.

16. Verfahren zum Betreiben einer Extrusionsanlage (3) nach Anspruch 15, wobei der Extrusionsanlage (3) mindestens ein extrudierfähiges Polymer, insbesondere mindestens ein Kunststoff, zugeführt wird, das zu einer jeweiligen Polymerschmelze plastifiziert wird, wobei die jeweilige Polymerschmelze einem Schmelzeleiter (1) nach einem der Ansprüche 1 bis 12 zugeführt wird, der die jeweilige Polymerschmelze verteilt und/oder mischt.

**Claims**

1. A melt conveyor (1), particularly a melt distributor or melt mixer, for an extrusion tool (2) of an extrusion system (3),

   comprising a melt conveyor block (4) with a multi-channel system (5), wherein the multi-channel system (5) is arranged so as to extend three-dimensionally within the melt conveyor block (4) and has at least one inlet (6) and at least one outlet (7) for polymer melt, wherein a plurality of branches (8) arranged one after the other and a plurality of generations (9a, 9b, 9c) of further branches (10) are formed over multiple generations (12a, 12b) of distributed melt channels (11a, 11b) between an inlet (6) and an outlet (7) fluidly connected to the inlet (6), wherein m melt channels (11a) of a-th generation (12a) having x-th local cross sections and n melt channels (11b) of b-th generation (12b) having y-th local cross sections are provided,

wherein n>m, if b>a,

wherein the y-th local cross sections of the melt channels (11b) of the b-th generation (12b) are smaller than the x-th local cross sections of the melt channels (11a) of the a-th generation (12a), and wherein

the melt channels (11a) of a-th generation (12a) are oriented toward the inlet (6) and the melt channels (11b) of b-th generation (12b) are oriented toward the outlet (7) in the designated flow direction of the polymer melt so that the melt conveyor (1) serves as a melt distributor for a designated melt flow of the polymer melt,

or

the melt channels (11a) of a-th generation (12a) are oriented toward the outlet (7) and the melt channels (11b) of b-th generation (12b) are oriented toward the inlet (6) in the designated flow direction of the polymer melt so that the melt conveyor (1) serves as a melt mixer for a designated melt flow of the polymer melt,

**characterized in that**

a circumference ($U_2$) and a cross-sectional area ($A_2$) of at least two melt channels (11b) originating and split from a common melt channel (11a) are dimensioned subject to

$$\frac{U_1^x}{A_1^{x+1}} = \frac{1}{n_K} * \frac{U_2^x}{A_2^{x+1}}$$

wherein $U_1$ is the first circumference and $A_1$ is the first cross-sectional area of the common melt channel (11a), wherein $U_2$ is the second circumference and $A_2$ is the second cross-sectional area of one of the split melt channels (11b), wherein $n_K$ is the total number of split melt channels (11b), and wherein x is greater than or equal to -0.5, preferably is at least a value of 0.5, preferentially at least a value of 0.75, and wherein x is at most a value of 4, preferentially at most a value of 2.5, further preferentially at the most a value of 1.5

2. A melt conveyor (1), particularly a melt distributor or melt mixer, for an extrusion tool (2) of an extrusion system (3),

comprising a melt conveyor block (4) with a multi-channel system (5), wherein the multi-channel system (5) is arranged so as to extend three-dimensionally within the melt conveyor block (4) and has at least one inlet (6) and at least one outlet (7) for polymer melt,

wherein a plurality of branches (8) arranged one after the other and a plurality of generations (9a, 9b, 9c) of further branches (10) are formed over multiple generations (12a, 12b) of distributed melt channels (11a, 11b) between an inlet (6) and an outlet (7) fluidly connected to the inlet (6), wherein m melt channels (11a) of a-th generation (12a) having x-th local cross sections and n melt channels (11b) of b-th generation (12b) having y-th local cross sections are provided,

wherein n>m, if b>a,

wherein the y-th local cross sections of the melt channels (11b) of the b-th generation (12b) are smaller than the x-th local cross sections of the melt channels (11a) of the a-th generation (12a), and wherein

the melt channels (11a) of a-th generation (12a) are oriented toward the inlet (6) and the melt channels (11b) of b-th generation (12b) are oriented toward the outlet (7) in the designated flow direction of the polymer melt so that the melt conveyor (1) serves as a melt distributor for a designated melt flow of the polymer melt,

or

the melt channels (11a) of a-th generation (12a) are oriented toward the outlet (7) and the melt channels (11b) of b-th generation (12b) are oriented toward the inlet (6) in the designated flow direction of the polymer melt so that the melt conveyor (1) serves as a melt mixer for a designated melt flow of the polymer melt,

**characterized in that**

a cross section ($A_2$) of at least two melt channels (11b) originating and split from a common melt channel (11a) are dimensioned subject to

$$A_2 = A_1 * (1/ n_K)^{2/y}$$

wherein $A_1$ is the first cross-sectional area of the common melt channel (11a), wherein $A_2$ is the second cross-sectional area of one of the split melt channels (11b), wherein $n_K$ is the total number of split melt channels (11b), and wherein y is at least a value of 2, preferentially at least a value of 2.5, further preferentially at least a value of 2.85, and wherein y is at most a value of 7, preferentially at most a value of 5, further preferentially at the most a value of 3.35.

3. The melt conveyor (1) according to claim 1 or 2, **characterized in that** at least sections of the melt channels (11) of the multi-channel system (5) have a local cross-sectional shape differing from a circular cross-sectional shape.

4. The melt conveyor (1) according to one of the preceding claims, *characterized in that* the melt conveyor block (4) comprises a first multi-channel system (5a) and a second multi-channel system (5b), in particular a third, fourth or fifth multi-channel system.

5. The melt conveyor (1) according to claim 4, *characterized in that* the multi-channel systems (5a, 5b) are formed fluidly separated from one another, wherein each multi-channel system (5a, 5b) has at least one inlet (6a, 6b) for polymer melt and at least one outlet (7a, 7b).

6. The melt conveyor (1) according to claim 4, *characterized in that* the first multi-channel system (5a) comprises a junction (13) with at least the second multi-channel system (5b).

7. The melt conveyor (1) according to one of the preceding claims, *characterized in that* the respective multi-channel system (5, 5a, 5b) is formed with a plurality of outlets (7a, 7b) configured to conduct a polymer melt into a collection chamber (15) for supplying an extrusion nozzle (14).

8. The melt conveyor (1) according to one of the preceding claims, *characterized in that* the melt conveyor (1), in particular the melt conveyor block (4), comprises a hollow chamber system (16) having at least one hollow chamber (17) spatially arranged between the melt channels (11) of the respective multi-channel system (5, 5a, 5b).

9. The melt conveyor (1) according to one of the preceding claims, *characterized in that* the multi-channel system (5, 5a, 5b) has a global machine direction (18) through the melt conveyor block (4) running from the inlet (6, 6a) to the outlet (7, 7a) of a designated melt flow of the polymer melt, wherein sections of the melt channels (11) run counter to the global machine direction (18) when a local machine direction (19) is projected onto the global machine direction (18).

10. The melt conveyor (1) according to one of the preceding claims, *characterized in that* the melt conveyor block (4) has a media duct (20), particularly for a circulating fluid supply, primarily for temperature control, and/or for an electrical line and/or for a measuring device.

11. The melt conveyor (1) according to one of the preceding claims, *characterized in that* the melt conveyor block (4) comprises a static functional element (21) for at least indirectly influencing the designated polymer melt.

12. The melt conveyor (1) according to claim 11, *characterized in that* the static functional element (21) is a static mixing element.

13. An extrusion tool (2) for an extrusion system (3) for producing extruded products, comprising a melt conveyor (1) according to one of claims 1 to 12, wherein the melt conveyor (1) is designed to distribute and/or mix at least one designated polymer melt.

14. The extrusion tool (2) according to claim 13, *characterized by an* extrusion nozzle outlet (22) having a width (B) greater than 5000 mm, preferentially greater than 6000 mm or greater than 8000 mm.

15. An extrusion system (3) for producing extruded products comprising an extrusion tool (2) according to one of preceding claims 13 or 14.

16. A method for operating an extrusion system (3) according to claim 15, wherein the extrusion system (3) is fed at least one extrudable polymer, in particular at least one plastic, which is plasticized into a respective polymer melt, wherein the respective polymer melt is fed to a melt conveyor (1) according to one of claims 1 to 12 which distributes and/or mixes the respective polymer melt.

## Revendications

1. Convoyeur de matière fondue (1), en particulier distributeur de matière fondue ou mélangeur de matière fondue, pour un outil d'extrusion (2) d'une installation d'extrusion (3), comprenant un bloc convoyeur de matière fondue (4) muni d'un système multicanal (5), dans lequel

   le système multicanal (5) est disposé à l'intérieur du bloc convoyeur de matière fondue (4) de manière à s'étendre en trois dimensions et présente au moins une entrée (6) et au moins une sortie (7) pour matière fondue de polymère,
   plusieurs ramifications (8) disposées les unes derrière les autres et plusieurs générations (9a, 9b, 9c) de ramifications supplémentaires (10) sur plusieurs générations (12, 12b) de canaux de matière fondue (11a, 11b) divisés sont formées entre une entrée (6) et une sortie (7) reliée fluidiquement à l'entrée (6),
   il est prévu m canaux de matière fondue (11a) de la $a^{ième}$ génération (12a) avec des $x^{ièmes}$ sections transversales locales et n canaux de matière fondue (11b) de la $b^{ième}$ génération (12b) avec des $y^{ièmes}$ sections transversales locales, $n > m$, si $b > a$,
   les $y^{ièmes}$ sections transversales locales des canaux de matière fondue (11b) de la $b^{ième}$ génération (12b) sont plus petites que les $x^{ièmes}$ sections transversales locales des canaux de matière fondue (11a) de la a^{ième} génération (12a), et

dans le sens d'écoulement désigné de la matière fondue de polymère, les canaux de matière fondue (11a) de la a^{ième} génération (12a) sont orientés vers l'entrée (6), et les canaux de matière fondue (11b) de la b^{ième} génération (12b) sont orientés vers la sortie (7), de sorte que le convoyeur de matière fondue (1) sert de distributeur de matière fondue pour un flux désigné de la matière fondue de polymère, ou

dans le sens d'écoulement désigné de la matière fondue de polymère, les canaux de matière fondue (11a) de la a^{ième} génération (12a) sont orientés vers la sortie (7), et les canaux de matière fondue (11b) de la b^{ième} génération (12b) sont orientés vers l'entrée (6), de sorte que le convoyeur de matière fondue (1) sert de mélangeur de matière fondue pour un flux désigné de la matière fondue de polymère,

**caractérisé en ce qu'**un périmètre (U_2) et une surface de section transversale (A_2) d'au moins deux canaux de matière fondue (11b), issus d'un canal de matière fondue commun (11a) et divisés, sont dimensionnés en fonction de

$$\frac{U_1^x}{A_1^{x+1}} = \frac{1}{n_K} * \frac{U_2^x}{A_2^{x+1}}$$

où U_1 est le premier périmètre et A_1 est la première surface de section transversale du canal de matière fondue commun (11a), U_2 est le deuxième périmètre et A_2 est la deuxième surface de section transversale de l'un des canaux de matière fondue divisés (11b), n_K est le nombre total de canaux de matière fondue divisés (11b), et x est supérieur ou égal à -0,5, de préférence est au moins une valeur de 0,5, de préférence au moins une valeur de 0,75, et x est au plus une valeur de 4, de préférence au plus une valeur de 2,5, de préférence encore au plus une valeur de 1,5.

2. Convoyeur de matière fondue (1), en particulier distributeur de matière fondue ou mélangeur de matière fondue, pour un outil d'extrusion (2) d'une installation d'extrusion (3), comprenant un bloc convoyeur de matière fondue (4) muni d'un système multicanal (5), dans lequel

le système multicanal (5) est disposé à l'intérieur du bloc convoyeur de matière fondue (4) de manière à s'étendre en trois dimensions et présente au moins une entrée (6) et au moins une sortie (7) pour matière fondue de polymère,

dans lequel

plusieurs ramifications (8) disposées les unes derrière les autres et plusieurs générations (9a, 9b, 9c) de ramifications supplémentaires (10) sur plusieurs générations (12, 12b) de canaux de matière fondue (11a, 11b) divisés sont formées entre une entrée (6) et une sortie (7) reliée fluidiquement à l'entrée (6),

il est prévu m canaux de matière fondue (11a) de la a^{ième} génération (12a) avec des x^{ièmes} sections transversales locales et n canaux de matière fondue (11b) de la b^{ième} génération (12b) avec des y^{ièmes} sections transversales locales, n > m, si b > a,

les y^{ièmes} sections transversales locales des canaux de matière fondue (11b) de la b^{ième} génération (12b) sont plus petites que les x^{ièmes} sections transversales locales des canaux de matière fondue (11a) de la a^{ième} génération (12a), et

dans le sens d'écoulement désigné de la matière fondue de polymère, les canaux de matière fondue (11a) de la a^{ième} génération (12a) sont orientés vers l'entrée (6), et les canaux de matière fondue (11b) de la b^{ième} génération (12b) sont orientés vers la sortie (7), de sorte que le convoyeur de matière fondue (1) sert de distributeur de matière fondue pour un flux désigné de la matière fondue de polymère, ou

dans le sens d'écoulement désigné de la matière fondue de polymère, les canaux de matière fondue (11a) de a^{ième} génération (12a) sont orientés vers la sortie (7), et les canaux de matière fondue (11b) de la b^{ième} génération (12b) sont orientés vers l'entrée (6), de sorte que le convoyeur de matière fondue (1) sert de mélangeur de matière fondue pour un flux désigné de la matière fondue de polymère,

**caractérisé en ce qu'**une section transversale (A_2) d'au moins deux canaux de matière fondue (11b), issus d'un canal de matière fondue commun (11a) et divisés, est dimensionnée en fonction de

$$A_2 = A_1 * (1/ n_K)^{2/y}$$

où A_1 est la première surface de section transversale du canal de matière fondue commun (11a), A_2 est la deuxième surface de section transversale de l'un des canaux de matière fondue divisés (11b), n_K est le nombre total des canaux de matière fondue divisés (11b), et y est au moins une valeur de 2, de préférence au moins une valeur de 2,5, de préférence encore au moins une valeur de 2,85, et y est au plus une valeur de 7, de préférence au plus une valeur de 5, de préférence encore au plus une valeur de 3,35.

**3.** Convoyeur de matière fondue (1) selon la revendication 1 ou 2,
**caractérisé en ce que** les canaux de matière fondue (11) du système multicanal (5) présentent au moins localement une forme de section transversale locale différente d'une forme de section transversale circulaire.

**4.** Convoyeur de matière fondue (1) selon l'une des revendications précédentes,
**caractérisé en ce que** le bloc convoyeur de matière fondue (4) comprend un premier système multicanal (5a) et un deuxième système multicanal (5b), en particulier un troisième, un quatrième ou un cinquième système multicanal.

**5.** Convoyeur de matière fondue (1) selon la revendication 4,
**caractérisé en ce que** les systèmes multicanaux (5a, 5b) sont réalisés de manière séparée fluidiquement les uns des autres, chaque système multicanal (5a, 5b) présentant au moins une entrée (6a, 6b) pour matière fondue de polymère et au moins une sortie (7a, 7b).

**6.** Convoyeur de matière fondue (1) selon la revendication 4,
**caractérisé en ce que** le premier système multicanal (5a) présente une jonction (13) avec au moins le deuxième système multicanal (5b).

**7.** Convoyeur de matière fondue (1) selon l'une des revendications précédentes,
**caractérisé en ce que** le système multicanal respectif (5, 5a, 5b) est réalisé avec une pluralité de sorties (7a, 7b) conçues pour conduire une matière fondue de polymère vers un espace collecteur (15) pour alimenter une filière d'extrusion (14).

**8.** Convoyeur de matière fondue (1) selon l'une des revendications précédentes,
**caractérisé en ce que** le convoyeur de matière fondue (1), en particulier le bloc convoyeur de matière fondue (4), comprend un système de chambres creuses (16) disposé spatialement entre les canaux de matière fondue (11) du système multicanal respectif (5, 5a, 5b) et présentant au moins une chambre creuse (17).

**9.** Convoyeur de matière fondue (1) selon l'une des revendications précédentes,
**caractérisé en ce que** le système multicanal (5, 5a, 5b) présente un sens machine global (18) à travers le bloc convoyeur de matière fondue (4), qui mène de l'entrée (6, 6a) à la sortie (7, 7a) d'un flux désigné de la matière fondue de polymère, et, dans une projection d'un sens machine local (19) sur le sens machine global (18), les canaux de matière fondue (11) s'étendent localement en sens opposé au sens machine global (18).

**10.** Convoyeur de matière fondue (1) selon l'une des revendications précédentes,
**caractérisé en ce que** le bloc convoyeur de matière fondue (4) comprend un canal auxiliaire (20), en particulier pour une alimentation en fluide circulant, destinée surtout à la thermorégulation, et/ou pour une ligne électrique et/ou pour un dispositif de mesure.

**11.** Convoyeur de matière fondue (1) selon l'une des revendications précédentes,
**caractérisé en ce que** le bloc convoyeur de matière fondue (4) comprend un élément fonctionnel statique (21) pour influencer au moins indirectement la matière fondue de polymère désignée.

**12.** Convoyeur de matière fondue (1) selon la revendication 11,
**caractérisé en ce que** l'élément fonctionnel statique (21) est un élément de mélange statique.

**13.** Outil d'extrusion (2) pour une installation d'extrusion (3) pour la production de produits d'extrusion, comprenant un convoyeur de matière fondue (1) selon l'une des revendications 1 à 12, le convoyeur de matière fondue (1) étant conçu pour distribuer et/ou mélanger au moins une matière fondue de polymère désignée.

**14.** Outil d'extrusion (2) selon la revendication 13,
**caractérisé par** une sortie de filière d'extrusion (22) ayant une largeur (B) supérieure à 5 000 mm, de préférence supérieure à 6 000 mm ou supérieure à 8 000 mm.

**15.** Installation d'extrusion (3) pour la production de produits extrudés, comprenant un outil d'extrusion (2) selon l'une des revendications précédentes 13 ou 14.

**16.** Procédé d'exploitation d'une installation d'extrusion (3) selon la revendication 15,
dans lequel l'installation d'extrusion (3) est alimentée en au moins un polymère extrudable, en particulier en au moins une matière plastique, qui est plastifié(e) pour donner une matière fondue de polymère respective, la matière fondue de polymère respective étant amenée vers un convoyeur de matière fondue (1) selon l'une des revendications 1 à 12, qui distribue et/ou mélange la matière fondue de polymère respective.

Fig. 1

Fig. 2A

Fig. 2B

Fig. 3

Fig. 4

Fig. 5

Fig. 6A

Fig. 6B

Fig. 7A

Fig. 7B

Fig. 7C

Fig. 7D

Fig. 8

Fig. 9

Fig. 10

Fig. 11

Fig. 12

Fig. 13A

Fig. 13B

Fig. 13C

Fig. 13D

Fig. 14A

Fig. 14B

Fig. 14C

Fig. 15A

Fig. 15B

Fig. 16A

Fig. 16B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2114465 A
- EP 0197181 B1
- DE 19703492 A1
- US 4990293 A
- US 6579555 B1
- US 2004126454 A1
- US 4017240 A
- US 5783129 A